# EUROPEAN PATENT APPLICATION

(11) **EP 1 424 549 A1**
(43) Date of publication of application: **02.06.2004**
(21) Application number: 02755870.9
(22) Date of filing: 07.08.2002
(51) Int. Cl.: G01N 21/27

(54) **SURFACE PLASMON RESONANCE SENSOR CHIP, AND SAMPLE ANALYSIS METHOD AND ANALYSIS APPARATUS USING THE SAME**

(30) Priority: 07.08.2001 JP 2001238883; 07.08.2001 JP 2001238884
(71) Applicant: Mitsubishi Chemical Corporation, Tokyo 108-0014 (JP)
(72) Inventor: SORIN, Takaaki, c/o DIA RESEARCH MARTECH INC., Chiyoda-ku, Tokyo 102-0083 (JP); TAKAYAMA, Hidehito, Yokohama-shi, Kanagawa 227-8502 (JP); NAGAIKE, Kazuhiro, Yokohama-shi, Kanagawa 227-8502 (JP)
(74) Representative: Pratt, Richard Wilson
(86) International application number: PCT/JP2002/008091
(87) International publication number: WO 2003/014711

(57) **Abstract**

The present invention relates to a structure of a diffraction-grating type sensor chip (surface plasmon resonance sensor chip) for analyzing a sample using surface plasmon resonance (SPR), and also relates to a method of and an apparatus for analyzing a sample using the sensor chip. A surface plasmon resonance sensor chip (1) according to the present invention comprises: a metal layer (3) along whose surface a surface plasmon wave can be induced by light irradiation; and a plurality of diffraction grating surfaces (5a-5i) which are disposed in the vicinity of said metal layer (3) and on each of which a diffraction grating with a uniform groove orientation and a uniform groove pitch is formed so as to generate an evanescent wave upon light irradiation; wherein the groove pitch and the groove orientation of each said diffraction grating surface (5a-5i, 251-254), in addition to the angle that each said diffraction grating surface (5a-5i, 251-254) forms with a predetermined reference plane (S0), are adjusted in such a manner that when said diffraction grating surfaces (5a-5i, 251-254) are projected onto a predetermined projection plane, the groove orientations in the projection plane are identical while the groove pitches in the projection plane are different among said diffraction grating surfaces (5a-5i, 251-254). With this arrangement, even when irradiating with light in parallel, the intensity of the light reflected from the diffraction grating surface (5a-5i, 251-254) has a certain distribution. It is therefore possible to calculate a resonance angle for the whole sensor surface in real-time, based on both the intensity of the reflection light from the diffraction grating surface (5a-5i) and the substantial incident angle to the diffraction grating surface (5a-5i, 251-254). Besides, when carrying out analysis based on the variation between the reflection-light intensity, it is possible to substantially enlarge a measurement range.

## Description

### Technical Field

The present invention relates to a structure of a diffraction-grating type sensor chip (surface plasmon resonance sensor chip) for analyzing a sample using surface plasmon resonance (SPR), and specifically, to a structure of a sensor chip that is suitable for use with small-sized clinical apparatus or an HPLC detector, and also relates to a method of and an apparatus for analyzing a sample using the sensor chip.

### Background Art

Currently, in areas such as biochemistry or medical inspection, an analysis method using surface plasmon resonance (SPR) is one of the known methods of quantitatively and/or qualitatively analyzing a sample fluid containing target species such as chemical species, biochemical species, or biological species. The surface plasmon resonance is the phenomenon that is excited by the resonance of a surface plasmon wave, which is induced along the metal surface by light incident on a metal layer, and an evanescent wave, which is generated by the incident light. The surface plasmon resonance is dependent on the wavelength and the angle of the incident light: characteristically, when surface plasmon resonance is excited, the optical component having a specific incident angle or a specific wavelength transfers its optical energy to the surface plasmon wave, and the reflected optical component that has the corresponding incident angle or wavelength therefore decreases markedly.

In order to induce the surface plasmon resonance, it is necessary to use a metal for making a specific surface plasmon wave and an optical structure for inducing an evanescent wave that can be resonant with the surface plasmon wave. As the examples of the optical structure for inducing an evanescent wave, two kinds of structures are currently known: one is an optical structure utilizing total reflection with a prism, and the other is an optical structure utilizing a diffraction grating. An element that combines the metal with one of these optical structures is commonly called a surface plasmon resonance sensor chip (hereinafter called simply a sensor chip).

A sensor chip is typically constructed by laminating a substrate with a metal layer and by applying on the metal layer a binding substance (a ligand, a molecular-recognition element), which can bind specifically to a specific target species (the subject of analysis) through interaction, to thereby immobilize it. By making a sample in contact with the surface of the metal layer, on which the binding substance is immobilized, the target species in the sample is captured by the binding substance. The surface plasmon resonance is also dependent on the refractive index of a medium present on the surface of the metal layer: when the refractive index of the medium varies, the resonance angle varies accordingly if the wavelength is constant, while the resonance wavelength varies accordingly if the incident angle is constant. It is therefore possible to analyze the refractive index of the medium present on the surface of the metal layer by determining the resonance angle or the resonance wavelength based on the intensity of the reflected light. In this case, the variation in the refractive index of the medium present on the surface of the metal layer is correlated with the amount of substance of the target species captured by the binding substance, namely, the variation in the concentration of the target species relative to the sample. Consequently, by determining the resonance angle or the resonance wavelength at which surface plasmon resonance occurs, it is possible to analyze the concentration of the target species in the sample or the like.

Of these two sensor chips, a prism type sensor chip is generally made up of a sensor-chip body (a transparent substrate laminated with a metal layer) and a prism. A sensor chip is basically thrown away after a single use. However, if not only the sensor-chip body but also the prism, which is expensive, are made disposable, the cost of measurement becomes very high. For this reason, this type of sensor chip is commonly made in such a manner that the sensor-chip body and the prism can be separated. When the sensor chip is used, the prism is brought into close contact with the sensor-chip body while light is entered into the prism and the reflected light is detected, thereby a measurement being carried out.

On the other hand, a diffraction-grating type sensor chip is constructed by laminating a transparent substrate, whose surface has an uneven form having projections and depressions (a grating), with a metal layer. Since the metal layer is layered over the uneven form, the surface of the metal layer also takes an uneven form, which uneven form on the surface of the metal layer functions as a diffraction grating. Using a high-order diffraction light, an evanescent wave is generated along the conductor surface. When the wave number and the angular frequency of the surface progressive wave agree with those of the surface plasmon wave of the metal surface, a resonance occurs and causes a decrease in the reflectance. It is thereby possible to detect the properties of the metal surface or the properties of substances in contact with the metal surface (refer to Japanese Patent Number 1903135, Japanese Patent Number 2502222, and others).

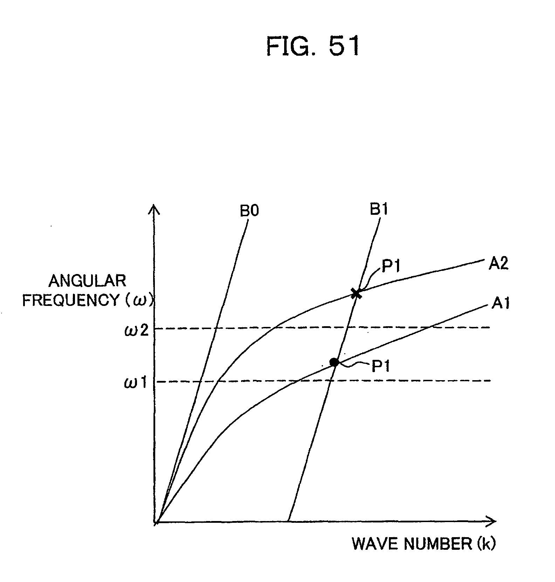

FIG. 51 is a dispersion relationship diagram showing the relations between the angular frequencies ω and the wave numbers k of the surface plasmon wave, the evanescent wave and the irradiated light in a diffraction-grating type sensor chip. In the figure, curved lines A1, A2 both indicate the relation between the angular frequency ω and the wave number k of the surface plasmon wave, curved line A1 indicating the case in which the refractive index of the medium is higher than that in the case indicated by curved line A2. Straight line B0 indicates the relation between the angular frequency ω and the wave number k of the irradiated light, while straight line B1 indicates the relation between the angular frequency ω and the wave number k of the evanescent wave of a specific order corresponding to the irradiated light. In FIG. 51, each of intersection points P11, P12 of curved lines A1, A2 and straight line B1 indicates a resonance point at which surface plasmon resonance will occur, and the wavelength and the incident angle corresponding to the resonance point are equal to the resonance wavelength and the resonance angle. At the resonance point, the intensity of the reflected light takes its minimum value.

Since a sensor chip of this type dose not use any expensive element such as a prism, which is used for the prism type, it is so inexpensive that it can be made disposable. Further, since a sensor chip of this type dose not need the task of making the prism in close contact with the sensor-chip body, which task is necessary for the prism type, it has another advantage in its high degree of reproducibility of measurement values without being affected by defects such as variations in the degree of contact.

Besides, since the prism type sensor chip is constructed such that the incident light and the reflected light pass through the prism, it has the limitations on the possible diameter of a light beam and the area that can be irradiated with a light beam. On the contrary, since the diffraction-grating type sensor chip does not have such limitations, it is possible to use a light beam of large diameter, or is also to irradiate any desired position with a light beam. The diffraction-grating type sensor chip therefore has the advantages over the prism type in that it is possible to inspect a large area at a time, and also in that it is possible to inspect any desired position on the sensor chip. With such advantages as have been described, expectations are now rising with respect to the diffraction-grating type sensor chip.

The common methods of analyzing a sample using a diffraction-grating type sensor chip are: the analysis method in which the incident angle is held constant while the wavelength is varied (or a multicomponent light is entered) and the resonance wavelength is thereby detected; and the analysis method in which the incident wavelength is held constant while the angle is varied and the resonance angle is thereby detected.

Of these methods, the former is commonly carried out by irradiating with a white light (multicomponent light) at a constant incident angle and by measuring the reflectance of the reflected light for each wavelength to thereby measure the peak of the absorption by surface plasmon resonance. Because of the limitations of the measurement range, the reflectance is usually measured for the reflected light within a specific range (angular frequency ω1-ω2), as shown in FIG. 51.

However, the relation between the wave number and the frequency of the surface plasmon wave is determined based on the dielectric constant (i.e. refractive index) of each the metal layer and the sample (dielectric substance). Hence there is a possibility that the resonance point goes out of the measurement range depending on the refractive index value of the sample, as is the case of resonance point P12 shown in FIG. 51. Especially in the case where different binding substances are immobilized on plural spots so as to detect a sample having a wide distribution of dielectric constant (refractive index), or in the case where some new substance (for example, pigmentation deposits caused by enzyme reaction) is generated in stages during analysis and causes the change in the dielectric constant (refractive index) of each of plural spot, there is a possibility that if a measurement is carried out for these spots at a time, a resonance phenomenon is detectable in some spots while undetectable in the other spots. In such cases, in order to measure a resonance phenomenon for every spot, it becomes necessary to make some readjustments to the optical system, for example, to modify the incident angle.

It is also a possible idea of broadening the measurement range to widening a wavelength band so that all the resonance points come within the measurement range. However, if the wavelength band is too wide, although a broad range of wavelength can be detected, there arises a decline in resolving power to become another problem.

Meanwhile, as the detection method of the resonance angle under the condition that the incident wavelength is held constant, the following four methods are generally known.

The first method is a method in which the incident angle of the incident light is varied (this process is called angle scan) while the detection angle of a detector for detecting the reflected light is varied in synchronism with the incident angle to thereby detect the resonance angle.

The second method is a method in which the angle scan of the incident light is carried out, as in the case of the first method angle, while the reflected light is detected using a fixed type detector (an array type detector such as a CCD) to thereby detect the resonance angle.

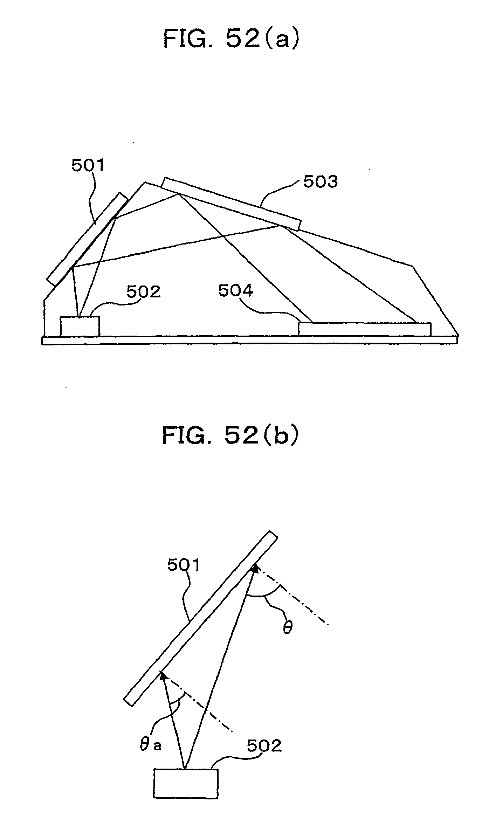

The third method is a method in which a wedge-shaped light is used as the incident light while the detection angle of the detector is varied within the limits of the reflection angle of the reflected light to thereby detect the resonance angle. More specifically, as illustrated by FIG. 52(a), light of a single wavelength is emitted from a light source 502 with a predetermined angle of divergence, and is entered into the surface of the metal layer of a sensor chip 501 at a predetermined angle but perpendicularly. Then the reflected light is relayed by a reflecting mirror 503 and detected by a light detector (photo diode array) 504. In this case, as illustrated by FIG. 52(b), since the incident angle of the entered light varies according to the incident position on the sensor chip 501, it is possible to obtain the same results as are obtained in the case where the single-wavelength light is used while the incident angle is changed continuously from angle θa to angle θb.

The fourth method is a method in which a wedge-shaped light is used as the incident light, as in the case of the third method, while the reflected light is detected by an angle-fixed type detector to thereby detect the resonance angle.

In addition to the above methods, there is another known method in which analysis is carried out under the condition that both the incident angle and the incident wavelength are constant. The distribution of the intensity of the reflected light over the incident angle or the incident wavelength changes according to the amount of target species captured by the binding substance, namely, the concentration of target species in the sample. In this method (the fifth method), the intensity of the reflected light is measured under the condition that both the incident angle and the incident wavelength are constant, and the analysis of the concentration and others is carried out based on the variation of the intensity under the condition (variation compared with the case where the sample is not in contact).

However, the above analysis methods each have the following problems. Regarding the first and second methods, it is required to use a driving mechanism for changing the angle of the light axis of the light source in order to carry out the angle scan of the incident light, resulting in a cost increase. Since the requirement of a driving mechanism also results in the upsizing of the apparatus, it is difficult to apply these methods to such purposes as home use or PoC (Point of Care). There is another problem that it is difficult to achieve high accuracy because fine angle adjustment is required in the order of a millidegree. Besides, since it takes a considerable time to carry out the angle scan, these methods are difficult to follow a quick reaction and therefore unsuitable for real-time measurement. Moreover, the measurement range is also limited because of the limited angle of the light entry, as in the case of wavelength-variation type.

Regarding the third and fourth methods, it is unnecessary to carry out the angle scan of the incident light. However, it is required to point the apex of the wedge shape of the incident light at the point of measurement so that the light is entered at the point of measurement on the sensor chip surface from various angles. These methods are therefore unsuitable for measurement of a large area or multipoint simultaneous measurement, in which plural points of measurement are measured simultaneously at a time. Consequently, it is difficult to cope with the increasing packing density of chips such as a protein chip or a DNA chip and to make full use of the above-described advantages of the diffraction-grating type sensor chip. Besides, as in the case of the analysis method in which the measurement is carried out with the constant incident angle, or also in the cases of the first and second methods, there still remain the problem that the measurement range is limited and the problem that the optical system is so complicated the apparatus as such becomes upsized. Moreover, there is another problem that slight deformation of the reflecting mirror 503 may cause displacements of the light path and have an impact on accuracy in measurement.

Regarding the fifth method, as in the cases of the third and fourth methods, analysis with high accuracy is achieved without the need for carrying out the angle scan of the incident light and without having to use a driving mechanism. However, the method has a narrow measurement range (a range within which measurement is allowable) due to the characteristics of the spectrum shape of the surface plasmon wave, and therefore is not available for a relatively wide range of concentration. Consequently, there arises a problem that when the concentration goes outside the measurement range, it is required to readjust the incident angle and to measure variation in the intensity of the reflected light again.

The present invention has been made in view of such problems as mentioned above. The first object of the invention is to provide a surface plasmon resonance sensor chip that makes it possible to carry out both real-time measurement and large-area simultaneous measurement at a time using a optical system having simple constitution, and to provide a sample analysis method and a sample analysis apparatus using the same.

The second object of the invention is to provide a surface plasmon resonance sensor chip that has a broadened measurement range and makes it possible to handle a sample having a wide range of concentration when analysis is carried out based on the variation of the reflected-light intensity, and to provide a sample analysis method and a sample analysis apparatus using the same.

The third object of the invention is to provide a surface plasmon resonance sensor chip that makes it possible to analyze a sample with making full use of a limited measurement range without the need for readjusting the optical system even when the dielectric constant or the refractive index has a wide distribution, and to provide a sample analysis method and a sample analysis apparatus using the same.

The fourth object of the invention is to provide a surface plasmon resonance sensor chip that is capable of analyzing a sample using light with a single wavelength under a simple optical system, and to provide a sample analysis method and a sample analysis apparatus using the same.

### Disclosure of the Invention:

With the foregoing problems in view, the inventor has the present invention paying attentions to the following matter. A resonance angle at which surface plasmon resonance occurs depends on a groove pitch of a diffraction grating viewed from the direction of incident light. Thus, if the groove pitch, viewed from the direction of incident light, is distributed (varied) in the diffraction grating, it is possible to accomplish all the first through fourth objects of the present invention.

A surface plasmon resonance sensor chip of the present invention comprises: a metal layer along whose surface a surface plasmon wave can be induced by light irradiation; and diffraction grating surfaces which are disposed in the vicinity of the metal layer and on each of which a diffraction grating with a uniform groove orientation and a uniform groove pitch is formed so as to generate an evanescent wave upon light irradiation. The groove pitch and the groove orientation of each of the diffraction grating surfaces, in addition to the angle that each of the diffraction grating surfaces forms with a predetermined reference plane, are adjusted in such a manner that when the diffraction grating surfaces are projected onto a predetermined projection plane, the groove orientations in the projection plane are identical while the groove pitches in the projection plane are different among the diffraction grating surfaces.

As a result, the diffraction gratings projected on the projection plane have distributed groove pitches, and depending on this distribution, the intensity of light reflected from the surface plasmon resonance sensor chip is also distributed, thus enabling calculation of resonance angles in real time.

The followings are two of the preferred embodiments of such a surface plasmon resonance sensor chip.

In the first embodiment, a first surface plasmon resonance sensor chip (the first sensor chip) according to the present invention comprises: a metal layer along whose surface a surface plasmon wave can be induced by light irradiation; and diffraction grating surfaces which are disposed in the vicinity of the metal layer and on each of which a diffraction grating with a uniform groove orientation and a uniform groove pitch is formed so as to generate an evanescent wave upon light irradiation. Each of the diffraction grating surfaces is disposed so as to be perpendicular to a specific plane, which is perpendicular to a predetermined reference plane, and as to form a predetermined inclination angle with the reference plane, and on each of the diffraction grating surface, the diffraction grating is formed in such a manner that the groove orientation is perpendicular to the specific plane.

With this construction, if a light beam (parallel light) is emitted, from a predetermined direction, in parallel to the specific plane, incident angles of the irradiated light with respect to the diffraction grating surfaces are distributed depending on inclination angles formed by the diffraction gratings with the reference plane. In other words, when viewed from the incident direction of the incident light, groove pitches of the diffraction gratings are distributed, and depending on this distribution, the intensity of light reflected from the surface plasmon resonance sensor chip is also varied. As a result, it is possible to calculate a resonance angle in real time, based on the intensity of the light reflected from each diffraction grating surface and a substantial incident angle of the incident light onto the diffraction grating surface. That is, using the thus-constructed sensor chip, it is possible to realize effects similar to those that are achieved when more than one light beam is emitted at different angles at the same time, with no necessity to perform angle scanning or to eradiate a wedge-formed light beam.

As one preferred feature, if two or more diffraction grating surfaces are disposed along a line parallel to the specific plane, they are arranged in such a manner that when viewed from a direction parallel to the specific plane, the surfaces are positioned in decreasing order of the inclination angle that each of the diffraction grating surfaces forms with the reference plane. As a result, crossing of the light reflected from the diffraction grating surfaces is prevented, thus facilitating analysis of the intensity of light reflected from the diffraction grating surfaces.

As another preferred feature, the diffraction grating surfaces are disposed continuously so as to form a convex shape whose light-irradiated side bulges out. With this construction, it is possible to prevent crossing of the light reflected from different positions on each diffraction grating surface, thus facilitating analysis of the intensity of light reflected from the diffraction grating surfaces.

As still another preferred feature, each of the diffraction grating surfaces has a minimum width, equipped with only one groove alone, and the aggregate of the diffraction grating surfaces forms a curved surface in an arc shape whose light-irradiated side bulges out.

As a further preferred feature, the surface plasmon resonance sensor chip is provided with more than one diffraction area where diffraction grating surfaces are concentratedly disposed, and in each of the diffraction areas there are provided diffraction grating surfaces at different inclination angles. With this preferred feature, it is possible to detect resonance angles of the separate diffraction grating areas at the same time, by simply emitting a light beam from a predetermined direction in parallel to the specific plane. Therefore, with use of binding substances immobilized according to the diffraction grating areas, simultaneous measurement at multiple positions is easily available.

On the above-described first sensor chip, each of the diffraction grating surfaces is disposed along a sensor surface, which comes in contact with a sample. When the first sensor chip is used to quantitatively and/or qualitatively analyze the sample, immobilized binding substances (substances which can capture target species as result of interaction such as antigen-antibody reaction, complementary DNA bonding, receptor-ligand interaction, enzyme-substrate interaction) which binds specifically to target species (chemical species, biochemical species, or biological species, etc.) in the sample are employed on the sensor surface. In particular, in a case where a sensor chip for multiple-position simultaneous assessment is used, two or more binding substances each of which binds to a specific target species in the sample are immobilized in association with the diffraction areas, thus making it possible to analyze two or more target species simultaneously.

It is preferred that two or more binding substances are immobilized for each of the diffraction grating surfaces.

It is also preferred that a non-diffraction surface is disposed on the same plane with the respective one of the diffraction grating surfaces.

As a preferred feature, the surface plasmon resonance sensor chip has two or more non-diffraction areas each of which is associated with each of the diffraction area. Each of the non-diffraction areas has two or more non-diffraction surfaces concentratedly disposed therein, and none of the non-diffraction surfaces has any diffraction grating. The inclination angles that the non-diffraction surfaces, included in the non-diffraction area, form with the reference plane have the same distribution as that of the inclination angles which the diffraction grating surfaces, included in the associated diffraction area, form with the reference plane.

As another preferred feature, each of the diffraction grating surfaces has a reaction area, within which the binding substance is immobilized, and a non-reaction area, within which a substance that does not bind to any specific target species in the sample is immobilized or, alternatively, any substance is not immobilized therein.

As still another preferred feature, one or more of the diffraction areas each have a reaction area, in which a binding substance that binds specifically to a target species in the sample is immobilized. Each of the remaining diffraction areas has a non-reaction area, in which a' substance that does not bind to any specific target species in the sample is immobilized or, alternatively, any substance is not immobilized therein.

As a further preferred feature, the diffraction grating surfaces are arranged in a direction perpendicular to the groove orientation, and the sensor chip further includes a cover for covering the sensor surface and two or more flow channels formed side by side between the sensor surface and the cover so as to pass along the direction in which the diffraction grating surfaces are arranged.

As a still further preferred feature, the sensor chip has a cover for covering the sensor surface and flow channels disposed side by side between the sensor surface and the cover, and the diffraction areas are disposed for each of the flow channels.

The followings are eight of the methods for analyzing a sample using the first sensor chip. A first analysis method calculates a resonance angle and then analyzes the sample based on the obtained resonance angle. This method comprises the steps of: making the sample in contact with the sensor surface while irradiating the sensor surface with light in parallel to the specific plane at a predetermined incident angle; receiving light reflected from each of the diffraction grating surfaces and measuring the intensity of the light reflected by each of the diffraction grating surfaces; calculating a resonance angle based on both the measured intensity of the reflected light due to each of the diffraction grating surfaces and the inclination angle that each of the diffraction grating surfaces forms with the reference plane; and quantitatively and/or qualitatively analyzing the sample based on the calculated resonance angle.

With this method, since the resonance angle is calculated instantaneously without necessity to perform angle scanning, thus enabling real-time measurement, it is possible to calculate the resonance angle without necessity to emit a wedge-shaped light beam, thereby making it possible to perform measurement in a large area all at once. Accordingly, using a sensor chip for multiple-position simultaneous assessment, on which chip there are provided diffraction grating areas where diffraction grating surfaces are arranged in a concentrated manner, it is also possible to perform such multiple-position simultaneous assessment in real time. In this case, partly since the optical axis of a light source is not required to change, and partly since parallel light can be used, a simple optical system can be employed. It is to be noted that the above steps can be performed in the order of the foregoing description, or alternatively, they can be performed simultaneously. In the latter case, particularly, it is possible to monitor in real time how target species in the sample bind to binding substances.

The above-described analysis method is realized by an analysis apparatus constructed as follows. The apparatus comprises: a holding means for holding such a first surface plasmon resonance sensor chip with the sensor surface being in contact with the sample; a light irradiating means for irradiating the sensor surface with light in parallel to the specific plane at a predetermined incident angle in a state where the surface plasmon resonance sensor chip is held by the holding means; a light receiving means for receiving the light reflected from each of the diffraction grating surfaces ; a measuring means for measuring the intensity of the light reflected by each of the diffraction grating surfaces and received by the light receiving means. The apparatus further comprises a calculating means and an analyzing means, for analyzing the sample based on the reflected light received by the light receiving means. The calculating means calculates a resonance angle based on both the intensity, measured by the measuring means, of the reflected light due to each of the diffraction grating surfaces and the inclination angle that each of the diffraction grating surfaces forms with the reference plane; the analyzing means quantitatively and/or qualitatively analyzes the sample based on the resonance angle calculated by the calculating means.

A second analysis method calculates a resonance angle and then analyzes the sample based on the obtained resonance angle. The method employs a surface plasmon resonance sensor chip with non-diffraction surfaces formed thereon. Each of the non-diffraction surfaces does not have any diffraction grating and is disposed along the sensor surface on the same plane with the respective one of the diffraction grating surfaces. This method comprises the steps of: making a sample in contact with the sensor surface while irradiating the sensor surface with light in parallel to the specific plane at a predetermined incident angle; receiving light reflected from the sensor surface and measuring the intensity of the light reflected by each of the diffraction grating surfaces; correcting the measured intensity of the reflected light due to each of the diffraction grating surfaces with consideration given to the intensity of the light reflected by each of the non-diffraction surfaces; calculating a resonance angle at which a resonance phenomenon of the evanescent wave and the surface plasmon wave occurs, based on both the measured intensity of reflected light due to each of the diffraction grating surfaces and the inclination angle that each of the diffraction grating surfaces forms with the reference plane; and quantitatively and/or qualitatively analyzing the sample based on the calculated resonance angle.

Here, a non-diffraction surface reflecting the light that is to be considered for correction must be inclined with respect to the reference plane at the same angle as that at which an object diffraction grating surface reflecting the light that is to be corrected is inclined with respect to the reference plane. Therefore, if such a non-diffraction grating surface and the object diffraction grating surface are not disposed on the same plane, it is required to specify a non-diffraction surface that corresponds to the object diffraction grating surface, so that correction can be performed in consideration of the reflected light coming from the specified non-diffraction surface.

With this method, not only similar effects to those of the first analysis method but also the following advantages can be attained. Since the intensity of light reflected from each diffraction grating surface is corrected in consideration of the intensity of light reflected from a non-diffraction surface, it is possible to correct errors in the intensity of reflected light caused by differences in surface properties among the diffraction grating surfaces.

In this instance, the above-mentioned surface properties are defined as factors, out of those relating to the surface of the sensor chip except a resonance phenomenon of the evanescent wave and the surface plasmon wave, that weaken the intensity of reflected light from a sensor chip. Such example factors are, for instance, cloudy sample solutions causing a scattering of light; substances in sample solutions that absorb incident light; and slight displacement, such as distortion, deflection, swelling, and contraction, from an ideal surface. In addition, if a constituent of the sample is nonspecifically adsorbent to the surface of the sensor chip, incident light can be scattered or absorbed by this substance, the intensity of the reflected light from the sensor chip being thereby decreased.

This analysis method is realized by an analysis apparatus constructed as follows. The apparatus comprises: a holding means for holding such the above mentioned first surface plasmon resonance sensor chip with the sensor surface being in contact with a sample; a light irradiating means for irradiating the sensor surface with light in parallel to the specific plane at a predetermined incident angle in a state where the surface plasmon resonance sensor chip is held by the holding means; a light receiving means for receiving the light reflected from the diffraction grating surfaces; a measuring means for measuring the intensity of the light received by the light receiving means. The apparatus further comprises a correcting means, a calculating means, and an analyzing means, for analyzing the sample based on the reflected light received by the light receiving means. The correcting means corrects the intensity of reflected light due to each of the diffraction grating surfaces with consideration given to the intensity of the reflected light due to the non-diffraction surface; a calculating means calculates a resonance angle based on both the intensity, corrected by the correcting means, of the reflected light due to each of the diffraction grating surfaces and the inclination angle that each of the diffraction grating surfaces forms with the reference plane; and the analyzing means quantitatively and/or qualitatively analyzes the sample based on the resonance angle calculated by the calculating means.

A third analysis method calculates a resonance angle and then analyzes the sample based on the obtained resonance angle. The method employs a surface plasmon resonance sensor chip that has a reaction area, within which the binding substance is immobilized, and a non-reaction area, within which a substance that does not bind specifically to any target species in the sample is immobilized or, alternatively, any substance is not immobilized. The analysis method comprises the steps of: making a sample in contact with the sensor surface while irradiating the sensor surface with light in parallel to the specific plane at a predetermined incident angle; receiving light reflected from the sensor surface and measuring the intensity of the light reflected by each of the diffraction grating surfaces; calculating, for each of the reaction area and the non-reaction area, a resonance angle at which a resonance phenomenon of the evanescent wave and the surface plasmon wave occurs, based on both the measured intensity of the reflected light due to each of the diffraction grating surface and the inclination angle that each of the diffraction grating surfaces forms with the reference plane; and after correcting the resonance angle of the reaction area with consideration given to the resonance angle of the non-reaction area, quantitatively and/or qualitatively analyzing the sample based on the corrected resonance angle of the reaction area.

With this method, not only similar effects to those of the first analysis method but also the following advantages can be attained. Since the resonance angle in a reaction area is corrected based on the resonance angle in a non-reaction area, it is possible to accurately analyze changes in target species caused by reactions.

As for the correction performed according to this method, if a resonance angle can be obtained, it is not always necessary that the reaction area be inclined with respect to the reference plane at the same angle as that at which a non-reaction area is inclined with respect to the reference plane. This is because it is an amount of reaction, not the intensity of reflected light, which is to be corrected here based on a shift in the resonance angle due to other factors than specific target reactions to be detected.

The above-described analysis method is realized by an analysis apparatus constructed as follows. The apparatus comprises: a holding means for holding such a first plasmon resonance sensor chip with the sensor surface being in contact with the sample; a light irradiating means for irradiating the sensor surface with light in parallel to the specific plane at a predetermined incident angle in a state where the surface plasmon resonance sensor chip is held by the holding means; a light receiving means for receiving the light reflected from the sensor surface; and a measuring means for measuring the intensity of the light reflected by each of the diffraction grating surfaces and received by the light receiving means. The apparatus further comprises a calculating means and an analyzing means, for analyzing the sample based on the reflected light received by the light receiving means. The calculating means calculates, for each of the reaction area and the non-reaction area, a resonance angle at which a resonance phenomenon of the evanescent wave and the surface plasmon wave occurs, based on the intensity, measured by the measuring means, of the reflected light due to each of the diffraction grating surfaces and the inclination angle that each of the diffraction grating surfaces forms with the reference plane; and the analyzing means quantitatively and/or qualitatively analyzes the sample based on a corrected resonance angle of the reaction area, which is corrected with consideration given to the resonance angle of the non-reaction area.

A fourth analysis method calculates a resonance angle and then analyzes the sample based on the obtained resonance angle. The method employs a surface plasmon resonance sensor chip on which the diffraction grating surfaces are arranged in a direction perpendicular to the groove orientation. The sensor chip has one of the following two types of constructions: (1) the sensor chip has a cover for covering the sensor surface, and channels formed side by side between the sensor surface and the cover so as to pass along the direction in which the diffraction grating surfaces are arranged; (2) the sensor chip has a cover for covering the sensor surface, and flow channels disposed side by side between the sensor surface and the cover, and the diffraction areas are disposed for each of the flow channels. The analysis method comprises the steps of: assigning different samples one to each of the flow channels, and letting each of the samples flow through the respective flow channel while irradiating the sensor surface with light in parallel to the specific plane at a predetermined incident angle; receiving the light reflected from the sensor surface and measuring the intensity of the light reflected by each of the diffraction grating surfaces; calculating, for each sample flowing through the respective flow channel, a resonance angle at which a resonance phenomenon of the evanescent wave and the surface plasmon wave occurs, based on both the measured intensity of the reflected light due to each of the diffraction grating surfaces and the inclination angle that each of the diffraction grating surfaces forms with the reference plane; and quantitatively and/or qualitatively analyzing each sample flowing through the respective flow channel, based on the calculated resonance angle for each of the flow channels.

With this method, not only similar effects to those of the first analysis method but also the following advantages can be attained. Different kinds of samples can be analyzed simultaneously, thus realizing effective analysis. In addition, since the different samples are analyzed under an identical condition, it is possible to make the difference among the samples clear.

This analysis method is realized by an analysis apparatus constructed as follows. The apparatus comprises: a holding means for holding such a first surface plasmon resonance sensor chip; a sample introducing means for assigning different samples one to each of the flow channels, and for introducing each of the samples into the respective flow channel in a state where the surface plasmon resonance sensor chip is held by the holding means; a light irradiating means for irradiating the sensor surface with light in parallel to the specific plane at a predetermined incident angle in a state where each sample is introduced into the respective flow channel by the sample introducing means; a light receiving means for receiving the light reflected from the sensor surface; a measuring means for measuring the intensity of the light reflected by each of the diffraction grating surface and received by the light receiving means. The apparatus further includes a calculating means and an analyzing means, for analyzing the sample based on the reflected light received by the light receiving means. The calculating means calculates a resonance angle at which a resonance phenomenon of the evanescent wave and the surface plasmon wave occurs for each of the flow channels, based on the intensity, measured by the measuring means, of the reflected light due to each of the diffraction grating surfaces and the inclination angle that each of the diffraction grating surfaces forms with the reference plane; and the analyzing means quantitatively and/or qualitatively analyzes each sample flowing through the respective flow channel, based on the resonance angle calculated by the calculating means.

A fifth analysis method measures the variation in the intensity of reflected light and then analyzes a sample based on the variation amount. The method comprises the steps of: making the sample in contact with the sensor surface while irradiating the sensor surface with light in parallel to the specific plane at a predetermined incident angle; receiving light reflected from each of the diffraction grating surfaces and measuring the intensity of the light reflected by each of the diffraction grating surfaces; determining the variation between the measured intensity of the reflected light due to each of the diffraction grating surfaces and the intensity of the light reflected when any sample is not in contact with the sensor surface; and selecting a diffraction grating surface whose determined variation of the reflected light intensity is within a predetermined allowable range for determination, and quantitatively and/or qualitatively analyzing the sample based on the variation of the reflected light intensity of the selected diffraction grating surface.

With this method, even when a wide range of sample concentrations are used, it is not required to readjust the optical system in such a manner that measurement results fall within a measurement range, the measurement range thereby being virtually enlarged. In this case, also, the above steps can be performed in the order of the foregoing description, or alternatively, they can be performed simultaneously.

The above-described analysis method is realized by an analysis apparatus constructed as follows. The apparatus comprises: a holding means for holding such a first surface plasmon resonance sensor chip with the sensor surface being in contact with the sample; a light irradiating means for irradiating the sensor surface with light in parallel to the specific plane at a predetermined incident angle in a state where the surface plasmon resonance sensor chip is held by the holding means; a light receiving means for receiving the light reflected from each of the diffraction grating surfaces; a measuring means for measuring the intensity of the light reflected by each of the diffraction grating surfaces and received by the light receiving means. The apparatus further comprises a determining means and an analyzing means, for analyzing the sample based on the reflected light received by the light receiving means. The determining means determines the variation between the intensity, measured by the measuring means, of the reflected light due to each of the diffraction grating surfaces and the intensity of the light reflected when any sample is not in contact with the sensor surface; and the analyzing means selects a diffraction grating surface whose variation, determined by the determining means, of the reflected light intensity is within a predetermined allowable range for determination, and quantitatively and/or qualitatively analyzes the sample based on the variation of the reflected light intensity of the selected diffraction grating surface.

A sixth analysis method measures the variation in the intensity of reflected light and then analyzes a sample based on the variation amount. The method employs a surface plasmon resonance sensor chip comprising non-diffraction surfaces with no diffraction grating formed thereon. Each of the non-diffraction surfaces is disposed on the same plane along the sensor surface on the same plane with the respective one of the diffraction grating surfaces. This method comprises the steps of: making the sample in contact with the sensor surface while irradiating the sensor surface with light in parallel to the specific plane at a predetermined incident angle; receiving light reflected from the sensor surface and measuring the intensity of the light reflected by each of the diffraction grating surfaces; correcting the intensity of the reflected light due to each of the diffraction grating surfaces with consideration given to the intensity of the reflected light due to each of the non-diffraction surface; determining the variation between the corrected intensity of the reflected light due to each of the diffraction grating surface and the intensity of the light reflected when any sample is not in contact with the sensor surface; and selecting a diffraction grating surface whose determined variation of the reflected light intensity is within a predetermined allowable range (determination range) for determination, and quantitatively and/or qualitatively analyzing the sample based on the variation of the reflected light intensity of the selected diffraction grating surface.

Here, as in the case of the second analysis method, a non-diffraction surface reflecting the light that is to be considered on correction must be inclined with respect to the reference plane at the same angle as that at which an object diffraction grating surface reflecting the light to be corrected is inclined with respect to the reference plane. Therefore, if such a non-diffraction grating surface and the object diffraction grating surface are not disposed on the same plane, it is required to specify a non-diffraction surface that corresponds to the object diffraction grating surface, so that correction can be performed in consideration of the reflected light coming from the specified non-diffraction surface.

With this method, not only similar effects to those of the fifth analysis method but also the following advantages can be attained. Since the intensity of light reflected from the diffraction grating surfaces is corrected in consideration of the intensity of light reflected from the non-diffraction surfaces, it is possible to correct errors in the intensity of reflected light caused by differences in surface properties among the diffraction grating surfaces.

This analysis method is realized by an analysis apparatus constructed as follows. The apparatus comprises: a holding means for holding such a first surface plasmon resonance sensor chip with the sensor surface being in contact with a sample; a light irradiating means for irradiating the sensor surface with light in parallel to the specific plane at a predetermined incident angle in a state where the surface plasmon resonance sensor chip is held by the holding means; a light receiving means for receiving the light reflected from each of the diffraction grating surfaces; and a measuring means for measuring the intensity of the light reflected by each of the diffraction grating surfaces and received by the light receiving means. The apparatus further comprises a correcting means, a determining means, and an analyzing means, for analyzing the sample based on the reflected light received by the light receiving means. The correcting means corrects the intensity of reflected light due to each of the diffraction grating surface with consideration given to the intensity of the reflected light due to the non-diffraction surface; the determining means for determining the variation between the intensity, corrected by the correcting means, of the reflected light due to each of the diffraction grating surfaces and the intensity of the light reflected when any sample is not in contact with the sensor surface; and an analyzing means for selecting a diffraction grating surface whose variation, determined by the determining means, of the reflected light intensity is within a predetermined allowable range for determination, and for quantitatively and/or qualitatively analyzing the sample based on the variation of the reflected light intensity of the selected diffraction grating surface.

A seventh analysis method measures variation in the intensity of reflected light and then analyzes a sample based on the variation amount. The method employs a surface plasmon resonance sensor chip that has a reaction area, within which a binding substance is immobilized, and a non-reaction area, within which a substance that does not bind specifically to any target species in the sample is immobilized or, alternatively, any substance is not immobilized. The method comprises the steps of: making a sample in contact with the sensor surface while irradiating the sensor surface with light in parallel to the specific plane at a predetermined incident angle; receiving the light reflected from each of the diffraction grating surfaces and measuring the intensity of the light reflected by each of the diffraction grating surfaces; determining, for each of the reaction areas and the non-reaction areas, the variation between the measured intensity of the reflected light due to each of the diffraction grating surfaces and the intensity of the light reflected when any sample is not in contact with the sensor surface; and selecting, for each of the reaction areas and the non-reaction areas, a diffraction grating surface whose determined variation of the reflected-light intensity is within a predetermined allowable range for determination, and quantitatively and/or qualitatively analyzing the sample based on both the selected variation of the reflected light intensity of the reaction area and the selected variation of the reflected light intensity of the non-reaction area.

As in the case of the third analysis method, if a resonance angle can be obtained, it is not always necessary that the reaction area be inclined with respect to the reference plane at the same angle as that at which a non-reaction area is inclined with respect to the reference plane. This is because it is an amount of reaction, not the intensity of reflected light, which is to be corrected here based on a shift in the resonance angle due to other factors than specific target reactions that are to be detected.

With this method, not only similar effects to those of the fifth analysis method but also the following advantages can be attained. Since the resonance angle in a reaction area is corrected based on the resonance angle in a non-reaction area, it is possible to accurately analyze change in target species caused by reactions.

The above-described analysis method is realized by an analysis apparatus constructed as follows. The apparatus comprises: a holding means for holding such a first surface plasmon resonance sensor chip with the sensor surface being in contact with a sample; a light irradiating means for irradiating the sensor surface with light in parallel to the specific plane at a predetermined incident angle in a state where the surface plasmon resonance sensor chip is held by the holding means; a light receiving means for receiving the light reflected from each of the diffraction grating surfaces; and a measuring means for measuring the intensity of the light reflected by each of the diffraction grating surfaces and received by the light receiving means. The apparatus further comprises a determining means and an analyzing means, for analyzing the sample based on the reflected light received by the light receiving means. The determining means determines, for each of the reaction areas and the non-reaction areas, the variation between the intensity, measured by the measuring means, of the reflected light due to each of the diffraction grating surfaces and the intensity of the light reflected when any sample is not in contact with the sensor surface; and the analyzing means selects a diffraction grating surface whose variation, determined by the determining means, of the reflected light intensity is within a predetermined allowable range for determination, and quantitatively and/or qualitatively analyzes the sample based on both the variation of the reflected light intensity of the selected reaction area and the variation of the reflected light intensity of the selected non-reaction area.

An eighth analysis method measures the variation in the intensity of reflected light and then analyzes a sample based on the variation amount. The method employs a surface plasmon resonance sensor chip on which the diffraction grating surfaces are arranged in a direction perpendicular to a groove orientation. The chip has one of the following two types of constrictions: (1) the chip further includes a cover for covering the sensor surface, and flow channels formed side by side between the sensor surface and the cover so as to pass along the direction in which the diffraction grating surfaces are arranged; (2) the chip has a cover for covering the sensor surface, and flow channels disposed side by side between the sensor surface and the cover, and the diffraction areas are disposed for each of the flow channels. This analysis method comprises the steps of: assigning different samples one to each of the plural flow channels, and letting each of the samples flow through the respective flow channel while irradiating the sensor surface with light in parallel to the specific plane at a predetermined incident angle; receiving light reflected from the sensor surface and measuring the intensity of the light reflected by each of the diffraction grating surfaces; determining the variation between the measured intensity of the reflected light due to each of the diffraction grating surfaces and the intensity of the light reflected when any sample does not flow through the flow channels; and selecting, for each of the flow channels, a diffraction grating surface whose determined variation of the reflected light intensity is within a predetermined allowable range for determination, and quantitatively and/or qualitatively analyzing each sample flowing through the respective flow channel, based on the variation of the reflected light intensity of the diffraction grating surface selected for each of the flow channels.

With this method, not only similar effects to those of the fifth analysis method but also the following advantages can be attained. It is possible to analyze two or more samples simultaneously, thus realizing effective analysis. Additionally, since the different samples are analyzed under an identical condition, it is possible to make the difference among the samples clear.

This analysis method is realized by an analysis apparatus constructed as follows. The apparatus comprises: a holding means for holding such a first surface plasmon resonance sensor chip; a sample introducing means for assigning different samples one to each of the flow channels, and for introducing each of the samples into the respective flow channel in a state where the surface plasmon resonance sensor chip is held by the holding means; a light irradiating means for irradiating the sensor surface with light in a predetermined direction in a state where each sample is introduced into the respective flow channel by the sample introducing means; a light receiving means for receiving light reflected from each of the diffraction grating surfaces; and a measuring means for measuring the intensity of the light reflected by each of the diffraction grating surface and received by the light receiving means. The apparatus further comprises a determining means and an analyzing means, for analyzing the sample based on the light reflected received by the light receiving means. The determining means determines the variation between the intensity of the light reflected by each of the diffraction grating surfaces and received by the light receiving means and the intensity of the light reflected when any sample is not flowing through the flow channels; and the analyzing means selects, for each of the flow channels, a diffraction grating surface whose variation, determined by the determining means, of the reflected light intensity is within a predetermined allowable range for determination, and quantitatively and/or qualitatively analyzes each sample flowing through the respective flow channel, based on the variation of the reflected light intensity of the diffraction grating surface selected for each of the flow channel.

As a preferred feature, the above method further comprises the step of separating the sample by physical and/or chemical action prior to introducing the sample to the surface plasmon resonance sensor chip.

This makes it possible to appropriately remove impurities, if any, other than target species contained in the sample before analysis, so that only pure target species can be subject to the analysis. As a consequence, the accuracy of the analysis is improved.

At that time, if combined with detecting techniques (absorbance detection, fluorescence detection, chemiluminescence detection, differential refract meter detection, electrochemical detection, etc.) that are commonly used in these analyzing means, it is possible to perform the following determination at the same time: determination of the amount of various substances being present; and determination of target species by measuring reactions unique to the target species.

This analysis method is implemented by an analysis apparatus which has, in addition to the construction as described above, a sample separating means for separating the sample by physical and/or chemical action prior to introducing the sample to the surface plasmon resonance sensor chip.

The following separation techniques preferably serve as such sample separating means: liquid chromatography; HPLC (High Performance Liquid Chromatography); capillary electrophoresis; microchip electrophoresis; and methods using flow injection or microchannels.

As a preferred feature, if the target species is a light-emitting substance, the method further comprises the step of detecting light emitted from the light-emitting substance that is bound to the binding substance prior to light-irradiating the sensor surface or, alternatively, after light-irradiating the sensor surface and receiving the reflected light. In the step of quantitatively and/or qualitatively analyzing, the sample is analyzed with consideration given to the detection result of the emitted light.

With this feature, light-emitting phenomena as well as surface plasmon resonance can be utilized in the analysis. The extremely high sensitivity of light-emitting phenomena, such as fluorescence and phosphor, enables detection of minute reactions.

This analyzing means can be implemented by an analysis apparatus that has, in addition to the construction as described above, the following construction: when the target species is a light-emitting substance, the light receiving means is operable to detect light emitted from the light-emitting substance that is bound to the binding substance, and the analyzing means is operable to quantitatively and/or qualitatively analyze the sample with consideration given to the detection result of the light emission by the light receiving means.

Next, a second surface plasmon resonance chip (second sensor chip) according to the present invention comprises: a metal layer along whose surface a surface plasmon wave can be induced by light irradiation; and diffraction grating surfaces which are disposed in the vicinity of the metal layer and on each of which a diffraction grating with a uniform groove orientation and a uniform groove pitch is formed so as to generate an evanescent wave upon light irradiation. Each of the diffraction grating surfaces is disposed so as to be parallel to a predetermined reference plane, and on each of the diffraction grating surfaces, the diffraction grating is formed in such a manner that the groove orientations are identical while the groove pitches are different among the diffraction grating surfaces.

With this construction, when light (parallel light) is emitted from a predetermined direction, an evanescent wave occurs which has the number of waves and an angular frequency corresponding to a groove pitch of each diffraction grating surface. As a result, resonance phenomena occur at two or more resonance points with different angular frequencies for one single surface plasmon wave. It is thus possible to calculate more than one resonance points in real time, based on the intensity of the light reflected from the diffraction grating surfaces and groove pitches on the diffraction grating surfaces. In other words, such a sensor chip makes it possible to detect more than one resonance point even using a simple optical system.

Such a second sensor chip has diffraction grating surfaces formed along a sensor surface, which comes in contact with a sample. If such a second sensor chip is used in quantitative and/or qualitative analysis of a sample, a binding substance (a substance which captures a target species by antigen-antibody reaction, complementary DNA bonding, receptor-ligand interaction, enzyme-substrate interaction) that binds specifically to a target species (chemical, biochemical, or biological species) in the sample is immobilized on the sensor surface, for each of the diffraction grating surfaces. In particular, in case of a sensor chip for a multiple-point simultaneous measurement, two or more kinds of binding substances are immobilized for each of the diffraction grating surfaces.

As a preferred feature, on the sensor surface there are provided non-diffraction surfaces with no diffraction grating formed thereon. Each of the non-diffraction surfaces is disposed along the sensor surface on the same plane with the respective one of the diffraction grating surfaces.

As another preferred feature, each of the diffraction grating surfaces has a reaction area, within which the binding substance is immobilized, and a non-reaction area, within which a substance that does not bind specifically to any target species in the sample is immobilized or, alternatively, any substance is not immobilized.

As still another preferred feature, the diffraction grating surfaces are arranged in a direction perpendicular to the groove orientation, and the sensor chip further comprises a cover for covering the sensor surface, and flow channels formed side by side between the sensor surface and the cover so as to pass along the direction in which the diffraction grating surfaces are arranged.

As a further preferred feature, the diffraction grating surfaces are arranged in a direction perpendicular to the groove orientation. The sensor chip further comprises: a cover for covering the sensor surface; and flow channels formed side by side between the sensor surface and the cover so as to pass along the direction in which the diffraction grating surfaces are arranged. Along each of the flow channels, each of the diffraction grating surfaces has a reaction area, within which the binding substance is immobilized, and a non-reaction area, within which a substance that does not bind specifically to any target species in the sample is immobilized or, alternatively, any substance is not immobilized.

The followings are ten of the methods for analyzing a sample using such a second sensor chip.

A first analysis method calculates a groove pitch at which resonance occurs and then quantitatively and/or qualitatively analyzes a sample based on the obtained groove pitch. This method comprises the steps of: making a sample in contact with the sensor surface while irradiating the sensor surface with light at a predetermined incident angle; receiving light reflected from each of the diffraction grating surfaces and measuring the intensity of the light reflected by each of the diffraction grating surfaces; correcting the intensity of the reflected light due to each of the diffraction grating surfaces with consideration given to the intensity of the light reflected by the respective non-diffraction surface; identifying a groove pitch at which a resonance phenomenon of the evanescent wave and the surface plasmon wave occurs, based on the corrected intensity of the reflected light due to each of the diffraction grating surfaces; and quantitatively and/or qualitatively analyzing the sample based on the identified groove pitch.

With this analysis method, it is possible to calculate more than one resonance point instantaneously, thus enabling real-time measurement. In addition, even if wide ranges of dielectric constant distribution and refractive index distribution are found, it is still possible to analyze a sample without readjusting an optical system. Accordingly, using a sensor chip for multiple-position simultaneous analysis, on which chip there are provided diffraction grating areas where diffraction grating surfaces are arranged in a concentrated manner, it is possible to perform such multiple-position simultaneous assessment in real time. In addition, partly since the optical axis of a light source is not required to change, and partly since parallel light can be used, it is possible to employ a simple optical system. It is to be noted that the above steps can be performed in the order of the foregoing description, or alternatively, they can be performed simultaneously. In the latter case, particularly, it is possible to monitor in real time how target species bind to binding substances.

The above-described analysis method is realized by an analysis apparatus constructed as follows. The apparatus comprises: a holding means for holding such a second surface plasmon resonance sensor chip with the sensor surface being in contact with a sample; a light irradiating means for irradiating the sensor surface with light from a predetermined direction in a state where the surface plasmon resonance sensor chip is held by the holding means; a light receiving means for receiving the light reflected from the sensor surface; a measuring means for measuring the intensity of the light reflected by each of the diffraction grating surfaces and received by light receiving means. The apparatus further comprises an analyzing means for analyzing the sample based on the reflected light received by the light receiving means. The analyzing means identifies a groove pitch at which a resonance phenomenon of the evanescent wave and the surface plasmon wave occurs, based on the intensity, measured by the measuring means, of the reflected light due to each of the diffraction grating surfaces, and quantitatively and/or qualitatively analyzes the sample based on the identified groove pitch.

A second analysis method calculates a groove pitch at which resonance occurs and then quantitatively and/or qualitatively analyzes a sample based on the obtained groove pitch. The method employs a surface plasmon resonance sensor chip comprising non-diffraction surfaces with no diffraction grating formed thereon, each of which non-diffraction surfaces is disposed on the same plane along the sensor surface on the same plane with the respective one of the diffraction grating surfaces. This method comprises the steps of: making a sample in contact with the sensor surface while irradiating the sensor surface with light at a predetermined incident angle; receiving light reflected from the sensor surface and measuring the intensity of the light reflected by each of the diffraction grating surfaces; correcting the intensity of the reflected light due to each of the diffraction grating surfaces with consideration given to the intensity of the light reflected by the respective non-diffraction surface; identifying a groove pitch at which a resonance phenomenon of the evanescent wave and the surface plasmon wave occurs, based on the corrected intensity of the reflected light due to each of the diffraction grating surfaces; and quantitatively and/or qualitatively analyzing the sample based on the identified groove pitch.

With this method, not only similar effects to those of the first analysis method but also the following advantages are attained. Since the intensity of light reflected from the diffraction grating surfaces is corrected in consideration of the intensity of light reflected from the non-diffraction surfaces, it is possible to correct errors in the intensity of reflected light caused by differences in surface properties among the diffraction grating surfaces.

In this instance, the above-mentioned surface properties are defined as factors, out of those relating to the surface of the sensor chip, that weaken the intensity of light reflected from a sensor chip. Such example factors are, for instance, cloudy sample solutions causing a scattering of light, substances in sample solutions that absorb incident light, and displacement, such as distortion, deflection, swelling, and contraction, from an ideal surface. In addition, if a constituent of the sample is nonspecifically adsorbent to the surface of the sensor chip, incident light can be scattered or absorbed by this substance, the intensity of the light reflected from the sensor chip being thereby decreased.

This analysis method is realized by an analysis apparatus constructed as follows. The apparatus comprises: a holding means for holding such a second surface plasmon resonance sensor chip with the sensor surface being in contact with a sample; a light irradiating means for irradiating the sensor surface with light from a predetermined direction in a state where the surface plasmon resonance sensor chip is held by the holding means; a light receiving means for receiving light reflected from each of the diffraction grating surfaces; a measuring means for measuring the intensity of the light reflected by each of the diffraction grating surface and received by the light receiving means. The apparatus further comprises a correcting means and an analyzing means, for analyzing the sample based on the reflected light received by the light receiving means. The correcting means corrects the intensity of the reflected light due to each of the diffraction grating surfaces with consideration given to the intensity of the reflected light due to the respective non-diffraction surface; and the analyzing means identifies a groove pitch at which a resonance phenomenon of the evanescent wave and the surface plasmon wave occurs, based on the intensity, corrected by the correcting means, of the reflected light due to each of the diffraction grating surfaces, and quantitatively and/or qualitatively analyzes the sample based on the identified groove pitch.

A third analysis method calculates a groove pitch at which resonance occurs and then quantitatively and/or qualitatively analyzes a sample based on the obtained groove pitch. The method employs a surface plasmon resonance sensor chip formed as follows: each of the diffraction grating surfaces has a reaction area, within which the binding substance is immobilized, and a non-reaction area, within which a substance that does not bind specifically to any target species in the sample is immobilized or, alternatively, any substance is not immobilized. This method comprises the steps of: making a sample in contact with the sensor surface while irradiating the sensor surface with light at a predetermined incident angle; receiving the light reflected from the sensor surface and measuring the intensity of the light reflected by each of the diffraction grating surfaces; identifying, for each of the reaction areas and the non-reaction areas, a groove pitch at which a resonance phenomenon of the evanescent wave and the surface plasmon wave occurs, based on the measured intensity of the reflected light due to each of the diffraction grating surfaces; and quantitatively and/or qualitatively analyzing the sample based on the groove pitch identified for each of the reaction areas and the non-reaction areas.

With this analysis method, not only similar effects to those of the first analysis method but also the following advantages can be attained. Since the analysis is performed based on groove pitches of the reaction areas and those of the non-reaction areas, it is possible to accurately analyze changes in target species caused by reactions.

This analysis method is realized by an analysis apparatus constructed as follows. The apparatus comprises: a holding means for holding such a second surface plasmon resonance sensor chip with the sensor surface being in contact with a sample; a light irradiating means for irradiating the sensor surface with light at a predetermined incident angle in a state where the surface plasmon resonance sensor chip is held by the holding means; a light receiving means for receiving light reflected from each diffraction grating surface; and a measuring means for measuring the intensity of the light received by the light receiving means. The apparatus further comprises an analyzing means for analyzing the sample based on the light received by the light receiving means. The analyzing means identifies, for each of the reaction area and the non-reaction area, a groove pitch at which a resonance phenomenon of the evanescent wave and the surface plasmon wave occurs, based on the intensity, measured by the measuring means, of the reflected light due to each of the diffraction grating surface, and quantitatively and/or qualitatively analyzes the sample based on the groove pitch identified for each of the reaction areas and the non-reaction areas.

A fourth analysis method calculates a groove pitch at which resonance occurs and then quantitatively and/or qualitatively analyzes a sample based on the obtained groove pitch. The method employs a surface plasmon resonance sensor chip formed as follows. On the sensor ship, the diffraction grating surfaces are arranged in a direction perpendicular to the groove orientation, and the sensor chip further comprises a cover for covering the sensor surface and flow channels formed side by side between the sensor surface and the cover so as to pass along the direction in which the diffraction grating surfaces are arranged. This method comprises the steps of: assigning different samples one to each of the flow channels, and letting each of the samples flow through the respective flow channel while irradiating the sensor surface with light at a predetermined incident angle; receiving light reflected from the sensor surface and measuring the intensity of the light reflected by each of the diffraction grating surfaces; identifying, for each of the flow channels, a groove pitch at which the resonance phenomenon of the evanescent wave and the surface plasmon wave occurs, based on the measured intensity of the reflected light due to each of the diffraction grating surfaces; and quantitatively and/or qualitatively analyzing each sample flowing through the respective flow channel, based on the groove pitch identified for each of the flow channels.

With this analysis method, not only similar effects to those of the first analysis method but also the following advantages can be attained. More than one target species is simultaneously analyzed, thus realizing effective analysis. In addition, since more than one type of target species can be analyzed under an identical condition, it is possible to make the difference among the target species clear.

This analysis method is realized by an analysis apparatus constructed as follows. The apparatus comprises: a holding means for holding such a second surface plasmon resonance sensor chip; a sample introducing means for assigning different samples one to each of the plural flow channels, and for introducing each of the samples into the respective flow channel in a state where the surface plasmon resonance sensor chip is held by the holding means; a light irradiating means for irradiating the sensor surface with light from a predetermined direction in a state where each sample is introduced into the respective flow channel by the sample introducing means; a light receiving means for receiving light reflected from each of the diffraction grating surfaces; and a measuring means for measuring the intensity of the light reflected by each of the diffraction grating surface and received by the light receiving means. The apparatus further comprises an analyzing means for analyzing the sample based on the light received by the light receiving means. The analyzing means identifies, for each of the flow channels, a groove pitch at which a resonance phenomenon of the evanescent wave and the surface plasmon wave occurs, based on the intensity, measured by the measuring means, of the reflected light due to each of the diffraction grating surfaces, and quantitatively and/or qualitatively analyzes each sample flowing through the respective flow channel, based on the groove pitch identified for each of the flow channels.

A fifth analysis method calculates a groove pitch at which resonance occurs and then quantitatively and/or qualitatively analyzes a sample based on the obtained groove pitch. The method employs a surface plasmon resonance sensor chip formed as follows. On the sensor chip, diffraction grating surfaces are arranged in a direction perpendicular to the groove orientation, and the sensor chip further comprises a cover for covering the sensor surface and flow channels formed side by side between the sensor surface and the cover so as to pass along the direction in which said diffraction grating surfaces are arranged. Along each of the flow channels, each of the diffraction grating surfaces has a reaction area, within which the binding substance is immobilized, and a non-reaction area, within which a substance that does not bind specifically to any target species in the sample is immobilized or, alternatively, any substance is not immobilized. This method comprises the steps of: assigning different samples one to each of the flow channels, and letting each of the samples flow through the respective flow channel while irradiating the sensor surface with light at a predetermined incident angle; receiving light reflected from the sensor surface and measuring the intensity of the light reflected by each of the diffraction grating surfaces; identifying, for each of the flow channels and for each of the reaction areas and the non-reaction areas, a groove pitch at which the resonance phenomenon of the evanescent wave and the surface plasmon wave occurs, based on the measured intensity of the reflected light due to each of the diffraction grating surfaces; and quantitatively and/or qualitatively analyzing each sample flowing through the respective flow channel, based on the groove pitch identified for each of the flow channels and for each of the reaction areas and the non-reaction areas.

With this analysis method, not only similar effects to those of the first analysis method but also the following advantages can be attained. More than one target species is simultaneously analyzed, thus enabling effective analysis. In addition, since more than one type of target species can be analyzed under an identical condition, it is possible to make the difference among the target species clear. Moreover, it is possible to accurately analyze changes in target species caused by reactions for each of the flow channels separately.

This analysis method is realized by an analysis apparatus constructed as follows. The apparatus comprises: a holding means for holding such a second surface plasmon resonance sensor chip; a sample introducing means for assigning different samples one to each of the flow channels, and for introducing each sample into the respective flow channel in a state where the surface plasmon resonance sensor chip is held by the holding means; a light irradiating means for irradiating the sensor surface with light from a predetermined direction in a state where each sample is introduced into the respective flow channel by the sample introducing means; a light receiving means for receiving light reflected from the sensor surface; a measuring means for measuring the intensity of the light reflected by each of the diffraction grating surface and received by the light receiving means. The apparatus further comprises an analyzing means for analyzing the sample based on the light received by the light receiving means. The analyzing means identifies, for each of the flow channels and for each of the reaction areas and the non-reaction areas, a groove pitch at which a resonance phenomenon of the evanescent wave and the surface plasmon wave occurs, based on the intensity, measured by the measuring means, of the reflected light due to each of the diffraction grating surfaces, and quantitatively and/or qualitatively analyzes each sample flowing through the respective flow channel, based on the groove pitches of the reaction area and the non-reaction area identified for each of the flow channels.

A sixth analysis method calculates the variation in the intensity of reflected light and then analyzes a sample based on the variation amount. The method comprises the steps of: making a sample in contact with the sensor surface while irradiating the sensor surface with light at a predetermined incident angle; receiving the light reflected from the sensor surface and measuring the intensity of the light reflected by each of the diffraction grating surfaces; determining the variation between the measured intensity of the reflected light due to each of the diffraction grating surfaces and the intensity of the light reflected when any sample is not in contact with the sensor surface; and selecting a diffraction grating surface whose determined variation of the reflected light intensity is within a predetermined allowable range (determination range) for determination, and quantitatively and/or qualitatively analyzing the sample based on the variation of the reflected light intensity of the selected diffraction grating surface.

With this method, even when a wide range of sample concentrations are used, it is not required to readjust the optical system in such a manner that measurement results fall within a measurement range, the measurement range thereby being virtually enlarged. In this case, also, the above steps can be performed in the order of the foregoing description, or alternatively, they can be performed simultaneously.

The above-described analysis method is realized by an analysis apparatus constructed as follows. The apparatus comprises: a holding means for holding such a second surface plasmon resonance sensor chip with the sensor surface being in contact with a sample; a light irradiating means for irradiating the sensor surface with light from a predetermined direction in a state where the surface plasmon resonance sensor chip is held by the holding means; a light receiving means for receiving light reflected from the sensor surface; a measuring means for measuring the intensity of the light reflected by each of the diffraction grating surfaces and received by the light receiving means. The apparatus further includes a determining means and an analyzing means for analyzing the sample based on the reflected light received by the light receiving means. The determining means determines the variation between the intensity, measured by the measuring means, of the reflected light due to each of the diffraction grating surfaces and the intensity of the light reflected when any sample is not in contact with the sensor surface; and the analyzing means selects a diffraction grating surface whose variation, determined by the determining means, of the reflected light intensity is within a predetermined allowable range for determination, and quantitatively and/or qualitatively analyzes the sample based on the variation of the reflected light intensity of the selected diffraction grating surface.

A seventh analysis method measures the variation in the intensity of reflected light and then analyzes a sample based on the variation amount. The method employs a surface plasmon resonance sensor chip comprising non-diffraction surfaces with no diffraction grating formed thereon, each of which non-diffraction surfaces is disposed along the sensor surface on the same plane with the respective one of the diffraction grating surfaces. This method comprises the steps of: making a sample in contact with the sensor surface while irradiating the sensor surface with light at a predetermined incident angle; receiving light reflected from each of the diffraction grating surfaces and measuring the intensity of the light reflected by each of the diffraction grating surfaces; correcting the measured intensity of the reflected light due to each of the diffraction grating surfaces with consideration given to the intensity of the light reflected by the respective non-diffraction surface; determining the variation between the corrected intensity of the reflected light due to each of the diffraction grating surfaces and the intensity of the light reflected when any sample is not in contact with the sensor surface; and selecting a diffraction grating surface whose determined variation of the reflected light intensity is within a predetermined allowable range (determination range) for determination, and quantitatively and/or qualitatively analyzing the sample based on the variation of the reflected light intensity of the selected diffraction grating surface.

With this method, not only similar effects to those of the sixth analysis method but also the following advantages can be attained. Since the intensity of light reflected from each diffraction grating surface is corrected in consideration of the intensity of light reflected from a non-diffraction surface, it is possible to correct errors in the intensity of reflected light caused by differences in surface properties among the diffraction grating surfaces.

This analysis method is realized by an analysis apparatus constructed as follows. The apparatus comprises: a holding means for holding such a second surface plasmon resonance sensor chip with the sensor surface being in contact with a sample; a light irradiating means for irradiating the sensor surface with light from a predetermined direction in a state where the surface plasmon resonance sensor chip is held by the holding means; a light receiving means for receiving light reflected from the sensor surface; and a measuring means for measuring the intensity of the light reflected by each of the diffraction grating surfaces and received by the light receiving means. The apparatus further comprises a correcting means, a determining means, and an analyzing means, for analyzing the sample based on the reflected light received by the light receiving means. The correcting means corrects the intensity of the reflected light due to each of the diffraction grating surfaces with consideration given to the intensity of the reflected light due to the respective non-diffraction surface; the determining means determines the variation between the intensity, corrected by the correcting means, of the reflected light due to each of the diffraction grating surfaces and the intensity of the light reflected when any sample is not in contact with the sensor surface; and the analyzing means selects a diffraction grating surface whose variation, determined by the determining means, of the reflected light intensity is within a predetermined allowable range for determination, and quantitatively and/or qualitatively analyzes the sample based on the variation of the reflected light intensity of the selected diffraction grating surface.

An eighth analysis method measures the variation in the intensity of reflected light and then analyzes a sample based on the variation amount. The method employs a surface plasmon resonance sensor chip formed as follows: each of the diffraction grating surfaces has a reaction area, within which the binding substance is immobilized, and a non-reaction area, within which a substance that does not bind specifically to any target species in the sample is immobilized or, alternatively, any substance is not immobilized. This analysis method comprises the steps of: making a sample in contact with the sensor surface while irradiating the sensor surface with light at a predetermined incident angle; receiving light reflected from each of the diffraction grating surfaces and measuring the intensity of the light reflected by each of the diffraction grating surfaces; determining, for each of the reaction areas and the non-reaction areas, the variation between the measured intensity of the reflected light due to each of the diffraction grating surfaces and the intensity of the light reflected when any sample is not in contact with the sensor surface; selecting, for each of the reaction areas and the non-reaction areas, a diffraction grating surface whose determined variation of the reflected light intensity is within a predetermined allowable range for determination, and quantitatively and/or qualitatively analyzing the sample based on the variation of the reflected light intensity of the selected reaction area and the variation of the reflected light intensity of the selected non-reaction area.

With this method, not only similar effects to those of the sixth analysis method but also the following advantages can be attained. Since the analysis is made based on a groove pitch in a reaction area and that in a non-reaction area, it is possible to accurately analyze changes in target species caused by reactions.

This analysis method is realized by an analysis apparatus constructed as follows. The apparatus comprises: a holding means for holding such a second surface plasmon resonance sensor chip with the sensor surface being in contact with the sample; a light irradiating means for irradiating the sensor surface with light from a predetermined direction in a state where the surface plasmon resonance sensor chip is held by the holding means; a light receiving means for receiving light reflected from each of the diffraction grating surfaces; and a measuring means for measuring the intensity of the light reflected by each of the diffraction grating surfaces and received by the light receiving means. The apparatus further comprises a determining means and an analyzing means, for analyzing the sample based on the reflected light received by the light receiving means. The determining means determines, for each of the reaction areas and the non-reaction areas, the variation between the intensity, measured by the measuring means, of the reflected light due to each of the diffraction grating surfaces and the intensity of the light reflected when any sample is not in contact with the sensor surface; and the analyzing means selects, for each of the reaction areas and the non-reaction areas, a diffraction grating surface whose determined variation of the reflected light intensity is within a predetermined allowable range for determination, and for quantitatively and/or qualitatively analyzes the sample based on the variation of the reflected light intensity of the selected reaction area and the variation of the reflected light intensity of the selected non-reaction area.

A ninth analysis method measures the variation in the intensity of reflected light and then analyzes a sample based on the variation amount. The method employs a surface plasmon resonance sensor chip formed as follows on the sensor chip: such diffraction grating surfaces are arranged in a direction perpendicular to the groove orientation, and the sensor chip further comprises a cover for covering the sensor surface, and flow channels formed side by side between the sensor surface and the cover so as to pass along the direction in which the diffraction grating surfaces are arranged. This analysis method comprises the steps of: assigning different samples one to each of the flow channels, and letting each of the samples flow through the respective flow channel while irradiating the sensor surface with light at a predetermined incident angle; receiving light reflected from the sensor surface and measuring the intensity of the light reflected by each of the diffraction grating surfaces; determining the variation between the measured intensity of the reflected light due to each of the diffraction grating surfaces and the intensity of the light reflected when any sample does not flow through each of the flow channel; selecting, for each of the flow channels, a diffraction grating surface whose determined variation of the reflected light intensity is within a predetermined allowable range for determination, and quantitatively and/or qualitatively analyzing each sample flowing through the respective flow channel, based on the variation of the reflected light intensity of the selected diffraction grating surface for each of the flow channels.

With this method, not only similar effects to those of the sixth analysis method but also the following advantages can be attained. Different kinds of samples are analyzed simultaneously, thus realizing effective analysis. In addition, since the different samples are analyzed under an identical condition, it is possible to make the difference among the samples clear.

This analysis method is realized by an analysis apparatus constructed as follows. The apparatus comprises: a holding means for holding such a second surface plasmon resonance sensor chip; a sample introducing means for assigning different samples one to each of the flow channels, and for introducing each of the samples into the respective flow channel in a state where the surface plasmon resonance sensor chip is held by the holding means; a light irradiating means for irradiating the sensor surface with light from a predetermined direction in a state where each sample is introduced into the respective flow channel by the sample introducing means; a light receiving means for receiving light reflected from each of the diffraction grating surfaces; a measuring means for measuring the intensity of the light reflected by each of the diffraction grating surfaces and received by the light receiving means. The apparatus further comprises a determining means and an analyzing means, for analyzing the sample based on the reflected light received by the light receiving means. The determining means determines the variation between the intensity, measured by the measuring means, of the reflected light due to each of the diffraction grating surfaces and the intensity of the light reflected when any sample does not flow through the flow channels; and the analyzing means selects, for each of the flow channels, a diffraction grating surface whose variation, determined by the determining means, of the reflected light intensity is within a predetermined allowable range for determination, and quantitatively and/or qualitatively analyzes each sample flowing through the respective flow channel based on the variation of the reflected light intensity of the diffraction grating surface selected for each of the flow channels.

A 10th analysis method measures the variation in the intensity of reflected light and then analyzes a sample based on the variation amount. The method employs a surface plasmon resonance sensor chip formed as follows. On the sensor chip, diffraction grating surfaces are arranged in a direction perpendicular to the groove orientation. The sensor chip further comprises: a cover for covering the sensor surface; and flow channels formed side by side between the sensor surface and the cover so as to pass along the direction in which the diffraction grating surfaces are arranged. Along each of the flow channels, each of the diffraction grating surfaces has a reaction area, within which the binding substance is immobilized, and a non-reaction area, within which a substance that does not bind specifically to any target species in the sample is immobilized or, alternatively, any substance is not immobilized. This analysis method comprises the steps of: assigning different samples one to each of the flow channels, and letting each of the samples flow through the respective flow channel while irradiating the sensor surface with light at a predetermined incident angle; receiving the light reflected from the sensor surface and measuring the intensity of the light reflected by each of the diffraction grating surface; determining, for each of the reaction area and the non-reaction area, the variation between the measured intensity of the reflected light due to each of the diffraction grating surfaces and the intensity of the light reflected when any sample does not flow through the flow channels; selecting, for each of the flow channels and for each of the reaction areas and the non-reaction areas, a diffraction grating surface whose determined variation of the reflected light intensity is within a predetermined allowable range for determination, and quantitatively and/or qualitatively analyzing each sample flowing through the respective flow channel, based on the variation of the reflected light intensity of the selected reaction area and the variation of the reflected light intensity of the selected non-reaction area.

With this method, not only similar effects to those of the sixth analysis method but also the following advantages can be attained. Different kinds of samples are analyzed simultaneously, thus realizing effective analysis. In addition, since the different samples are analyzed under an identical condition, it is possible to make the difference among the samples clear. Furthermore, since the analysis is performed based on the groove pitch of a reaction area and that of a non-reaction area, it is possible to accurately analyze changes in target species caused by reactions for each of the flow channels separately.

This method is realized by an analysis apparatus constructed as follows. The apparatus comprises: a holding means for holding such a second surface plasmon resonance sensor chip; a sample introducing means for assigning different samples one to each of the flow channels, and for introducing each of the plural samples into the respective flow channel in a state where the surface plasmon resonance sensor chip is held by the holding means; a light irradiating means for irradiating the sensor surface with light from a predetermined direction in a state where each sample is introduced into the respective flow channel by the sample introducing means; a light receiving means for receiving light reflected from the sensor surface; and a measuring means for measuring the intensity of the light reflected by each of the diffraction grating surfaces and received by the light receiving means. The apparatus further comprises a determining means and an analyzing means, for analyzing the sample based on the light received by the light receiving means. The determining means determines, for each of the reaction areas and the non-reaction areas, the variation between the intensity, measured by the measuring means, of the reflected light due to each of the diffraction grating surfaces and the intensity of the light reflected when any sample does not flow through the flow channels; and the analyzing means selects, for each of the flow channels and for each of the reaction areas and the non-reaction areas, a diffraction grating surface whose variation, determined by the determining means, of the reflected light intensity is within a predetermined allowable range for determination, and quantitatively and/or qualitatively analyzes each sample flowing through the respective flow channel, based on the variation of the reflected light intensity of the selected reaction area and the variation of the reflected light intensity of the selected non-reaction area for each of the flow channels.

As a preferred feature, each of the foregoing methods further comprises the step of separating the sample by physical and/or chemical action prior to introducing the sample to the surface plasmon resonance sensor chip.

With this feature, it is possible to appropriately remove impurities, if any, other than target species contained in the sample before analysis, so that only pure target species can be subject to the analysis. As a consequence, the accuracy of the analysis is improved.

At that time, if combined with detecting techniques (absorbance detection, fluorescence detection, chemiluminescence detection, differential refract meter detection, electrochemical detection, etc.) that are commonly used in these analyzing means, it is possible to perform the following determination at the same time: determination of the presence amount of various substances; and determination of target species by measuring reactions unique to the target species.

This analysis method is implemented by an analysis apparatus which has, in addition to the construction as described above, a sample separating means for separating the sample by physical and/or chemical action prior to introducing the sample to the surface plasmon resonance sensor chip.

The following separation techniques preferably serve as such sample separating means: liquid chromatography; HPLC (High Performance Liquid Chromatography); capillary electrophoresis; microchip electrophoresis; and methods using flow injection or microchannels.

As a preferred feature, if the target species is a light-emitting substance, the method further comprises the step of detecting light emitted from the light-emitting substance that is bound to the binding substance prior to light-irradiating the sensor surface or, alternatively, after light-irradiating the sensor surface and receiving the reflected light. In the step of quantitatively and/or qualitatively analyzing, the sample is analyzed with consideration given to the detection result of the light emission.

With this feature, light-emitting phenomena as well as surface plasmon resonance can be utilized in the analysis. The extremely high sensitivity of light-emitting phenomena, such as fluorescence and phosphor, enables detection of minute reactions.

This analyzing means can be implemented by an analysis apparatus that has, in addition to the construction as described above, the following construction: when the target species is a light-emitting substance, the light receiving means detects light emitted from the light-emitting substance that is bound to the binding substance, and the analyzing means quantitatively and/or qualitatively analyzes the sample with consideration given to the detection result of the light emission by the light receiving means.

In addition to the foregoing first and second surface plasmon resonance sensor chips, another type of surface plasmon resonance sensor chip with the following construction realizes diffraction gratings having distributed groove pitches when viewed from the incident direction of the incident light. This surface plasmon resonance sensor chip (a third sensor chip) comprises: a metal layer along whose surface a surface plasmon wave can be induced by light irradiation; and a diffraction grating curved surface disposed in the vicinity of the metal layer, which diffraction grating curved surface has a diffraction grating with a uniform groove orientation and a uniform groove pitch so as to generate an evanescent wave upon light irradiation. The diffraction grating curved surface has a curved surface form in a convex shape whose light-irradiated side bulges out, and is disposed so as to be perpendicular to a specific plane, which is perpendicular to a predetermined reference plane, and the diffraction grating is formed in such a manner that the groove orientation is perpendicular to the specific plane.

With the thus-constructed sensor chip, when a light beam (parallel light) is emitted from a predetermined direction in parallel to the above-mentioned specific plane, the irradiated light enters onto the diffraction grating surface at distributed angles, depending on inclination angles which are formed between tangent planes at different irradiated positions and the reference plane. The intensity of reflected light obtained at different positions on the diffraction grating surface also reveals distribution. Therefore, it is possible to calculate a resonance angle in real time based on the intensity of reflected light at each position on the diffraction grating surface and a substantial incident angle at the position. In other words, with such a sensor chip, similar effects to those that are attained when a light beam having a predetermined spread angle (to widen or narrow the light) is used are accomplished, without necessity to perform angle scanning or to irradiate a wedge-shaped light beam.

As a preferred feature, the diffraction grating curved surface has a curved surface form in a convex shape whose light-irradiated side bulges out. With this feature, it is possible to prevent crossing of the light reflected from different positions on the diffraction grating surface, thus facilitating analysis of the intensity of light reflected from the diffraction grating surfaces.

As another preferred feature, two or more of such diffraction grating surfaces are prepared. In this case, it is possible to detect resonance angles of the separate diffraction grating surfaces at the same time, by simply irradiating a light beam from a predetermined direction in parallel to the specific plane. Therefore, with use of a binding substance immobilized according to each of the diffraction grating surfaces, simultaneous measurement at different positions is available.

On the above-described third sensor chip, each of the diffraction grating surfaces is disposed along a sensor surface, which comes in contact with a sample. When the third sensor chip is used to quantitatively and/or qualitatively analyze a sample, immobilized binding substances that bind specifically to target species in the sample are employed on the sensor surface. In particular, in a case where a sensor chip for multiple-position simultaneous measurement is used, two or more binding substances each of which binds to a specific target species in the sample are immobilized in association with each of the diffraction grating surfaces, thus making it possible to assess two or more target species simultaneously.

Next, another type of surface plasmon resonance sensor chip (a fourth sensor chip) has a resonance area, formed on its sensor surface, for causing a resonance phenomenon of a surface plasmon wave, which is induced along the surface of the metal layer, and an evanescent wave, which is generated by the action of the diffraction grating, upon light irradiation. The resonance area has continuous areas discretely formed on the sensor surface, and at least one of the continuous areas has a diffraction grating whose groove pitch or/and whose groove orientation is different from those of the remaining continuous areas. Here, the above-mentioned continuous areas are defined as a set of areas that are considered to be continuously arranged on the same plane from the viewpoint of whether or not a resonance phenomenon occurs.

With this construction, when viewed from a predetermined direction the diffraction grating has substantially distributed groove pitches, and in each of the continuous areas, an evanescent wave is induced that has the number of waves and an angular frequency corresponding to the substantial groove pitch. As a result, resonance phenomena occur at two or more resonance points that reveal different angular frequencies, for one single surface plasmon wave.

Further, still another type of surface plasmon resonance sensor chip (a fifth sensor chip) has resonance areas continuously formed on its sensor surface, in which area a resonance phenomenon occurs between a surface plasmon wave, which is induced along the surface of the metal layer, and an evanescent wave, which is generated by the action of the diffraction grating, upon light irradiation. The resonance areas are continuously formed on the sensor surface, and in the diffraction gratings the grooves are oriented along a uniform direction at groove pitches with a continuous or discontinuous distribution. Here, the above-mentioned "continuous distribution" means a condition where every groove is spaced from its adjacent one at a slightly different distance so that the distance between every pair of grooves adjacent to each other gradually increases or decreases in a certain direction. Meanwhile, the above-mentioned "discontinuous distribution" means a condition where the inter-groove distance is changed in a step-like form between at least one pair of adjacent grooves.

With this sensor chip, it is possible to obtain an evanescent wave with the number of waves and an angular frequency corresponding to the groove pitch at each position on the continuous areas. As a result, resonance phenomena occur at two or more resonance points with different angular frequencies for one single surface plasmon wave.

When a foregoing fourth or fifth sensor chip is used to quantitatively and/or qualitatively assess a sample, immobilized binding substances (substances which can capture target species as a result of interaction such as antigen-antibody reaction, complementary DNA bonding, receptor-ligand interaction, enzyme-substrate interaction) which binds specifically to target species (chemical species, biochemical species, or biological species, etc.) in the sample are employed on the sensor surface. Then the sample is analyzed in accordance with the analysis method comprising a light-irradiating step, a detecting step, and an analyzing step, as described below.

The light-irradiating step makes the sample in contact with a sensor surface while irradiating the sensor surface with light from a predetermined direction. The detecting step receives light reflected from a resonance area and detects a resonance phenomenon in the resonance area based on the intensity of the thus-received reflected light. The analyzing step quantitatively and/or qualitatively analyzes the sample based on the substantial groove pitch of the diffraction grating, viewed from the incident light direction at a position where a resonance phenomenon is detected. Here, the above steps can be performed in the order of description, or alternatively, they can be performed simultaneously. In the latter case, particularly, it is possible to monitor in real time how target species bind to binding substances.

The above analysis method is realized by an analysis apparatus constructed as follows. The apparatus comprises: a holding means for holding the surface plasmon resonance sensor chip with the sensor surface being in contact with a sample; a light irradiating means for emitting a light beam toward a resonance area of the sensor chip in a state where the surface plasmon resonance sensor chip is held by the holding means; and a light receiving means for receiving light reflected from the resonance area.

The apparatus further includes a detecting means and an analyzing means, for analyzing the sample based on the reflected light received by the light receiving means. The detecting means detects a resonance phenomenon in the resonance area based on the intensity of the thus-received reflected light. The analyzing step quantitatively and/or qualitatively analyzes the sample based on the substantial groove pitch of the diffraction grating, viewed from the incident light direction at a position where a resonance phenomenon is detected.

As a preferred feature, in the above analyzing step, the quantitative and/or qualitative analysis of the sample is performed based on the substantial groove pitch of the diffraction grating, viewed from the incident light direction at a position where a resonance phenomenon is detected, and also on the intensity of reflected light detected at the position where a resonance phenomenon is detected. In this case, the analysis apparatus needs to be provided with a analyzing means for quantitatively and/or qualitatively analyzing the sample based on the substantial groove pitch in the diffraction grating, viewed from the incident light direction at a position where a resonance phenomenon is detected, and also on the intensity of reflected light detected at the position where a resonance phenomenon is detected.

Further, as another preferred feature, in the above irradiating step, a light beam of a single wavelength can be emitted at a predetermined incident angle. In this case, the analysis apparatus needs to have a light irradiating means for emitting a light beam of a single wavelength at a predetermined incident angle. Using the foregoing surface plasmon sensor chip, it is still possible to detect a resonance point, where a resonance phenomenon occurs, with such a simple optical system. At this time, it is particularly preferred to use a surface plasmon resonance chip with a continuous groove pitch distribution.

### Brief Description of the Drawings

FIG. 1 is an oblique perspective diagram showing the constitution of a sensor chip according to the first embodiment of the present invention;
FIG. 2 is an oblique perspective diagram showing the constitution of a substantial part of the sensor chip of FIG. 1;
FIG. 3 is an oblique perspective diagram illustrating the state where a binding substance is immobilized on the sensor chip of FIG. 1;
FIG. 4 is an oblique perspective diagram illustrating an example of a method for making the sensor chip of FIG. 1, (a)-(c) each indicating making processes in sequence;
FIG. 5 is a diagram showing the constitution of an analysis apparatus according to the first embodiment of the present invention;
FIG. 6 is an oblique perspective diagram showing the constitution of a substantial part of a sensor chip according to the second embodiment of the present invention;
FIG. 7 is an oblique perspective diagram showing the constitution of a substantial part of a sensor chip according to the third embodiment of the present invention;
FIG. 8 is an oblique perspective diagram illustrating the state where a binding substance and a non-binding substance are immobilized on a sensor chip according to the fourth embodiment of the present invention;
FIG. 9 is a diagram showing the constitution of an analysis apparatus according to the fifth embodiment of the present invention;
FIG. 10 is an oblique perspective diagram showing the constitution of a substantial part of a sensor chip according to the seventh embodiment of the present invention;
FIG. 11 is a diagram showing the constitution of an analysis apparatus according to the seventh and tenth embodiments of the present invention;
FIG. 12 is an oblique perspective diagram showing the constitution of a sensor chip according to the eighth embodiment of the present invention;
FIG. 13 is an oblique perspective diagram showing the constitution of a sensor chip according to the ninth embodiment of the present invention;
FIG. 14 is an oblique perspective diagram showing the constitution of a sensor chip according to the tenth embodiment of the present invention;
FIG. 15 is an oblique perspective diagram showing a sensor chip according to the eleventh embodiment of the present invention;
FIG. 16 is an oblique perspective diagram illustrating the state where a binding substance is immobilized on the sensor chip of FIG. 15;
FIG. 17 is a dispersion relationship diagram showing optical properties of the sensor chip of FIG. 15;
FIG. 18 is an oblique perspective diagram illustrating an example of a method for making the sensor chip of FIG. 15, (a)-(c) each indicating making processes in sequence;
FIG. 19 is an oblique perspective diagram showing a modification of the sensor chip of FIG. 15;
FIG. 20 is a diagram showing an analysis apparatus according to an embodiment of the present invention;
FIG. 21(a) is an oblique perspective diagram showing a sensor chip according to the twelfth embodiment of the present invention, and FIG. 21(b) is a schematic diagram for illustrating a sensor chip of the present invention;
FIG. 22 is an oblique perspective diagram showing a sensor chip according to the thirteenth embodiment of the present invention;
FIG. 23 is a diagram showing an analysis apparatus according to the fourteenth embodiment of the present invention;
FIG. 24 is an oblique perspective diagram showing a sensor chip according to the fifteenth embodiment of the present invention;
FIG. 25 is a diagram showing an analysis apparatus according to the fifteenth embodiment of the present invention;
FIG. 26(a) and FIG. 26(b) are elevational views each illustrating a sensor chip according to the sixteenth embodiment of the present invention;
FIG. 27(a), FIG. 27(b), and FIG. 27(c) are schematic diagrams each for illustrating a sensor chip according to the sixteenth embodiment of the present invention;
FIG. 28(a), FIG. 28(b), and FIG. 28(c) are plane views each showing a sensor chip according to the seventeenth embodiment of the present invention;
FIG. 29 is an oblique perspective diagram each showing a sensor chip according to the eighteenth embodiment of the present invention;
FIG. 30 is an oblique perspective diagram showing a sensor chip according to the nineteenth embodiment of the present invention;
FIG. 31 is a diagram showing the distribution of groove pitches on the sensor chip of FIG. 30;
FIG. 32 is a dispersion relationship diagram showing optical properties of the sensor chip of FIG. 30;
FIG. 33 is a plane view showing a sensor chip according to the twentieth embodiment of the present invention;
FIG. 34 is an oblique perspective diagram showing a modification of the arrangement pattern of diffraction grating surfaces according to the sensor chip of FIG. 1;
FIG. 35 is an oblique perspective diagram showing another modification of the arrangement pattern of diffraction grating surfaces according to the sensor chip of FIG. 1;
FIG. 36 is an oblique perspective diagram showing another modification of arrangement pattern of diffraction grating surfaces according to the sensor chip of FIG. 1;
FIG. 37 is an oblique perspective diagram showing a modification of the sensor chip shown in FIG. 19;
FIG. 38 is an oblique perspective diagram showing another embodiment of a sensor chip of the present invention;
FIG. 39 is an oblique perspective diagram showing a sensor chip according to the first example of the present invention;
FIG. 40 is an oblique perspective diagram showing another sensor chip according to the first example of the present invention;
FIG. 41 is a graph showing the incident angle of incident light and reflected light intensity according to the first example of the present invention;
FIG. 42 is another graph showing the incident angle of incident light and reflected light intensity according to the first example of the present invention;
FIG. 43 is a graph showing the ethanol concentration of ethanol aqueous solution and the shift amount of resonance angle according to the third example of the present invention;
FIG. 44 is another graph showing the ethanol concentration of ethanol aqueous solution and the shift amount of resonance angle according to the third example of the present invention;
FIG. 45 is a graph showing the ethanol concentration of ethanol aqueous solution and reflected light intensity according to the fourth example of the present invention;
FIG. 46 is another graph indicating the ethanol concentration of ethanol aqueous solution and reflected light intensity according to the fourth example of the present invention;
FIG. 47 is an oblique perspective diagram showing a sensor chip according to the fifth example of the present invention;
FIG. 48 is a graph showing the results of the first example;
FIG. 49 is another graph showing the results of the first example;
FIG. 50(a) and FIG. 50(b) are graphs each showing the results of the second example;
FIG. 51 is a dispersion relationship diagram showing properties of the conventional sensor chip; and
FIG. 52(a) is a diagram showing the optical system of the conventional angle-varying type analysis apparatus, and FIG. 52(b) is a magnified diagram showing a light-irradiated state of a sensor chip.

### Best Mode for Carrying Out the Invention

In the following, embodiments of the present invention will be described with reference to the figures.

### (A) First Embodiment

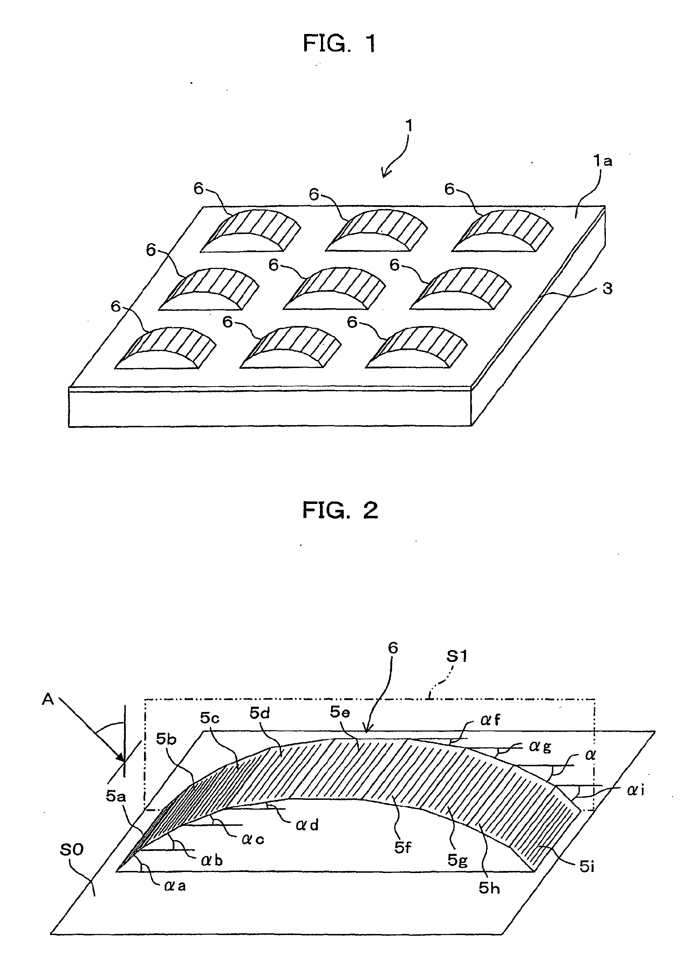

At first, the first embodiment of the present invention is described with reference to FIGs. 1-5.

As shown in FIG. 1, the sensor chip according to the present embodiment (surface plasmon resonance sensor chip) 1 is laminated with a metal layer 3 on its surface (sensor surface) 1a, and partly on the metal layer 3, plural diffraction areas 6 are disposed in plural positions, respectively. A diffraction grating is formed within each of the diffraction areas 6. In the present embodiment, each diffraction area 6 within which a diffraction grating is formed is used as a measurement spot during analysis by multipoint simultaneous measurement.

FIG. 2 is an oblique perspective diagram showing a measurement spot 6 under magnification. As shown in FIG. 2, plural planes (hereinafter called diffraction grating surfaces) 5a-5i are concentratedly disposed in the measurement spot 6, and a diffraction grating is formed within each of the diffraction grating surfaces. If the remaining surface of the metal layer 3 other than the measurement spots 6 is assumed as a reference plane S0, each of the diffraction grating surfaces 5a-5i is disposed so as to be perpendicular to a specific plane S1, which is perpendicular to the reference plane S0, and so as to form a predetermined inclination angle αa-αi with the reference plane S0. In the diffraction grating surfaces 5a-5i, diffraction gratings having the same shape (the same groove depth, the same groove pitch) are formed in such a manner that the groove orientation of the diffraction gratings is perpendicular to the specific plane S1.

In this embodiment, the central diffraction grating surface 5e is disposed in parallel with the reference plane S0, while the remaining diffraction grating surfaces 5a-5d, 5f-5i are arranged in such a manner that the inclination angles that these diffraction grating surfaces 5a-5d, 5f-5i form with the reference plane S0 gradually increase with distant from the center. Put it another way, when viewed from a direction A parallel to the specific plane, the diffraction grating surfaces 5a-5d, 5f-5i are positioned in decreasing order of the inclination angles that the diffraction grating surfaces 5a-5d, 5f-5i form with the reference plane S0 (i.e., αa > αb > αc > αd > αe (αe=0) > αf > αg > αh > αi). The diffraction grating surfaces 5a-5i are also arranged in such a manner that two adjacent diffraction grating surfaces are positioned continuously.

With this structure, when the sensor surface 1a of the sensor chip 1 is irradiated with light, the irradiation light is diffracted at each of the measurement spots 6 on the sensor surface 1a, and this diffraction phenomenon generates an evanescent wave. In this case, the substantial incident angles at each measurement spot 6 differ among the diffraction grating surfaces 5a-5i. In FIG. 2, when the incident angle that the irradiation light forms with the reference plane S0 is assumed as θ, actual incident angles on the diffraction grating surfaces 5a-5i are represented in turn, from the diffraction grating surface 5a positioned at the end of the light-irradiated side, as θ-αa, θ-αb, θ-αc, ···, θ-αi. Since the incident angles of the irradiation light thus differ among the diffraction grating surfaces 5a-5i, the wave number of the evanescent wave generated by diffraction phenomenon becomes different among the diffraction grating surfaces 5a-5i. Further, when the irradiation light affects the metal layer 3 to thereby produce resonance (SPR) with a surface plasmon wave, the degree of the resonance (SPR) along the surface of the metal layer 3 also differs accordingly among the diffraction grating surfaces 5a-5i.

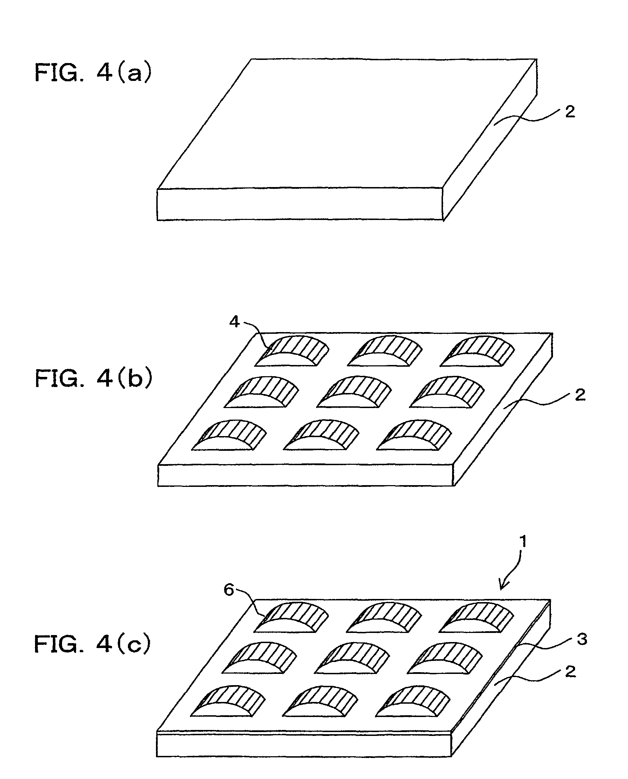

It is possible to make the sensor chip 1 by the following processes. Using a substrate 2 shown in FIG. 4(a), the first process is, as shown in FIG. 4(b), to form plural uneven surfaces 4 each of which has uneven form in plural positions, respectively, partly on the substrate surface by laser processing or the like. The second process is, as shown in FIG. 4(c), to laminate all over the surface of the substrate 2 with a metal layer 3 by sputtering, vapor deposition, or the like. Since the metal layer 3 is layered on the uneven surfaces 4, the surface of the metal layer 3 also has uneven surfaces thereon. These uneven surfaces on the the metal layer 3 surface function as diffraction grating surfaces, and each of diffraction areas having the uneven surfaces 4 formed therein are used as a measurement spot 6.

The material used for the substrate 2 is not limited as long as it allows the uneven surfaces 4 to be formed on its surface and as it possesses adequate mechanical strength to hold the metal layer 3. Resins are desirable in the point that the uneven surfaces 4 are easily formable. Preferable materials include acrylic resin (such as poly(methyl methacrylate)), polyester resin (such as polycarbonate), and polyolefin.

The material used for the metal layer 3 is not limited as long as it can induce a surface plasmon wave. Examples of the usable material include gold, silver, copper, aluminum, alloies containing one or more of the preceding metals, and oxides of silver, copper, and aluminum. Among above, silver is preferable in respect of sensitivity and inexpensiveness, while gold is preferable in point of stability. The thickness of the metal layer 3 is preferably between 20-300 nm, more preferably between 30-160 nm. If the thickness of the metal layer 3 is too small, the irradiation light passes through the metal layer 3 and reaches the surface of the substrate 2, and may be diffracted by the uneven surfaces 4 on the surface of the substrate 2. In this case, the uneven forms of the uneven surfaces 4 may also function as diffraction gratings.

It is possible to form the uneven surfaces 4 on the substrate 2 not only by laser processing as mentioned above, but also by injection-molding into a metal mold having a predetermined uneven form, which mold can be made by an ion beam, to integrally mold uneven surfaces 4 with the substrate 2. Alternatively, it is also possible to form desired uneven surfaces 4 by forming a plane, which have an angle of inclination but does not have uneven form, on the surface of the substrate 2 in advance, and then pasting a permeable uneven film on the plane. In addition, it is also possible to form desired uneven surfaces 4 by processing the plane using microcutting technique or by microcontact-printing PDMS (poly(dimethylsiloxane)) on the plane to thereby form uneven form having projections and depressions.

When making the uneven form of the uneven surfaces 4, it is required to consider the thickness of the metal layer 3 or the likes in such a manner that when the metal layer 3 is layered, a desired diffraction grating is obtained on the surface. The uneven form can be a square-wave form, a sine-wave form, a saw-tooth form, etc., preferably a cyclic uneven form whose diffraction grating has a groove depth (from the top to the bottom) of between 10-200nm (more preferably, between 30-120nm) and a groove pitch (a cycle: a distance from a protrusion to an adjacent protrusion in the uneven form) of between 400-1200nm (which value relates to the wavelength of the irradiation light).

The number of diffraction grating surfaces formed in each measurement spot 6 is within the range from 2 to 100, preferably within the range from 5 to 50. The inclination angle each diffraction grating surface forms with the reference plane is within the range from -10 to 10 degrees, preferably within the range from -5 to 5 degrees, more preferably within the range from -3 to 3 degrees. The variation of the inclination angle between each two adjacent diffraction grating surfaces is within the range from 0.001 to 1 degree, preferably within the range from 0.01 to 0.5 degree.

The size of each diffraction grating surface depends on the number of the measurement spots 6. When each diffraction grating surface has a rectangular shape, the short side is within the range from 5µm to 20mm, preferably within the range from 20µm to 5mm. When each diffraction grating surface has a round shape, the diameter is within the range from 5µm to 20mm, preferably within the range from 20µm to 5mm. The measurement spots 6 are to be formed in a density of between 0.1-1,000,000 spots/cm², preferably between 1-100,000 spots/cm². Such a density allows multipoint simultaneous measurement of between 1-10,000,000 measurement spots 6 per single chip.

Then, a method for using the sensor chip 1 according to the present embodiment is described.

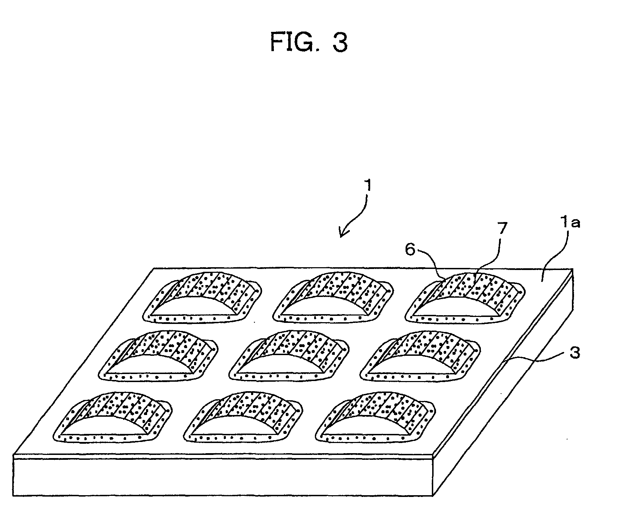

When using the sensor chip 1 for sample analysis, the first process is, as shown in FIG. 3, to immobilize a binding substance 7 on each measurement spot 6. The binding substance 7 is a substance that has the property of binding specifically to a specific substance by some interaction such as antigen-antibody reaction, complementarily binding of DNA, receptor-ligand interaction, or enzyme-substrate interaction. The binding substance 7 is selected in accordance with a target species to be detected (chemical species, biochemical species, biological species, etc.). When the sample contains plural target species, plural binding substance 7 are selected according to the plural target species, respectively, and immobilized on different measurement spots 6.

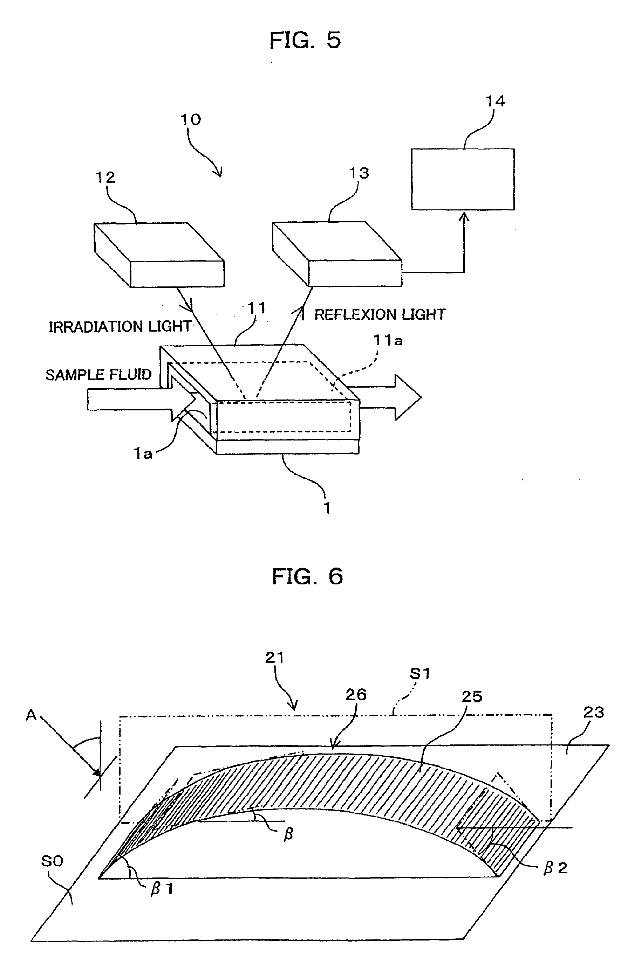

Then, the next process is to set the sensor chip 1, on which the binding substance 7 is immobilized, to an analysis apparatus 10 having the constitution as shown in FIG. 5, so as to carry out analysis. The analysis apparatus 10 is constituted basically of a holder 11 for holding the sensor chip 1 fixedly, a light source 12, a light detector 13, and an analysis unit 14.

The holder 11 has a flow channel 11a formed thereon, through which a sample fluid containing a target species passes. The sensor chip 1 is disposed and fixed in such a manner that the sensor surface 1a is in contact with the sample flowing through the flow channel 11a.

The light source 12 is disposed opposite to the sensor chip 1 across the flow channel 11a so as to irradiate the sensor surface 1a of the sensor chip 1 with light. The light source 12 is adjusted such as to light-irradiate in a direction that is parallel with the specific plane S1 and that forms a predetermined incident angle θ with the reference plane S0. It is preferable to adjust the incident angle θ in such a manner that among the individual lights reflected by the diffraction grating surfaces 5a-5i, the light reflected by the diffraction grating surface 5a with the minimum incident angle has the minimum intensity. As the light source 12, it is desirable to use a laser light source that emits monochromatic light, and specifically, a semiconductor laser in respect of cost and size. The wavelength of the light source 12 is preferably on the order of 350-1300nm. It is also possible to spectrally separate white light, which is emitted from a halogen tungsten lamp or others, using interference filter, spectroscope, or the like to thereby obtain monochromatic light for the light source purpose.

The light detector 13 is a detector for detecting the reflection light from the sensor chip 1, disposed opposite to the sensor chip 1 across the flow channel 11a, as is the light source 12. As the light detector 13, it is desirable to use, for example, integrated CCD elements, a silicon photodiode array, etc. In addition, although not illustrated in the figure, a polarizer is disposed between the light source 12 and the sensor chip 1 or between the sensor chip 1 and the light detector 13 so as to polarize the irradiation light from the light source 12 or the reflection light from the sensor chip 1, since only polarized light P can cause resonance with a surface plasmon wave.

The analysis unit 14 is a unit for carrying out analysis processing based on the detection data from the light detector 13. The analysis unit 14 functions as calculating means or measuring means and also as analyzing means according to the present invention. The following description is given to the detailed explanation of the individual functions of the analysis unit 14, and also to a sample analysis procedure using the sensor chip 1 according to the present embodiment. The explanation is made individually for the following two cases: the case where the resonance angle is calculated and the sample analysis is carried out based on the resonance angle; and the case where the variation of the reflection-light intensity is measured and the sample analysis is carried out based on the variation of the reflection-light intensity.

In the case where the sample analysis is carried out based on the resonance angle, the first process is to set the sensor chip 1 to the holder 11 and to make the sensor surface 1a of the sensor chip 1 in contact with the sample (Step A1). The binding substance 7 imobilized on the individual measurement spot 6 of the sensor surface 1a thereby comes to bind specifically to the target species contained in the sample fluid. According to the amount of substance of the target species bound to the binding substance 7, the refractive index of a medium adjacent to the metal layer 3 surface on each measurement spot 6 changes, and conditions under which the resonance of a surface plasmon wave occurs at each measurement spot 6 also change accordingly.

The second process is to irradiate the sensor surface 1a with light from the light source 12 (step A2). At the time, the area of the irradiation light is adjusted such that the irradiation light illuminates all the measurement spots 6. The irradiation light entered to the sensor surface 1a produces diffraction lights on the individual diffraction grating surfaces 5a-5i disposed in each measurement spot 6. Among these diffraction lights, the light detector 13 detects the diffraction light of the 0th-order (reflection light), and measures the intensity of the reflection light detected (step A3). Thus the light detector functions as both light receiving means and measuring means.

Data about the reflection light detected by the light detector 13 is send to the analysis unit 14. From the data about the reflection light sent from the light detector 13, the analysis unit 14 extracts data about the intensity of the light reflected from each measurement spot 6 on which a binding substance 7 is imobilized, and detects the intensity of the reflection light for each diffraction grating surface 5a-5i of the individual measurement spots 6. Based on the intensity of the reflection light due to each diffraction grating surface 5a-5i, the resonance angle is calculated for each measurement spot 6. Specifically, the diffraction grating surface whose reflection light has the minimum intensity is selected for each measurement spot 6, and the actual incident angle on the selected diffraction grating surface (the difference angle obtained by subtracting the inclination angle from the incident angle on the reference plane S0) can be treated as the resonance angle. Alternatively, it is also possible to select plural diffraction grating surfaces adjacent to the diffraction grating surface having the minimum reflection-light intensity, and based on both the actual incident angles on the adjacent diffraction grating surfaces and the reflection-light intensities of the adjacent diffraction grating surfaces, to calculate the resonance angle having the minimum reflection-light intensity by interpolation. Of these two methods, the method using interpolation gives more accurate calculation of the resonance angle (step A4-1).

The analysis unit 14 compares the wavelength of the irradiation light and the calculated resonance angle with a working curve (or a theoretical conversion equation for concentration) to thereby analyze the concentration of the target species associated with each measurement spot 6. The working curve is prepared preliminarily based on a test using samples with known concentrations of target species, showing the relation between the concentration of individual target species and each of the resonance wavelength and the resonance angle. By comparing the calculated resonance angle at each measurement spot 6 with the working curve, it is possible to measure the concentration of the target species in the sample fluid (step A5-1).

By carrying out analysis using the method as described above, it becomes possible to calculate the resonance angle at each of the plural measurement spots 6 simultaneously in real-time, thereby real-time analysis of various target species being realized.

When the refractive index of the medium changes so largely (for example, in the case of an enzyme reaction that produces pigmentation or other deposition on the surface, or in the case where some minute particles such as gold colloids are used sensitizing the binding reaction) that the shift of the resonance angle cannot be covered simply by the variation in the angles of the diffraction grating surfaces 5a-5i, it is possible to cope with such situation by altering the angle of the incident light.

On the other hand, in the case where the sample analysis is carried out based on the variation of the reflection-light intensity, after the light reflected from the sensor surface 1a is detected through the process according to the above steps A1 to A3, the analysis unit 14 extracts the data about the light reflected by each measurement spot 6 from the obtained data about the reflection light, and detects the intensity of the reflection light for each of the diffraction grating surfaces 5a-5i of each measurement spot 6. Then, the analysis unit 14 determines the variation of the reflection-light intensity from the state where when any sample is not in contact with the sensor surface 1a, for each of the diffraction grating surfaces 5a-5i (step A4-2).

Subsequently, the analysis unit 14 selects a diffraction grating surface whose variation of the reflection-light intensity is within a predetermined determination range (determination allowable range), in short, a diffraction grating surface that is not out of range, for each of the measurement spots 6. Then, the analysis unit 14 compares the variation between the reflection-light intensity of the selected diffraction grating surface, which is not out of range, and the inclination angle of the diffraction grating surface with a working curve (that is prepared preliminarily based on a test using samples with known concentrations, showing the relation between the incident angle with respect to each diffraction grating surface and the variation of the reflection-light intensity), to thereby analyze the concentration of the target species at each spot 6 (step A5-2).

Since the wave number of the evanescent wave changes according to the incident angle of the irradiation light with respect to the diffraction grating surface, the variation between the reflection-light intensity also changes according to the incident angle. Depending on the incident angle, the variation becomes so large that it exceeds the measurement range of a measuring instrument equipped with the analysis unit 14. Conventionally, to cope with such a situation, it is necessary to alter the incident angle through the readjust of the optical system. Specifically in the case of carrying out the multi-item measurement for plural target species whose concentrations differ greatly, it is required to adjust the incident angle for each of the target species to be measured. However, in the present embodiment, since the sensor chip 1 has plural diffraction grating surfaces 5a-5i with different inclination angles, there is no need to actually alter the incident angle of the irradiation light. It is possible to substantially alter the incident angle simply by selecting another diffraction grating surface. This translates into a substantially enlarged measurement range. As a result, it becomes possible to deal with samples having a wide range of concentrations and therefore reqiring a wide measurement range.

As described above, sample analysis using the sensor chip 1 of the present embodiment has the advantages that it becomes possible to carry out real-time analysis of various target species, and that it is also possible to deal with samples having a wide range of concentrations.

In addition, the analysis apparatus 10 used with the sensor chip 1 is in no need of any driving mechanism for angle scan, and its optical system can be constituted simply of the sensor chip 1, the light source (including a polarizer) 12, and the light detector 13. It therefore offers the advantage that simplification, miniaturization and cost reduction of the apparatus are made possible.

In recent years, particularly in the area of clinical inspection, high importance is placed on PoC, which is characterized by compactness and ease of operation so as to allow on-the-spot inspection at the field of medical treatment. The surface plasmon resonance sensor chip also has been studied for application to immunoassay and the like, although the conventional technique is difficult to expand into PoC in respect of size and cost. However, the present analysis apparatus 10, whose size and cost both can be reduced, is applicable not only to PoC, but also to other areas such as in-home inspection. Moreover, the analysis apparatus 10 is also suitable for HPLC, and can be applied to analysis of blood or urine, analysis of nutritious substances in food, analysis of chemical substances in drainage water, etc.

### (B) Second Embodiment

Next, the second embodiment of the present invention is described with reference to FIG. 6.

The sensor chip 21 according to the present embodiment is identical with that of the first embodiment in its basic constitution. Namely, its surface is covered with metal layer 23, and partly on the metal layer 23, plural diffraction areas (measurement spots) 26 are disposed in plural positions, respectively, within each of which areas a diffraction grating is formed.

In this embodiment, each of the measurement spots 26 has a curved surface 25 (hereinafter called a diffraction grating surface) on which a diffraction grating is formed. When the remaining surface on the metal layer 3 other than the measurement spots 26 is assumed as a reference plane S0, the diffraction grating surface 25 is disposed so as to be perpendicular to a specific plane S1 that is perpendicular to the reference plane S0. The diffraction grating surface 25 forms a convex shape whose side facing the sensor surface 21a bulges out, and the diffraction grating is formed thereon in such a manner that its groove orientation is perpendicular to the specific plane S1.

With this structure, the substantial incident angle with respect to the measurement spot 26 vaeries according to the position on the diffraction grating surface 25. In FIG. 6, when the incident angle of the irradiation light with respect to the reference plane S0 is assumed as θ, the actual incident angle at a position on the diffraction grating surface 25 is represented as θ-β where β is the inclination angle that the reference plane S0 forms with its tangent plane at the position. Since the inclination angle of the tangent plane in contact with the diffraction grating surface 25 varies continuously from β1 (β1>0) to β2 (β2<0) as shown in FIG. 6, the substantial incident angle that the irradiation light forms with the diffraction grating surface 25 also has a continuous distribution from θ-β1 to θ-β2. As a result, the reflection-light intensity obtained at various positions on the diffraction grating surface 25 also has a continuous distribution.

Because of these characteristics, sample analysis using the sensor chip 21 of the present embodiment offers the same advantages as are obtained in the first embodiment, and also offers the advantage that since the substantial incident angle of the irradiation light with respect to the diffraction grating surface 25 has a continuous distribution, the resonance angle can be detected directly without the need of calculations such as approximation or interpolation, thereby analysis with higher precision being possible.

### (C) Third Embodiment

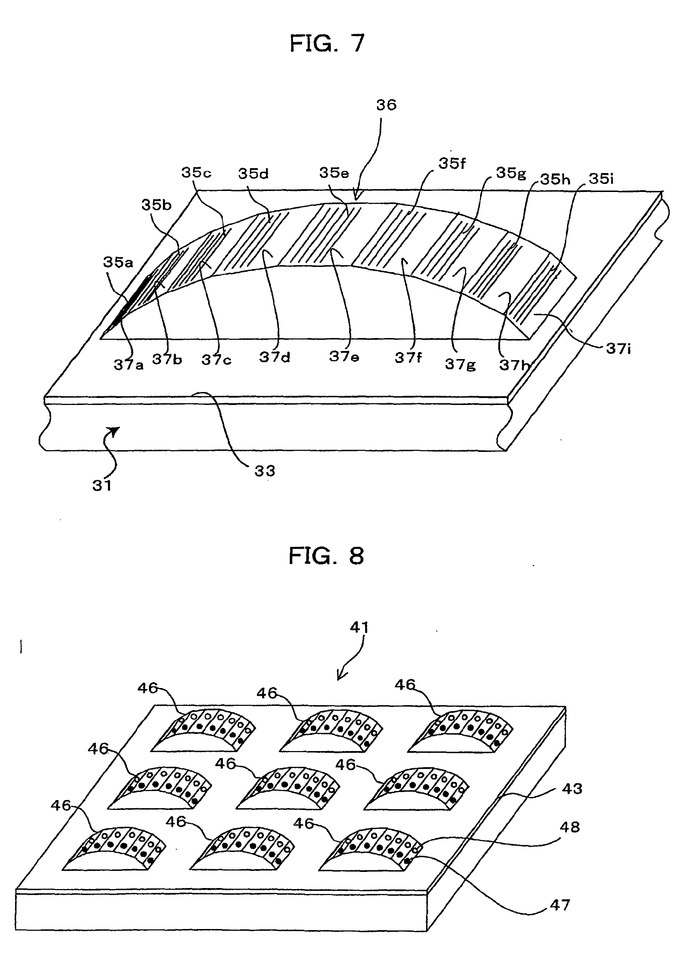

Next, the third embodiment of the present invention is described with reference to FIG. 7.

The sensor chip 31 according to the present embodiment is identical with that of first embodiment in its basic constitution. Namely, its surface is covered with a metal layer 33, and partly on the metal layer 33, plural diffraction areas (measurement spots) 36 are disposed in plural positions, respectively, within each of which areas a diffraction grating is formed.

In this embodiment, each of the measurement spots 36 has diffraction grating surfaces 35a-35i within each of which a diffraction grating is partly formed. Each of the diffraction grating surfaces 35a-35i also has a partial area (hereinafter called non-diffraction surface) 37a-37i within which any diffraction grating is not formed. The remaining constitution is identical with the first embodiment.

With this structure, the reflection light from the individual measurement spot 36 includes the light that has been reflected by the diffraction grating surfaces 35a-35i and whose intensity is therefore reduced due to a surface plasmon resonance (hereinafter called resonance reflected light), and the light that has been reflected by the non-diffraction surfaces 37a-37i and that is not affected by any surface plasmon resonance (hereinafter called reference reflection light).

Because of these characteristics, when carrying out sample analysis method using the sensor chip 31 of the present embodiment, in addition the same steps as in the first embodiment, preferably the method further has the step of correcting the measured intensity of the individual resonance reflection light using the intensity of the reference reflection light from the non-diffraction surface that is on the same diffraction grating area as the individual diffraction grating surface is on. On this account, in addition to the same advantages as are obtained by the first embodiment, it is possible to correct the influence of errors resulting from the difference of surface properties between the diffraction grating surfaces by correction using the intensity of the reference reflection light, thereby analysis with higher precision being realized.

### (D) Fourth Embodiment

Next, the fourth embodiment of the present invention is described with reference to FIG. 8.

The sensor chip 41 according to the present embodiment is identical with that of the first embodiment in its basic constitution. Namely, its surface is covered with a metal layer 43, and partly on the metal layer 43, plural diffraction areas (measurement spots) 46 are disposed in plural positions, respectively, within each of which areas a diffraction grating is formed.

In this embodiment, in addition to the binding substance 47, a non-binding substance 48 is immobilized on each of the measurement spots 46. The non-binding substance 48 is a substance that does not have the properties of binding specifically to the target species to be detected. When plural target species are contained in the sample, it is also preferable that both the binding substance 47 and the non-binding substance 48 are selected for each of the target species and immobilized on different measurement spots 46.

Consequently, the area on which the binding substance is immobilized functions as a reaction area, while the area on which the non-binding substance is immobilized and the area on which either the binding substance or the non-binding substance is not immobilized each function as a non-reaction area. If the metal layer 43 is composed of a metal that does not bind specifically to the target species, it is also preferable that any non-binding substance 48 is not immobilized, and the area on which either the binding substance 47 or the non-binding substance 48 is not immobilized and in which the metal layer 43 is laid bare is used as a non-reaction area.

The remaining constitution is identical with the first embodiment.

With this structure, the reflection light from the individual measurement spot 46 includes the light that has been reflected by the reaction area and the light that has been reflected by the non-reaction area. The reflection light reflected by the reaction area changes according to quantitative and/or qualitative factors in connection with the sample, while the reflection light reflected by the non-reaction area is not affected by the sample and its intensity is determined only by the structure of the diffraction grating surface.

Because of these characteristics, when carrying out sample analysis method using the sensor chip 41 of the present embodiment, in addition the same steps as the first embodiment has, the method further has the step of calculating a resonance angle at which a surface plasmon resonance occurs for each of the reaction area and the non-reaction area, and the step of further calculating a difference resonance angle by subtracting, from the resonance angle of the individual reaction area, the resonance angle of the non-reaction area that is on the same diffraction grating surface as the individual reaction area is on. On this account, since the reflection light from a reaction area where the binding substance binds to the target species can be analyzed using the reflection light from the non-reaction area adjacent to the reaction area as a reference, in addition to the same advantages as are obtained by the first embodiment, it is possible to analyze reliably the change caused by the specific binding of the binding substance to the target species.

### (E) Fifth Embodiment

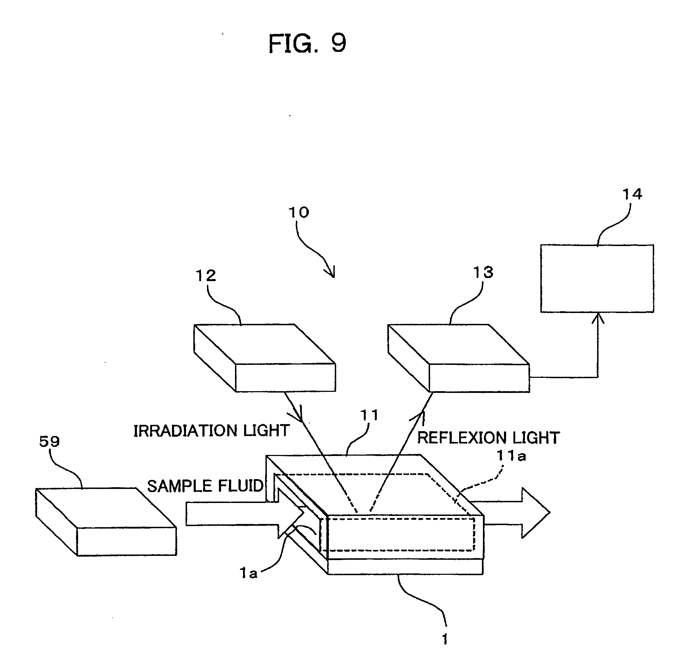

Next, the fifth embodiment of the present invention is described with reference to FIG. 9.

The present embodiment has a structure identical with that of the analysis apparatus 10 of the first embodiment, except that a separation apparatus 59 for separating a sample fluid is disposed upstream of the flow channel 11a, through which the sample fluid flows.

As the separation apparatus 59, it is preferable to use an apparatus that carries out separation by a separation method such as: liquid chromatography or HPLC (high performance liquid chromatography), in which a sample is separated according to adsorptivity or distribution coefficient; capillary electrophoresis or microchip electrophoresis, in which a sample is separated according to electronegativity; flow injection; or microchannel.

The microchannel means a groove which is formed on the surface of some chip and through which a sample flows. It is possible to carry out separation by filling a part of the groove column with an equivalent to a filler of HPLC, or by disposing a functional group on the surface of the groove surface.

The flow injection is a method for causing various reactions on a sample in a state where the sample is flowing. It is possible to carry out separation by, for example, causing complex-forming reaction, and then carrying out solvent extraction and an additional process such as the removal of substances other than the target species in the sample.

It is also possible to install an apparatus other than above in the analysis apparatus as the separation apparatus.

When carrying out analysis using the apparatus, it is possible to separate a sample, which contains a target species such as an enzyme or a protein, into elements with higher purity in advance by the separation apparatus. Consequently, it is possible to analyze the target species in a purer form, thereby analysis with higher precision being made possible.

Further, by adopting a generally used detection method (absorbance detection, fluorescence detection, chemiluminescence detection, differential refract meter detection, electrochemical detection, etc.) as the analyzing means, it becomes possible to carry out both the measurement of the amounts of various substances existing in the sample and the measurement of object species to be detected among these substances by specific reaction at a time.

### (F) Sixth Embodiment

Next, the sixth embodiment of the present invention is described with reference to FIG. 5.

The basic constitution of the present embodiment is identical with that of the first embodiment. Namely, it is constituted in such a manner that the light emmited from the light source 12 is reflected by the sensor chip and detected by the light detecting unit 13.

In this embodiment, the target species is a light-emitting substance, which can produce light such as fluorescence or phosphorescence. Examples of the target species include a light-emitting substance that emits light by reaction with the binding substance, and a light-emitting substance that emits light under excitation by the light supplied from the light source 12. The present embodiment is constituted in such a manner that the light detecting unit 13 can detect the light emitted (emission light).

With this constitution, in addition to the same advantages as are obtained in the first embodiment, the present embodiment offers the additional advantage that it is possible to quantitatively and/or qualitatively analyze the sample using the detection result of the emission light, analysis with higher precision therefore being realized. Chemiluminescence such as fluorescence, in particular, is highly sensitive and is therefore especially useful to detect minute reaction.

### (G) Seventh Embodiment

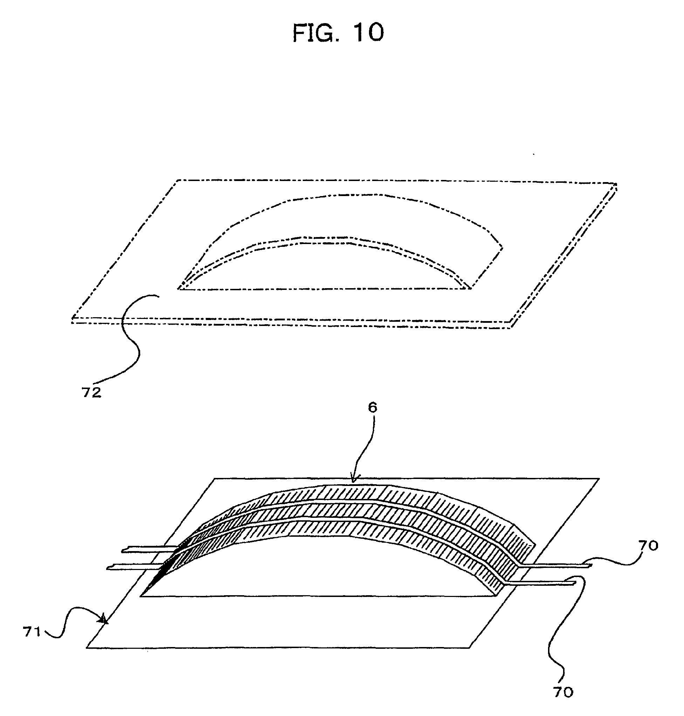

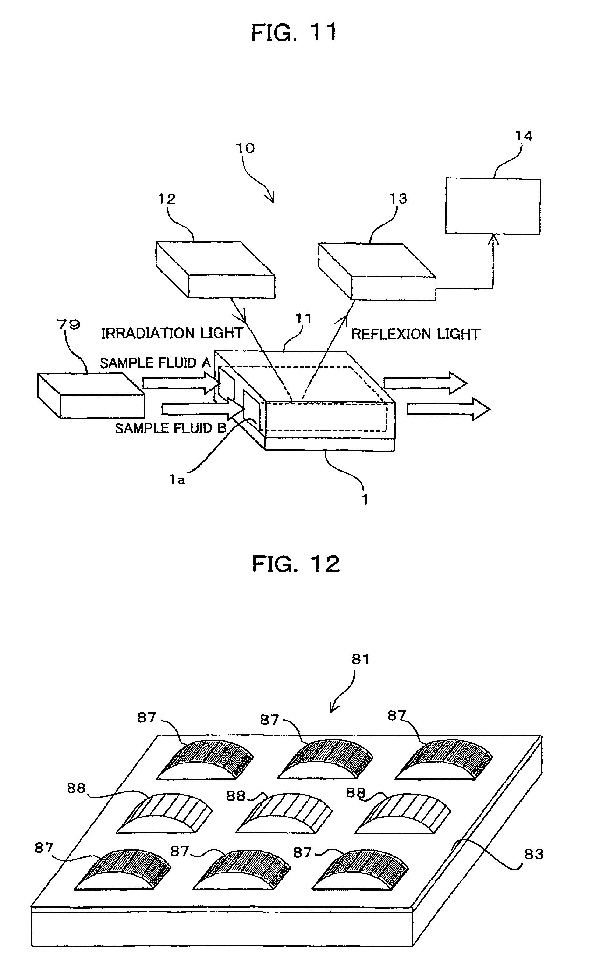

Next, the seventh embodiment of the present invention is described with reference to FIGs. 10 and 11.

The basic constitution of the present embodiment is identical with that of the first embodiment. Namely, it is constituted in such a manner that the light emitted from the light source 12 is reflected by the sensor chip 71 and detected by the light detecting unit 13.

As shown in FIG. 10, this embodiment has plural flow channels 70, through each of which a sample flows, laid in a direction orthogonal to an uneven surface being a diffraction grating. The flow channels 70 are disposed between a cover 72 covering the surface of the sensor chip 71 and the sensor chip 71, and are formed in such a manner that they pass in pairs on each measurement spot 6 on the sensor chip 71. Interstices between each two adjacent flow channels 70 are filled with seals such that the samples do not become mixed.

Moreover, as shown in FIG. 11, the present embodiment also has a sample introducing apparatus 79, disposed upstream of the flow channels 70 of the analysis apparatus 10, for assigning different sample fluids to the flow channels 70, respectively, and for introducing each of the assined sample fluids to the respective flow channel.

With this constitution, in addition to the same steps as the first embodiment has, the method according to the present embodiment further has the step of assigning plural different samples to the plural flow channels 70, respectively, and irradiating the sensor surface with light while making each of the assigned samples flow through the respective flow channel 70.

On this account, in addition to the same advantages as are obtained in the first embodiment, the present embodiment also offers the advantage that since plural samples can be analyzed at a time, it is possible to carry out analysis work with efficiency. It further offers the additional advantage that since the plural sample can be alanyzed under the same conditions, it is possible to analyze differences between the samples clearly.

### (H) Eighth Embodiment

Next, the eighth embodiment of the present invention is described with reference to FIG. 12.

The sensor chip according to the present embodiment 81 is identical with that of the first embodiment in its basic constitution. Namely, its surface is covered by the metal layer 83, and partly on the metal layer 83, plural diffraction areas (measurement spots) 87 are disposed in plural positions, respectively, within each of which areas a diffraction grating is formed.

In this embodiment, a non-diffraction area 88 is disposed adjacent each of the measurement spots 87. The non-diffraction area 88 has plural planes (hereinafter called non-diffraction surfaces) on each of which any diffraction grating is not formed. The inclination angles that the non-diffraction surfaces form with the reference plane S0 have the same distribution as that of the inclination angles of the diffraction grating surfaces of the measurement spot 87 with respect to the reference plane S0. The remaining constitution is identical with that of the first embodiment.

With this structure, the reflection light from the sensor chip 81 includes a resonance reflection light, which has been reflected by the measurement spot 87 and whose intensity is therefore reduced by a surface plasmon resonance, and a reference reflection light, which has been reflected by the non-diffraction area 88 and which is therefore not affected by any surface plasmon resonance.

Because of these characteristics, when carrying out sample analysis method using the sensor chip 81 of the present embodiment, in addition to the same steps as the first embodiment has, the method further has the step of correcting the measured intensity of the resonance reflection light from the individual measurement spot, using the intensity of the reference reflection light reflected by the non-diffraction area corresponding to the individual measurement spot. On this account, in addition to the same advantages as are obtained by the first embodiment, the present embodiment offers the advantage that it is possible to correct the influence of errors resulting from the difference of surface properties between the diffraction grating surfaces formed on the surface of each measurement spot by correction using the intensity of the reference reflection light, thereby analysis with higher precision being realized.

### (I) Ninth Embodiment

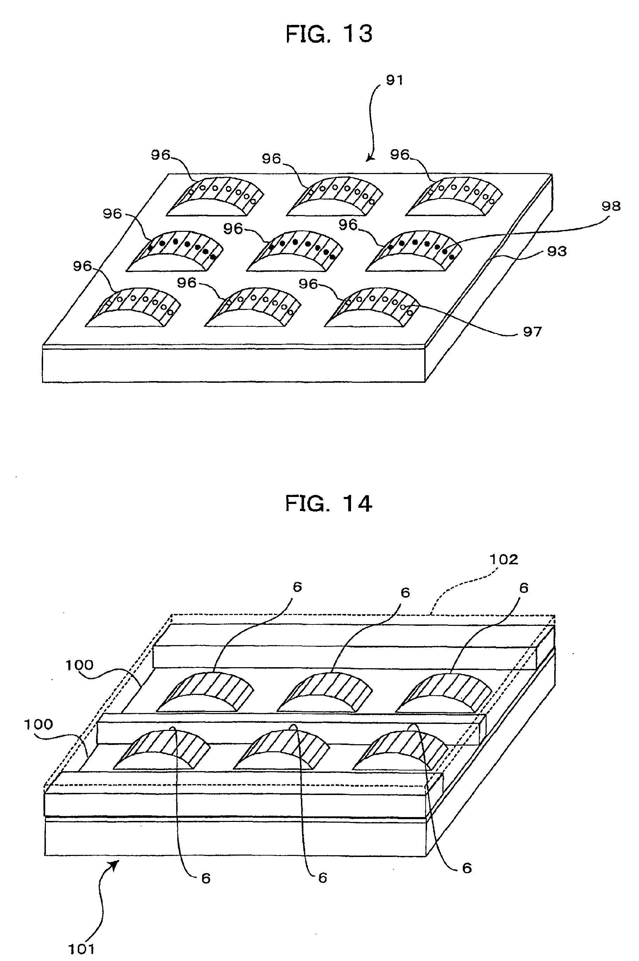

Next, the ninth embodiment of the present invention is described with reference to FIG. 13.

The sensor chip according to the present embodiment 91 is identical with that of the first embodiment in its basic constitution. Namely, its surface is covered with a metal layer 93, and partly on the metal layer 93, plural diffraction areas (measurement spots) 96 are disposed in plural positions, respectively, within each of which areas a diffraction grating is formed.

In this embodiment, a binding substance 97 is immobilized on the surfaces of some measurement spots 96, while a non-binding substance 98 is immobilized on the surfaces of the remaining measurement spots 96. The non-binding substance 98 is a substance that does not have the properties of binding specifically to the target species to be detected. When plural target species are contained in the sample, it is also preferable that both the binding substance 97 and the non-binding substance 98 are selected for each of the target species and immobilized on different measurement spots 96.

Consequently, in each of the measurement spots having binding-substance immobilized surfaces, the area on which the binding substance is immobilized serves as a reaction area, while the area on which the non-binding substance is immobilized and the area on which either any binding substance or any non-binding substance is not immobilized each serves as a non-reaction area.

Also, if the metal layer 93 is composed of a metal that does not bind specifically to the target species, it is also preferable that any non-binding substance 98 is not immobilized, and the area on which either the binding substance 97 and the non-binding substance 98 is not immobilized and in which the metal layer 93 is laid bare is used as a non-reaction area.

The remaining constitution is identical with the first embodiment.

With this structure, the reflection light from the measurement spots 96 includes the light that has been reflected by the reaction areas and the light that has been reflected by the non-reaction areas. The reflection light reflected from the reaction areas changes according to quantitative and/or qualitative factors connected with the sample, while the reflection light reflected by the non-reaction areas is not affected by the sample and its intensity is determined only by the structure of the diffraction grating surface.

Because of these characteristics, when carrying out sample analysis method using the sensor chip 91 of the present embodiment, in addition to the same steps as the first embodiment has, the method further has the step of calculating a resonance angle at which a surface plasmon resonance occurs for each of the reaction area and the non-reaction area, and the step of further calculating a difference resonance angle by subtracting, from the resonance angle of the individual reaction area, the resonance angle of the non-reaction area that is on the same diffraction grating surface as the individual reaction area is on. On this account, since the light reflected from a reaction area in which the binding substance binds to the target species can be analyzed using the light reflected from a non-reaction area which is adjacent to the reaction area as a reference, in addition to the same advantages as are obtained by the first embodiment, it is possible to analyze reliably the change caused by the specific binding of the binding substance to the target species.

### (J) Tenth Embodiment

Next, the tenth embodiment of the present invention is described with reference to FIGs. 11 and 14.

The basic constitution of the present embodiment is identical with that of the first embodiment. Namely, it is constituted in such a manner that the light emitted from the light source 12 is reflected by the sensor chip 101 and detected by the light detecting unit 13.

As shown in FIG. 14, this embodiment has plural flow channels 100, through each of which a sample flows, disposed side by side on the surface of the sensor chip 101. The flow channels 100 are disposed between a cover 102 covering the surface of the sensor chip 101 and the sensor chip 101. Interstices between each two adjacent flow channels 100 are filled with seals such that the samples do not become mixed.

This embodiment further has plural measurement spots 6 so as to be associated with each of the flow channels 100, which spots are the same as those of the first embodiment.

Moreover, as shown in FIG. 11, the present embodiment also has a sample introducing apparatus 79, disposed upstream of the flow channels 100 of the analysis apparatus 10, for assigning different sample fluids to the flow channels 100, respectively, and for introducing each of the assined sample fluids to the respective flow channel.

With this constitution, in addition the same steps as the first embodiment has, the method according to the present embodiment also has the step of assigning plural different samples to the plural flow channels 100, respectively, and irradiating the sensor surface with light while making each of the assigned samples flow through the respective flow channel 100.

On this account, in addition to the same advantages as are obtained in the first embodiment, the present embodiment also offers the advantage that since plural samples can be analyzed at a time, it is possible to carry out the work with efficiency. It further offers the additional advantage that since the plural sample can be alanyzed under the same conditions, it is possible to analyze differences between the samples clearly.

It is also preferable to carry out the present embodiment in combination with the fourth embodiment or the ninth embodiment. On this account, since both a reaction area and a non-reaction area can be formed for each of the diffraction grating surfaces on the same flow channel, it is possible to carry out correction for each of the samples flowing through the respective flow channel, using the reflection light from each of the non-reaction areas.

### (K) Eleventh Embodiment

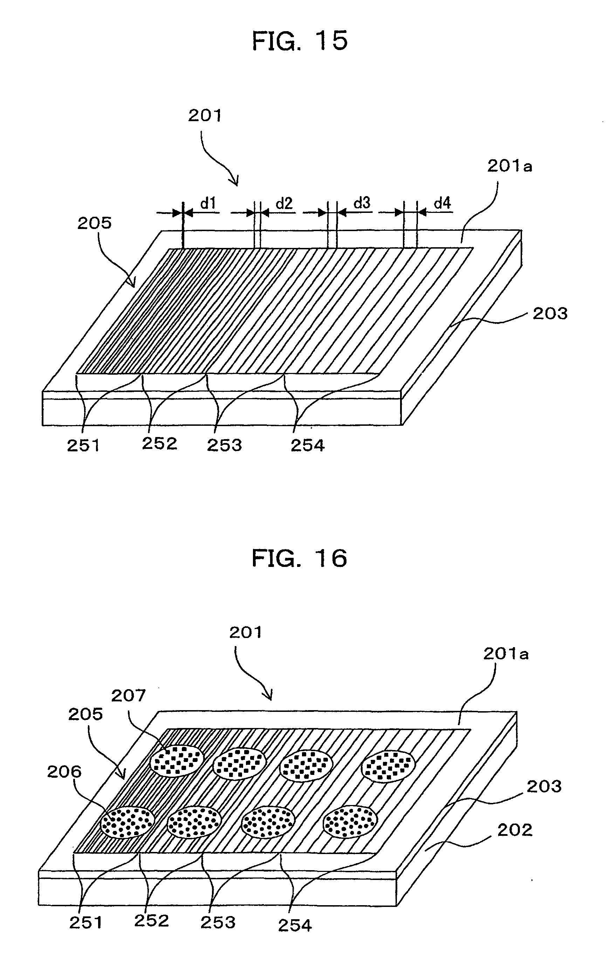

At first, the constitution of a sensor chip (surface plasmon resonance sensor chip) 201 according to the eleventh embodiment of the present invention is described with reference to FIG. 15. As shown in FIG. 15, the sensor chip 201 according to the present embodiment is constituted such that its surface (sensor surface) 201a is covered with a metal layer 203, and that a diffraction grating 205 is formed on the metal layer 203. In the present embodiment, the diffraction grating 205 is constituted in such a manner that its groove pitches are not uniform but have a discontinuous distribution. Specifically, the diffraction grating 5 has four areas 251, 252, 253, 254 disposed continuously in a direction perpendicular to the grooves. The areas 251, 252, 253, 254 have different groove pitches in such a manner that their groove pitches are positioned in ascending order from the area 251 to the area 254 (namely, d1 < d2 < d3 < d4). Each of these areas 251, 252, 253, 254 is used as a diffraction grating surface according to the present invention.

With this structure, the sensor surface 201a of the sensor chip 201 is irradiated with light, the irradiation light is diffracted by the diffraction grating 205 on the sensor surface 201a, and the diffraction phenomenon generates an evanescent wave. The irradiation light also affects the metal layer 203 to generate a surface plasmon wave along the surface of the metal layer 203. When the irradiation light having a specific wavelength and a specific incident angle, the evanescent wave resonates with the surface plasmon wave to produce surface plasmon resonance (SPR). That is to say, in the sensor chip 201, the area (continuous area) on the metal layer 203 in which the diffraction grating 205 is formed serves as a resonance area.

When using the sensor chip 201 (for sample analysis), as shown in FIG. 16, a binding substance 206, 207 is immobilized on the resonance area, in which the diffraction grating 205 is formed, so that the resonance area serves as the reaction area for reacting with the target species (chemical species, biochemical species, biological species, etc.) in the sample. The binding substance 206, 207 is a substance that has the property of binding specifically to a specific substance by some interaction such as antigen-antibody reaction, complementarily binding of DNA, receptor-ligand interaction, or enzyme-substrate interaction. The binding substance 206, 207 is selected in accordance with a target species to be detected. With this embodiment, two binding substances 206, 207 associated with different target species are immobilized on each of the areas 251-254.

The diffraction grating formed on the sensor chip has a groove pitch between 200nm and 2000nm, preferably between 500nm and 900nm, and a groove depth preferably between 10nm and 100nm. The number of varieties of groove pitches formed on the single sensor chip is between 1-200, preferably between 2-20.

Meanwhile, the surface plasmon wave induced along the metal layer 203 upon light irradiation is represented by the following formula 1,${\text{k}}_{\text{sp}} \text{(ω) =} \frac{\text{ω}}{\text{c}} \sqrt{\frac{{\text{ε}}_{\text{m}} \left(\text{ω}\right) {\text{n}}_{\text{1}} {\left(\text{ω}\right)}^{2}}{{\text{ε}}_{\text{m}} \left(\text{ω}\right) \text{+} {\text{n}}_{\text{1}} {\left(\text{ω}\right)}^{2}}}$ where the wave number is kₛₚ [kₛₚ = 2π/λₛₚ (wavelength)].

Also, the evanescent wave generated by the action of the diffraction grating 205 is represented by the following formula 2,${\text{k}}_{\text{ev}} \text{(ω) =} \frac{\text{ω}}{\text{c}} \text{sinθ +} {\text{mk}}_{\text{g}}$ where wave number is kₑᵥ [kₑᵥ = 2π/λₑᵥ (wavelength)].

In the formula 1 and formula 2, ω means the angular frequency of the irradiation light, θ means the incident angle of the irradiation light, k_{g} means the grating constant of the diffraction grating 205, m means the diffraction order of the diffraction light by the diffraction grating 205, εₘ(ω) means the dielectric constant of the metal layer 203, n₁(ω) means the refractive index of the medium adjacent to the metal layer 203 surface, and c means the light speed.

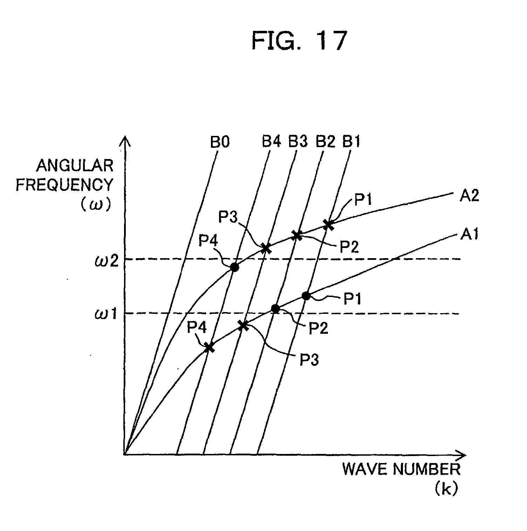

Plotting the relations defined by the above formulae 1 and 2 on the same graph gives the dispersion relationship diagram shown in FIG. 17.

In FIG. 17, the curved lines A1, A2 each show the relation between the angular frequency ω and the wave number k of the surface plasmon wave. As is evident from formula 1, the surface plasmon wave denpends on the refractive index of the medium adjacent to the metal layer 203 surface: when the refractive index of the medium becomes larger, the curved line showing the relation between the angular frequency ω and the wave number k of the surface plasmon wave also changes. Specifically, as shown in FIG. 16, when each of the binding substances 206, 207 is immobilized in a spot on the metal layer 203 surface and binds to the associated target species, the refractive index of the individual spot varies according to the refractive index and the amount of the target species that is bound to the spot. In this figure, the spot on which the binding substance 206 is immobilized has a higher refractive index than that of the spot on which the binding substance 207 is immobilized. Namely, the curved line A1 corresponds to the spot on which the binding substance 206 is immobilized while the curved line A2 corresponds to the spot on which the binding substance 207 is immobilized.

In the meantime, the straight line B0 in FIG. 17 shows the relation between the angular frequency ω and the wave number k of the irradiation light, while the straight lines B1-B4 each show the relation between the angular frequency ω and the wave number k of the evanescent wave. As is evident from formula 2, the relation between the angular frequency ω and the wave number k of the evanescent wave varies according to the grating constant k_{g}, which grating constant k_{g} is determined by the substantial groove pitch of the diffraction grating 205 when viewed from the direction of incidence of light. The narrower the substantial groove pitch, the larger the grating constant k_{g}. In the figure, the straight line B1 corresponds to the evanescent wave generated in the area 251 having the narrowest groove pitch, the straight line B2 corresponds to the area 252, the straight line B3 corresponds to the area 253, and the straight line B4 corresponds to the area 254. Each of the intersection points P11, P12, P21, P22, P31, P32, P41, P42 between the curved lines A1, A2, mentioned above, and the straight lines B1-B4 indicates a resonance point at which surface plasmon resonance occurs.

It is possible to analyze the concentration of the target species in the sample by detecting a resonance phenomenon at the spot in which the associated binding substance 206, 207 is immobilized. However, when the measurement range (measurement wavelength area) of a measuring instrument is limited, not every resonance phenomenon can be detected. Suppose the measurement range of angular frequency is limited, for example, to the range from ω1 to ω2. Regarding the areas 251-253, in which the groove pitch of the diffraction grating 205 is narrow, since the resonance points P12, P22, P32, fall outside the measurement range, it is impossible to detect a resonance phenomenon at the spot in which the binding substance 207 is immobilized. On the other hand, regarding the area 254, which has the broader groove pitch d4, since the resonance point P42 falls within the measurement range, it is possible to detect a resonance phenomenon at the spot in which the binding substance 207 is immobilized. Likewise, when a resonance phenomenon occurs at the spot in which the binding substance 206 is immobilized, it is impossible to detect the resonance phenomenon in the areas 253, 254 since the resonance points P31, P41 fall outside the measurement range, while it is possible to detect the resonance phenomenon in the areas 251, 252 since the resonance points P11, P21 fall within the measurement range.

Consequently, since the sensor chip 201 has the diffraction grating 205 whose groove pitch differs depending on the areas 251-254, the resonance points at which a resonance phenomenon occurs in the areas 251-254 are distributed over a dispersion curve of the surface plasmon wave. It is therefore possible to detect a resonance phenomenon at any of the areas 251-254 with a high probability even if the measurement range is limited. Further, even if plural kinds of binding substances 206, 207 are immobilized to analyze plural different target species having different refractive indexes, as mentioned above, it is possible to carry out analysis at a time within a limited measurement range without the need of readjusting the optical system. In short, it is possible to analyze a sample whose refractive indexes have a wide distribution.

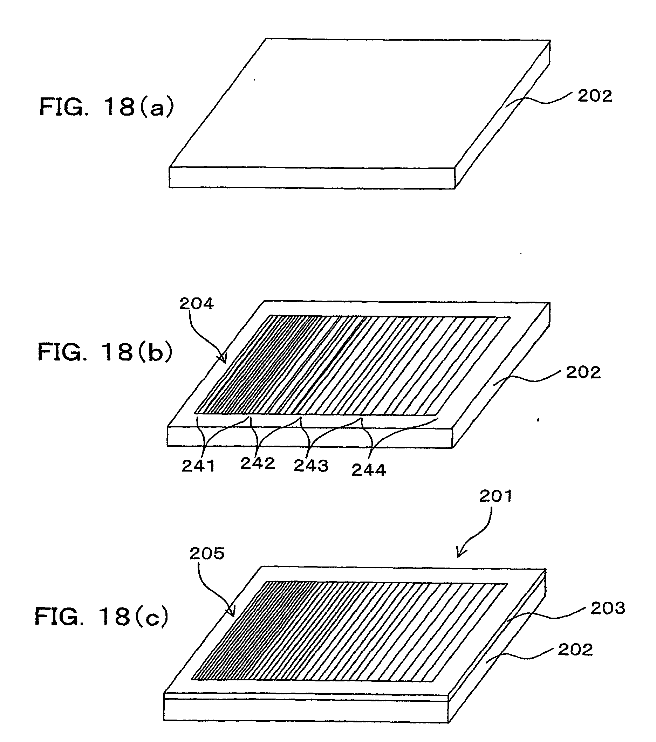

It is possible to make the sensor chip 201 by the following processes. Using a substrate 202 shown in FIG. 18(a), the first process is, as shown in FIG. 18(b), to make an uneven form (grating) 204 by laser processing or the like. The second process is, as shown in FIG. 18(c), to laminate all over the surface of the substrate 202 with a metal layer 203 by sputtering, vapor deposition, or the like. Since the metal layer 203 is layered on the uneven form 204, the surface of the metal layer 203 also has an uneven form thereon. This uneven form on the metal layer 203 surface functions as the diffraction grating 205.

The material used for the substrate 202 is not limited as long as it allows the uneven form 204 to be made on its surface and as it possesses adequate mechanical strength to hold the metal layer 203. Examples of usable inorganic materials include glass, quartz, and silicon, while examples of usable organic materials include various resin such as poly(methyl methacrylate), polycarbonate, polystyrene, or polyolefin. When making the uneven form 204 on the substrate 202, it is required to consider the thickness of the metal layer 203 or the likes in such a manner that when the metal layer 203 is layered, a desired diffraction grating 205 is obtained on the surface. As a method of making the uneven form, in addition to the laser processing mentioned above, it is also use other methods such as injection molding, compression molding, or etching. The uneven form 204 can be a square-wave form, a sine-wave shape, a saw-tooth shape, etc., although being not limited as long as it can induce a diffraction phenomenon along the diffraction grating 205 to generate an evanescent wave. It is required to vary the groove pitches of the uneven form 204 among the four continuous areas 241, 242, 243, 244: the groove pitch in the area 241 is made d1, the groove pitch in the area 242 is made d2, the groove pitch in the area 243 is made d3, and the groove pitch in the area 244 is made d4. Meanwhile, the depth of the uneven form 204 (depth of the diffraction grating 205) is related with the peak's sharpness of the reflection-light intensity and therefore has an influence on resolution.

The material used for the metal layer 203 is not limited as long as it can induce a surface plasmon wave. Examples of the usable material include gold, silver, and aluminum. Among above, silver is preferable in respect of sensitivity and inexpensiveness, while gold is preferable in point of stability. If the thickness of the metal layer 203 is too small, the irradiation light passes through the metal layer 203 and reaches the surface of the substrate 202, and may be diffracted by the uneven form 204 on the substrate 202 surface. In this case, the uneven form 204 functions as a diffraction grating.

A method of applying the metal layer 203 on the substrate 202 is not limited as long as it can bind the substrate 202 with the metal layer 203 tightly to a sufficient degree. Representative examples include vapor deposition, sputtering, and plating. It is also preferable to use some other substance between the substrate 202 and the metal layer 203 in order to, for example, improve adhessiveness. Moreover, it is also preferable to coat the surface of the metal layer 203 with a layer such as coating film or an activated film to thereby make the surface of the metal layer 203 serve some function.

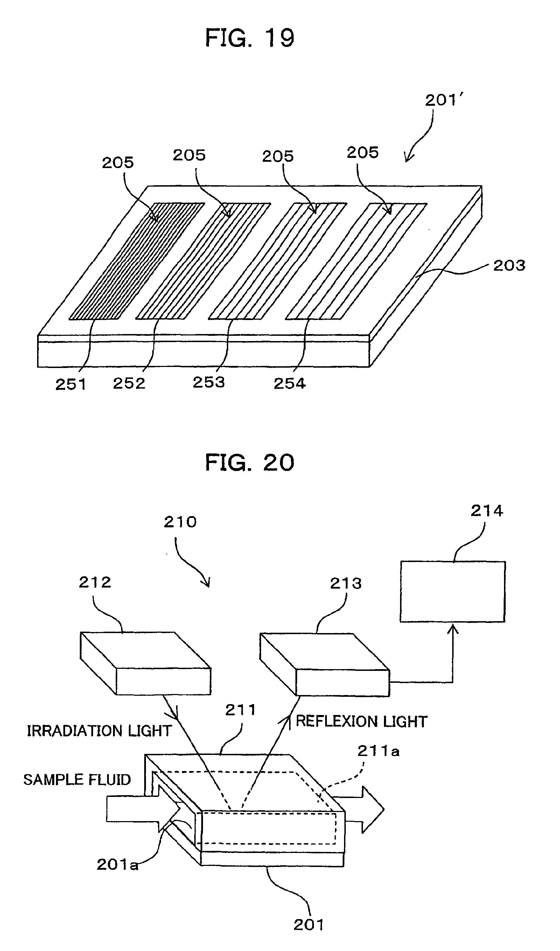

Meanwhile, the sensor chip 1 can be embodied with some modification in such a form as the sensor chip 201' shown in FIG. 19. Namely, instead of disposed continuously, the areas 251-254 having different groove pitches of the diffraction grating 205 are disposed discretely on the metal layer 23 in such a manner that they have the same groove orientation. With this structure, it is also possible to achieve the same operations and advantages as achieved by the sensor chip 201.

Then, a method for using the sensor chip 201 according to the present embodiment is described.

When using the sensor chip 1 for sample analysis, as shown in FIG. 16, binding substances 206, 207 are immobilized on the sensor surface 201a in advance. Then the sensor chip 201, on which the binding substances 206, 207 are immobilized, is set on an analysis apparatus 210 having the constitution as shown in FIG. 20 while analysis is carried out. The analysis apparatus 210 is constituted basically of a holder (holding means) 211 for holding the sensor chip 201, a light source (light irradiation means) 212, a light detector (light receiving means) 213, and an analysis unit 214.

The holder 211 has a flow channel 211a formed thereon, through which a sample fluid containing a target species passes. The sensor chip 201 is disposed and fixed in such a manner that the sensor surface 201a is in contact with the sample flowing through the flow channel 211a.

The light source 212 is disposed opposite to the sensor chip 201 across the flow channel 211a so as to irradiate the sensor surface 201a of the sensor chip 201 with light. As the light source 212, it is possible to use either a monochromatic light source or a multicomponent light source (such as a white light source). Also the light can be either coherent or not. As the monochromatic light source, it is desirable to use a laser light source, and specifically, a semiconductor laser in respect of cost and size. It is also possible to spectrally separate white light, which is emitted from a halogen tungsten lamp or others, using interference filter, spectroscope, or the like to thereby obtain monochromatic light for the light source purpose. As the white light source, it is preferable to use a halogen tungsten lamp, a xenon lamp, etc.

The light detector 213 is a detector for detecting the reflection light from the sensor chip 201. As the light detector 213, it is desirable to use, for example, integrated CCD elements, a silicon photodiode array, etc. In addition, although not illustrated in the figure, a polarizer is disposed between the light source 212 and the sensor chip 201 or between the sensor chip 201 and the light detector 213, so as to polarize the irradiation light from the light source 212 or the reflection light from sensor chip 201, since only polarized light P can cause resonance with a surface plasmon wave.

The analysis unit 214 is an apparatus for carrying out analysis processing based on the detection data from the light detector 213. The analysis unit 214 functions as measuring means and also as analyzing means according to the present invention. The following description is given to the detailed explanation of the individual functions of analysis unit 214, and also to a sample analysis procedure using the sensor chip 201 according to the present embodiment.

The first process is to set the sensor chip 201 to the holder 211 and to make the sensor surface 201a of the sensor chip 201 in contact with the sample (step B1). Thereby the binding substance 206, 207 imobilized on the sensor surface 201a comes to bind specifically to the target species contained in the sample fluid According to the amount of substance of the target species, the refractive index of a medium adjacent to the surface of metal layer 203 changes on each of the spots in which the binding substance 206, 207 is immobilized, and conditions under which the resonance of a surface plasmon wave occurs at each spot also change accordingly.

The second process is to irradiate the sensor surface 201a with monochromatic light from the light source 212 at a constant irradiation angle (step B2). At the time, the area of the irradiation light is adjusted such that the irradiation light illuminates all the spots on which the binding substance 206, 207 is immobilized. With this feature, it is possible to measure all the spot simultaneously. The irradiation light entered to the sensor surface 201a produces diffraction lights on the diffraction grating 205. Among these diffraction lights, the light detector 213 detects the diffraction light of the 0th-order (reflection light) (step B3).

Data about the reflection light detected by the light detector 213 is send to the analysis unit 214. From the data about the reflection light sent from the light detector 213, the analysis unit 214 extracts data about the intensity of the light reflected from each of the spots on which the binding substance 206, 207 is immobilized, and measures the intensity of the reflection light for each spot. Based on the intensity of the reflection light due to each spot, the groove pitch of the diffraction grating 205 with which a resonance phenomenon occurs is detected for each of the target species (for the individual binding substances 206, 207). Specifically, the spot having the minimum intensity of the reflection light is detected for each target species, and it is assumed that a resonance phenomenon occurs at the detected spot. Alternatively, based on the intensity of the reflection light at each spot, it is also possible to calculate the groove pitch with which a resonance phenomenon occurs by interpolation using software (step B4-1).

The analysis unit 214 compares the detected groove pitch, with which a resonance phenomenon occurs, with a working curve (or a theoretical conversion equation for concentration), which is prepared preliminarily based on measurement, to thereby analyze the concentration of the individual target species in the sample. In this embodiment, the analysis unit 214 functions as the analyzing means according to the present invention (step B5-1).

Meanwhile, it is also possible to carry out sample analysis based on the variation of the reflection-light intensity. The distribution of the reflection-light intensity over the incident angle or the incident wavelength changes according to the amount of the target species captured by the binding substance, namely, the concentration of the target species in the sample. On this account, the method is characterized by measuring the intensity of reflection light under conditions of a constant incident angle and a constant incident wavelength, and analyzing the concentration and other properties based on the variation of the intensity under the conditions (from the state of not being in contact with any sample). In this case, after the light reflected from the sensor surface 201a is detected according to the above steps B1 to B3, the analysis unit 214 extracts the data about the light reflected by each spot on which the binding substance 206, 207 is immobilized from the data about the reflection light, and detects the intensity of the reflection light for each of the areas 251-254. Then, the analysis unit 214 determines the variation of the reflection-light intensity from the state where when any sample is not in contact with the sensor surface 201a, for each area 251-254 (step B4-2).

Subsequently, the analysis unit 214 selects an area (diffraction grating) whose variation of the reflection-light intensity is within a predetermined determination range (determination allowable range), in short, an area that is not out of range. Then, the analysis unit 214 compares the variation of the reflection-light intensity of the selected area, which is not out of range, and the groove pitch of the area with a working curve (that is prepared preliminarily based on a test using samples with known concentrations, showing the relation between the groove pitch and the variation of the reflection-light intensity), to thereby analyze the concentration of the target species in the sample (step B5-2).

Since the wave number of the evanescent wave changes according to the incident angle of the irradiation light with respect to the diffraction grating surface, the variation of the reflection-light intensity also changes according to the incident angle. Depending on the incident angle, the variation becomes so large that it exceeds the measurement range of a measuring instrument equipped with the analysis unit 214. Conventionally, to cope with such a situation, it is necessary to alter the incident angle through the readjust of the optical system. Specifically in the case of carrying out the multi-item measurement for plural target species whose concentrations differ greatly, it is required to adjust the incident angle for each of the target species to be measured. However, in the present embodiment, since the sensor chip 201 has plural areas (diffraction grating surface) 251-254 with different groove pitches, there is no need to actually alter the incident angle of the irradiation light. It is possible to substantially alter the incident angle simply by selecting another area (diffraction grating surface). This translates into a substantially enlarged measurement range. As a result, it becomes possible to deal with samples having a wide range of concentrations and therefore reqiring a wide measurement range.

Analysis according to the above method eliminates the need for complicated operations such as the readjustment of optical system, which are necessary for the conventional method. Further, it becomes possible to carry out sample analysis with simple apparatus constitution compared to the conventional angle-change type, specifically, with simple optical system. Meanwhile, the above steps B1-A5 can be carried out not only in sequence, as described above, but also simultaneously. When the steps are carried out simultaneously, it becomes possible to monitor the manner in which the target species in the sample binds to the binding substance 206, 207 in real time.

Whereas the above description has been made of a method in which the sensor chip is irradiated with light of a single wavelength at a single angle (fixed angle), it is also possible to apply the sensor chip 201 of the present embodiment to a method in which the sensor chip is irradiated with light of a single wavelength while the irradiation angle is varied. In the method, the first process is to measure (or interpolatively calculate) a groove pitch with which a resonance phenomenon occurs, based on the reflection-light intensity. Then, the second process is to analyze the concentration of the target species in the sample using a working curve (or a theoretical conversion equation for concentration) which is preliminaliry obtained through measurement, based on both the measured groove pitch with which a resonance phenomenon occurs and the intensity of the reflection light in a position where a resonance phenomenon is detected (in fact, the resonance angle determined from the reflection-light intensity).

Meanwhile, a monochromatic light source is used as the light source 212 in the case described above. On the other hand, using a white light source as the light source 212, it is possible to detect all the resonance points P11, P21, P42 existing within a measurement range (ω1-ω2) at a time, as shown in FIG. 17. Specifically, the concentration of a target species associated with the binding substance 206 can be analyzed by using a working curve (or a theoretical conversion equation for concentration) which is preliminaliry obtained through measurement, based on both the groove pitch d1 corresponding to the resonance point P11 and the intensity of the reflection light in a position (area 251) where a resonance phenomenon is detected (in fact, the resonance wavelength determined from the reflection-light intensity), or altenatively, based on both the groove pitch d2 corresponding to the resonance point P21 and the intensity of the reflection light in a position (area 252) where a resonance phenomenon is detected. Contrarily, the concentration of a target species associated with the binding substance 207 can be analized based on both the groove pitch d4 corresponding to the resonance point P42 and the intensity of the reflection light in a position where a resonance phenomenon is detected (area 254).

### (L) Twelfth Embodiment

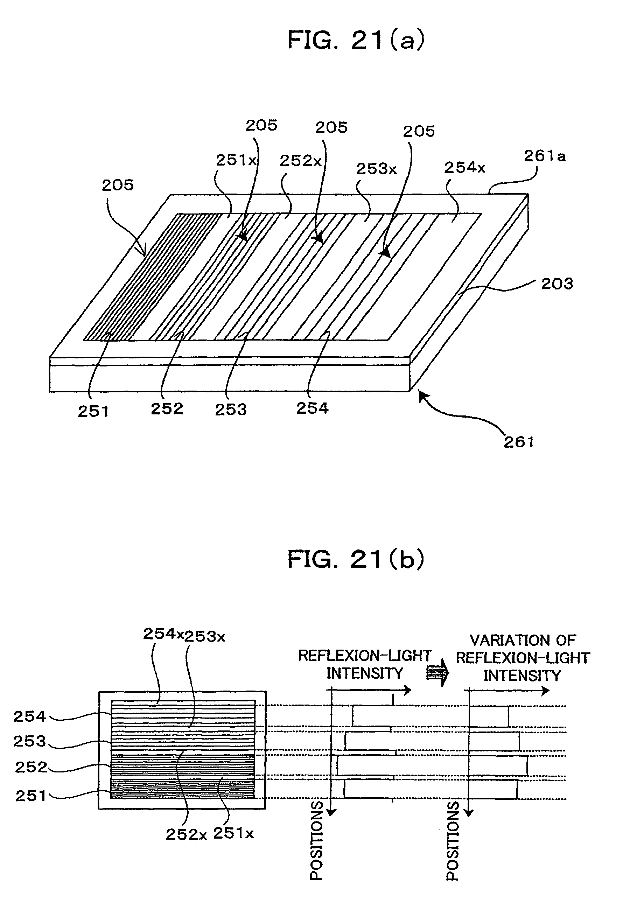

Next, the twelfth embodiment of the present invention is described with reference to FIG. 21(a). In this figure, substantially identical components with the eleventh embodiment are indicated by the same reference numerals.

Like the eleventh embodiment, the sensor chip 261 according to the present embodiment is identical with that of the conventional sensor chip in its basic constitution. Namely, its surface (sensor surface) 261a is covered with a metal layer 203, and a diffraction grating 205 is formed on the metal layer 203.

In this embodiment, each of the areas 251, 252, 253, 254 with different groove pitches also has a partial area (hereinafter called a non-diffraction surface) 251x, 252x, 253x, 254x within which the diffraction grating 205 is not formed. The remaining constitution is identical with the eleventh embodiment.

With this structure, the reflection light from the sensor chip 261 includes the light that has been reflected by the areas 251-254, in which the light diffraction grating 205 is formed, and whose intensity is therefore reduced due to a surface plasmon resonance (hereinafter called resonance reflection light) and the light that has been reflected by the non-diffraction surfaces 251x-254x and that is therefore not affected by any surface plasmon resonance (hereinafter called reference reflection light).

Because of these characteristics, when carrying out sample analysis method using the sensor chip 261 of the present embodiment, in addition the same steps as in the eleventh embodiment, preferably the method further has the step of correcting the measured intensity of the individual resonance reflection light using the resonance reflection light intensity of the reference reflection light from the non-diffraction surface that is on the same diffraction grating area as the individual diffraction grating surface is on. On this account, in addition to the same advantages as are obtained by the eleventh embodiment, the embodiment offers the additional advantage that it is possible to correct the influence of errors resulting from the difference of surface properties between the diffraction grating surfaces by correction using the intensity of the reference reflection light, thereby analysis with higher precision being realized.

The present embodiment is further explained with reference to FIG. 21(b). FIG. 21(b) is a schematic diagram showing the relation between surface structure of the sensor chip 261 and reflection-light intensity.

The sensor chip 261 has the areas 251-254 on its surface, as described above, and the diffraction grating is formed over these areas so as to have different groove pitches between these areas. The areas 251-54 also have different surface properties. Most of the differences of surface properties are minute differences due to manufacturing stage of the sensor chip, but they still have an influence on the intensity of the light reflected from the sensor chip despite their minuteness. Accordingly, the reflection lights from the areas 251-254 also differ.

The sensor chip 261 of the present invention is intended for the analysis of a sample placed on the surface of the sensor chip 261, based on a resonance between a surface plasmon wave and an evanescent wave. It is therefore undesirable that variation in reflection light arises due to differences in surface properties of the sensor chip 261 independently of properties of the sample.

For that reason, in the present embodiment, the intensity of the reflection light from each of the areas 251-254 is corrected using the intensity of the reflection light from the associated area 251x-254x, which is disposed in each area 251-254 and does not have any diffraction grating.

In FIG. 21(b), for example, difference between the intensity of the reflection light from the area 251 and the intensity of the reflection light from the area 251x is assumed as the the reflection-light intensity reduced by a resonance between a surface plasmon wave and an evanescent wave.

By carrying out such a correction as discussed above, analysis with higher precision is made possible.

### (M) Thirteenth Embodiment

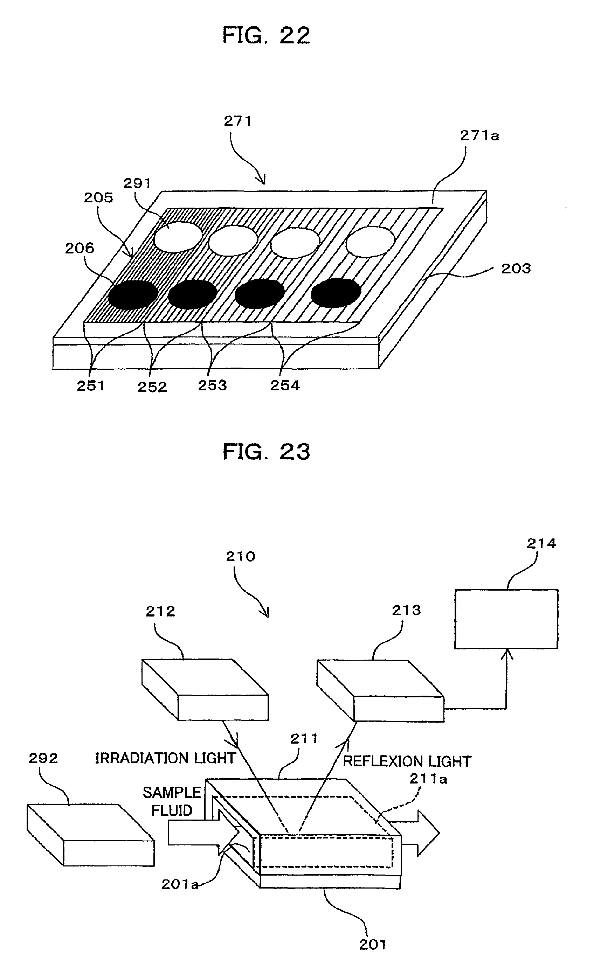

Next, the thirteenth embodiment of the present invention is described with reference to FIG. 22. In this figure, substantially identical components with the first and second embodiments are indicated by the same reference numerals.

Like the eleventh embodiment, the sensor chip according to the present embodiment 271 is identical with that of the conventional sensor chip in its basic constitution. Namely, its surface (sensor surface) 271a is covered with a metal layer 203, and a diffraction grating 205 is formed over plural areas 251-254 disposed on the metal layer 203.

In this embodiment, in addition to the binding substance 206, a non-binding substance 291 is immobilized on the areas 251-254. The non-binding substance 291 is a substance that does not have the properties of binding specifically to the target species to be detected, and is selected in accordance with the target species to be detected (chemical species, biochemical species, biological species, etc.). When the sample contains plural target species, plural binding substances 206 and plural non-binding substances 291 are selected according to the plural target species, respectively, and immobilized on different areas 251-254. Consequently, the area on which the binding substance 206 functions as a reaction area, while the area on which the non-binding substance 291 is immobilized and the area on which either the binding substance 206 or the non-binding substance 291 is not immobilized each function as a non-reaction area. If the metal layer 203 is composed of a metal that does not bind specifically to the target species, it is also preferable that any non-binding substance 2091 is not immobilized, and the area on which either the binding substance 206 or the non-binding substance 291 is not immobilized and in which the metal layer 203 is laid bare is used as a non-reaction area.

The remaining constitution is identical with that of the first embodiment.

With this structure, the reflection light from the individual area 251-254 includes the light that has been reflected by the reaction area and the light that has been reflected by the non-reaction area. The reflection light reflected by the reaction area changes according to quantitative and/or qualitative factors in connection with the sample, while the reflection light reflected by the non-reaction area is not affected by the sample and its intensity is determined only by the structure of the diffraction grating surface.

Because of these characteristics, when carrying out sample analysis method using the sensor chip 271 of the present embodiment, in addition the same steps as in the eleventh embodiment, the method further has the step of identifying a groove pitch with which a surface plasmon resonance occurs for each of the reaction area and the non-reaction area, and the step of analyzing based on the groove pitch of the reaction area and the non-reaction area. On this account, since the reflection light from a reaction area where the binding substance binds to the target species can be analyzed using the reflection light from the non-reaction area adjacent to the reaction area as a reference, in addition to the same advantages as are obtained by the eleventh embodiment, it is possible to analyze reliably the change caused by the specific binding of the binding substance to the target species.

### (N) Fourteenth Embodiment

Next, the fourteenth embodiment of the present invention is described with reference to FIG. 23. In this figure, substantially identical components with the eleventh through thirteenth embodiments are indicated by the same reference numerals.

The present embodiment has a structure identical with that of the analysis apparatus 210 of the eleventh embodiment, except that a separation apparatus 292 for separating a sample fluid is disposed upstream of the flow channel 211a, through which the sample fluid flows.

As the separation apparatus 292, it is preferable to use an apparatus that carries out separation by a separation method such as: liquid chromatography or HPLC (high performance liquid chromatography), in which a sample is separated according to adsorptivity or distribution coefficient; capillary electrophoresis or microchip electrophoresis, in which a sample is separated according to electronegativity; microchannel; or flow injection. It is also possible to install an apparatus other than above in the analysis apparatus as the separation apparatus.

The microchannel means a groove which is formed on the surface of some chip and through which a sample flows. It is possible to carry out separation by filling a part of the groove column with an equivalent to a filler of HPLC, or by disposing a functional group on the surface of the groove surface.

The flow injection is a method for causing various reactions on a sample in a state where the sample is flowing. It is possible to carry out separation by, for example, causing complex-forming reaction, and then carrying out solvent extraction and an additional process such as the removal of substances other than the target species in the sample.

It is also possible to install an apparatus other than above in the analysis apparatus as the separation apparatus.

When carrying out analysis using the apparatus, it is possible to separate a sample, which contains a target species such as an enzyme or a protein, into elements with higher purity in advance by the separation apparatus. Consequently, it is possible to analyze the target species in a purer form, thereby analysis with higher precision being made possible.

Further, by adopting a generally used detection method (absorbance detection, fluorescence detection, chemiluminescence detection, differential refract meter detection, electrochemical detection, etc.) as the analyzing means, it becomes possible to carry out both the measurement of the amounts of various substances existing in the sample and the measurement of object species to be detected among these substances using specific reaction at a time.

### (O) Fifteenth Embodiment

Next, the fifteenth embodiment of the present invention is described with reference to FIG. 20. In this figure, substantially identical components with the eleventh through fourteenth embodiments are indicated by the same reference numerals.

The basic constitution of the present embodiment is identical with that of the eleventh embodiment. Namely, it is constituted in such a manner that the light emmited from the light source 212 is reflected by the sensor chip and detected by the light detecting unit 213.

In this embodiment, the target species is a light-emitting substance, which can produce light such as fluorescence or phosphorescence. Examples of the target species include a light-emitting substance that emits light by reaction with the binding substance, and a light-emitting substance that emits light under excitation by the light supplied from the light source 212. The present embodiment is constituted in such a manner that the light detecting unit 213 can detect the light emitted (emission light).

With this constitution, in addition to the same advantages as are obtained in the eleventh embodiment, the present embodiment offers the additional advantage that it is possible to quantitatively and/or qualitatively analyze the sample using the detection result of the emission light, analysis with higher precision therefore being realized. Chemiluminescence such as fluorescence, in particular, is highly sensitive and is therefore especially useful to detect minute reaction.

### (P) Sixteenth Embodiment

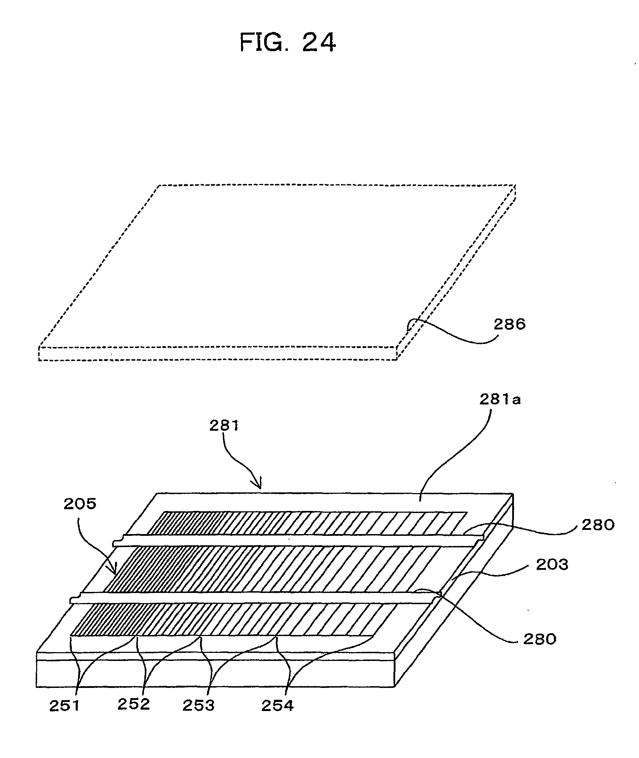

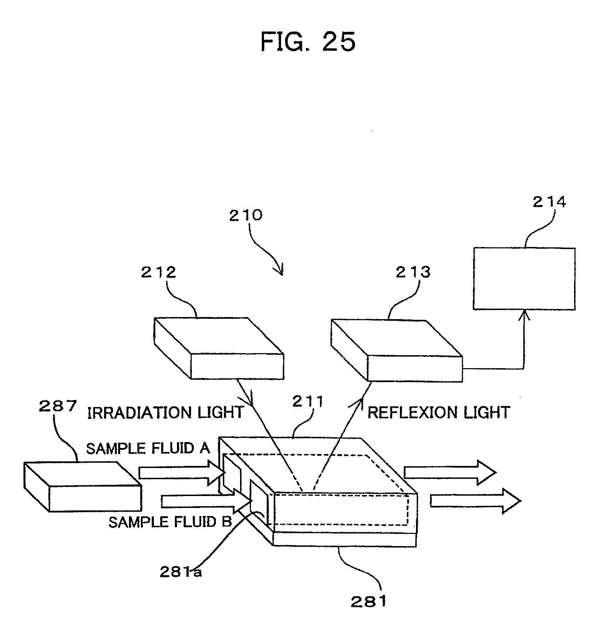

Next, the sixteenth embodiment of the present invention is described with reference to FIG. 24 and FIG. 25. In these figures, substantially identical components with the eleventh through fifteenth embodiments are indicated by the same reference numerals.

The basic constitution of the present embodiment is identical with that of the eleventh embodiment. Namely, the analysis apparatus is constituted in such a manner that the light emitted from the light source 212 is reflected by the sensor chip 281 and detected by the light detecting unit 213. Also, like the eleventh embodiment, the sensor chip 281 according to the present embodiment is identical with that of the conventional sensor chip in its basic constitution. Namely, its surface (sensor surface) 281a is covered with a metal layer 203, and a diffraction grating 205 is formed over plural areas 251, 252, 253, 254, which are disposed on the metal layer 203.

As shown in FIG. 24, this embodiment has plural flow channels 280 through each of which a sample flows, laid in a direction orthogonal to the direction in which the diffraction grating 205 is formed. The flow channels 280 are disposed between a cover 286 covering the surface of the sensor chip 281 and the sensor chip 281, and are formed in such a manner that they pass in pairs on each of the areas 251-254 on the sensor chip. Interstices between one flow channel 280 and the other adjacent flow channel 280 are filled with seals such that the samples do not become mixed.

Moreover, as shown in FIG. 25, the present embodiment also has a sample introducing apparatus 287, disposed upstream of the flow channels 280 of the analysis apparatus 210, for assigning different sample fluids to the flow channels 280, respectively, and for introducing each of the assined sample fluids to the respective flow channel.

Because of these characteristics, when carrying out sample analysis method using the sensor chip 281 of the present embodiment, in addition to the same steps as in the eleventh embodiment, the method further has the step of assigning plural different samples to the plural flow channels, respectively, and irradiating the sensor surface with light while making each of the assigned samples flow through the respective flow channel. Besides, it is also possible to carry out the same analysis as in the eleventh embodiment for each of the flow channels.

With this constitution, in addition to the same advantages as are obtained in the eleventh embodiment, the present embodiment also offers the advantage that since plural target species can be analyzed at a time, it is possible to carry out analysis work with efficiency. It further offers the additional advantage that since the plural target species can be alanyzed under the same conditions, it is possible to analyze differences between the target species clearly.

The above description will be further discussed in more detail.

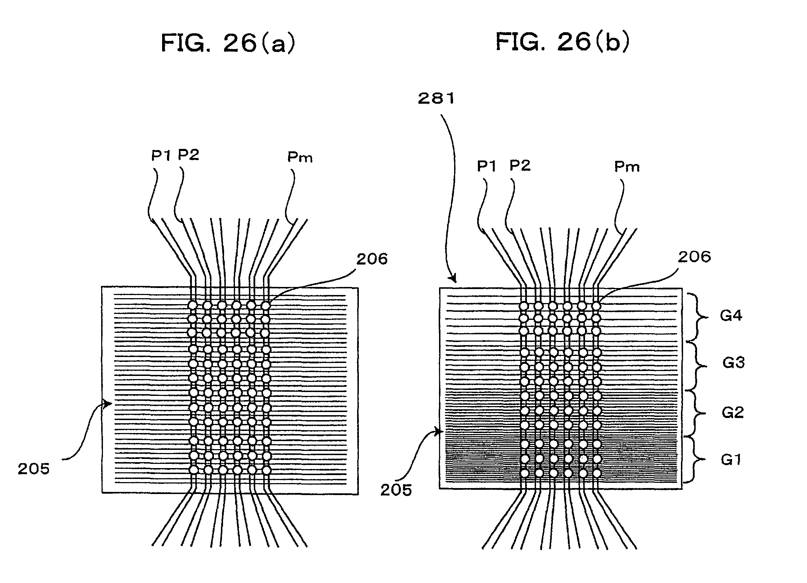

An elevational view of the sensor chip 281 is shown in FIG. 26. As shown in FIG. 26(a), the diffraction grating 205 formed on the sensor chip 281 surface has different groove pitches for each of the four areas (diffraction grating area) G1, G2, G3, G4, which are disposed continuously in a direction perpendicular to the grooves.

On the sensor chip 281 surface, m flow channels P1, P2, ···, Pm are formed in a direction perpendicular to the grooves. On the flow channels P1, P2, ···, Pm, the binding substance 206 is immobilized in spots for each of the areas G1, G2, G3, G4 having different groove pitches.

In the following, advantages of the embodiment are explained in comparison with a conventional example. In the conventional example shown in FIG. 26(b), a diffraction grating with uniform groove pitches is formed on a sensor chip. If the sensor chip is equipped with m flow channels P1, P2, ···, Pm, through each of which a sample flows over the surface, the maximum number of target species which can be analyzed is m, namely the same number as the number of the flow channels. However, the measurement range of the conventional sensor chip is so narrow that when a resonance point falls outside the measurement range upon light irradiation, or when the detection of more resonance points is desired, it is necessary to alter the wavelength of the incident light or to alter the incident angle.

On the othe hand, in the sensor chip 281 of the present invention, the maximum number of target species which can be analyzed is still m, namely the same number as that of the conventional example. Moreover, it is possible to detect a resonance point without the need of altering the wavelength of the incident light or the incident angle according to the groove pitch, and to detect resonance points spreading over a wide measurement range according to the groove pitch.

As explained above, simply by forming both plural groove pitches and plural flow channels, it is possible to obtain a sensor chip that offers the above-mentioned advantages. Better still, by modifying the arrangement of the binding substance, it is possible to obtain further advantages. In the following, explanation will be made in more detail using examples. The constitution used in each of the following examples is identical with that of the sixteenth embodiment mentioned above, except for the number of kinds of areas and the combination of binding substances to be immobilized.

### (Example 6-1)

In this example, explanation is made for the case where the angle of the reflected light is detected while the incident angle of the incident light is varied.

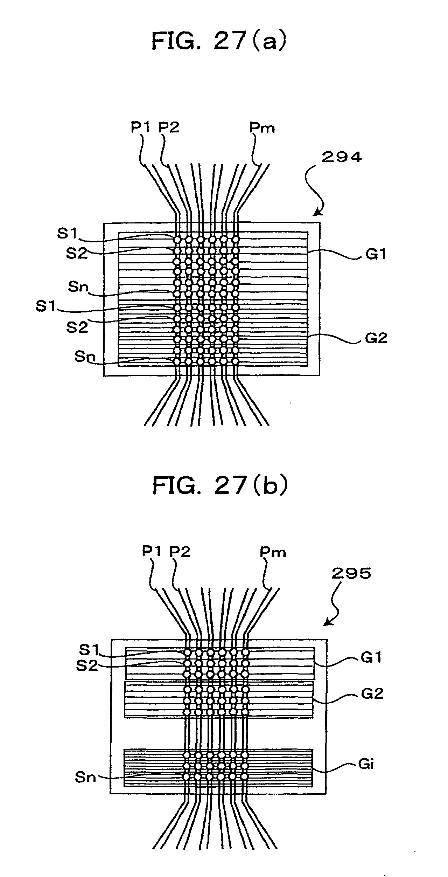

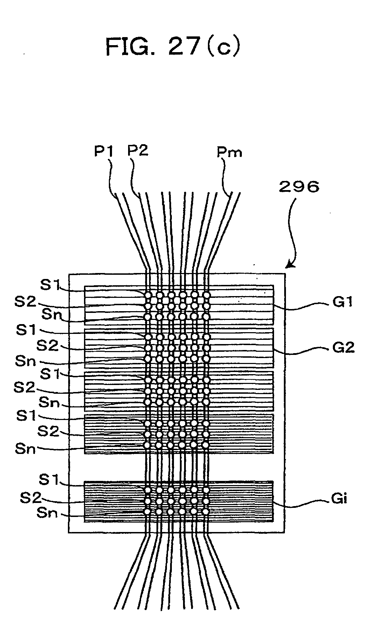

As shown in FIG. 27(a), on a sensor chip 294 having two areas having different groove pitches, namely, a low-angle detection part G1 and a high-angle detection part G2, n kinds of binding substances S1, S2, ···, Sn are immobilized for each of the two areas. At this point, to achieve the objective of analyzing the reaction between the binding substances and the target species with a wide measurement range, the combination of binding substances S1, S2, ···, Sn in each of the areas is determined to be identical on the same flow channel.

Accordingly, m × n different kinds of combinations of a target species and a binding substance can be detected, so that it becomes possible to analyze the number of target species using the single sensor chip 294. Moreover, since measurement can be carried out using two different measurement ranges of the low-angle detection part G1 and the high-angle detection part G2, it is possible to carry out measurement with a wider measurement range as a whole than that of the conventional method.

In the above case, incidentally, it is possible to determine voluntarily which binding substance S1, S2, ···, Sn is immobilized in which area G1, G2 on which flow channel P1, P2, ···, Pm, according to the target species to be analyzed.

### (Example 6-2)

In this example, explanation is made for the case where the angle of the reflected light is detected while the incident angle of the incident light is varied.

As shown in FIG. 27(b), on a sensor chip 295 having a number of areas G1, G2, ···, Gi with different groove pitches, plural kinds of binding substances S1, S2, ···, Sn are immobilized in n places for each of the areas G1, G2, ···, Gi.

With this arrangement, depending on the munber of the areas i, it becomes possible to detect resonance points over a still wider measurement range. The kinds of binding substances S1, S2, ···, Sn can be either unified over the areas G1, G2, ···, Gi, as in the example 6-1, or varied independently of the areas. When the kinds of binding substances S1, S2, ···, Sn are unified over the areas G1, G2, ···, Gi, it is possible to measure plural reactions between the binding substance S1, S2, ···, Sn and the target species with a wider measurement range, as in the example 6-1. On the other hand, when the kinds of binding substance S1, S2, ···, Sn are varied between the areas G1, G2, ···, Gi, it is possible to analyze plural reactions between the binding substances S1, S2, ···, Sn, whose degrees of reaction are known, and the target species at a time.

As is the case with the example 6-1, it is possible to determine voluntarily which binding substance S1, S2, ···, Sn is immobilized in which area G1, G2, ···, Gi on which flow channel P1, P2, ···, Pm, according to the target species to be analyzed.

### (Example 6-3)

In this example, explanation is made for the case where the intensity of the reflection light is detected while the incident angle of the incident light is fixed.

As shown in FIG. 27(c), on a sensor chip 296 having plural areas G1, G2, ···, Gi with different groove pitches, n kinds of binding substances S1, S2, ···, Sn are immobilized for each of the areas G1, G2, ···, Gi. At this point, to achieve the objective of analyzing the reaction between the binding substances S1, S2, ···, Sn and the target species with a wide measurement range, the combination of binding substances S1, S2, ···, Sn in each of the areas G1, G2, ···, Gi is determined to be identical on the same flow channel.

With this arrangement, it is possible to analyze the reaction between the binding substances S1, S2, ··· , Sn, which require a wide measurement range, and the target species without the need of varying the incident angle of the incident light. Consequently, in addition to being possible to analyze plural target species as in the example 6-1, it is possible to carry out measurement with high time resolution since no time is required to vary the incident angle of the incident light.

As is the case with the examples 6-1, 6-2, it is possible to determine voluntarily which binding substance S1, S2, ···, Sn is immobilized in which area G1, G2, ···, Gi on which flow channel P1, P2, ···P, according to the target species to be analyzed.

### (Q) Seventeenth Embodiment

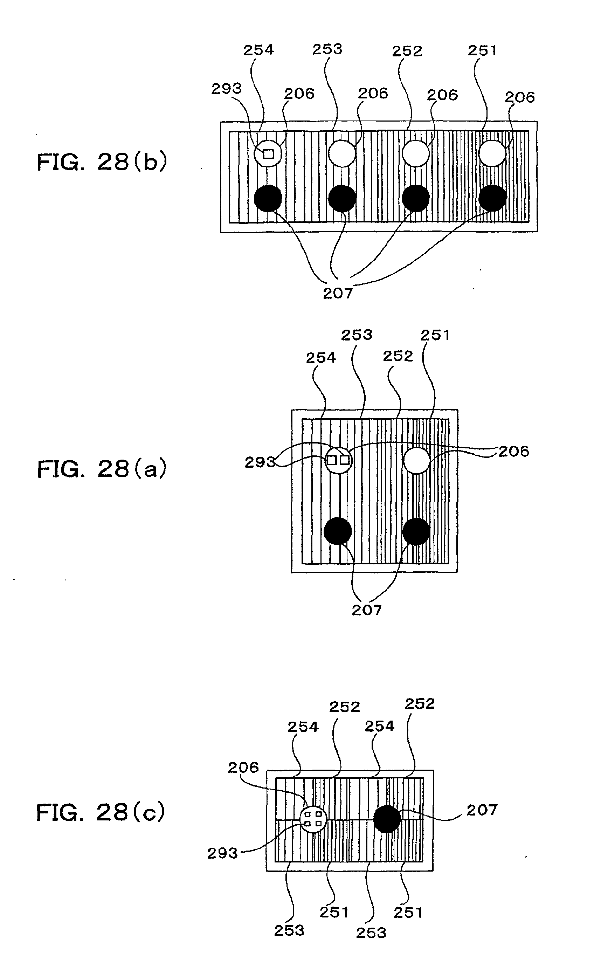

Next, the seventeenth embodiment of the present invention is described with reference to FIG. 28, which is an enlarged view of the sensor chip surface. In this figure, substantially identical components with the eleventh through sixteenth embodiments are indicated by the same reference numerals.

The present embodiment has a structure using the same analysis apparatus 210 and the same sensor chip as those of the eleventh embodiment.

In this embodiment, as shown in FIG. 28(a), the spots of the binding substances 206, 207 are immobilized so as to be across boundaries between the areas 251, 252 and 253, 254, which have different groove pitches.

With this arrangement, it is possible to carry out analysis with a small number of spots in which the binding substances 206, 207 are immobilized. By extension, it becomes possible to miniaturize the sensor chip and to increase the number of reactions that can be detected with the single detection.

The above description will be further discussed in more detail.

In the conventional example shown in FIG. 28(b), each of the spots of the binding substances 206, 207 are immobilized within one of the areas 251-254. In this case, it is necessary to immobilize the same number of spots as the number areas 251-254 for each of the binding substances 206, 207, and only a single detection area 293 can be disposed for each of the spots. Incidentially, the detection area 293 means an area by which the reflection light for detection is reflected. Although having a rectangular shape in FIG. 28, the detection area 293 may also have any other arbitrarily determined shape such as, for example, a rounder shape.

On the other hand, as shown in FIG. 28(a), by immobilizing the spots of binding substances 206, 207 so as to be across boundaries between areas 251, 252 and 253, 254 with different groove pitches, it becomes possible to divide each of the spots into two detection areas between one area and another area having different groove pitches. Consequently, it is possible to carry out measurement with two different measurement ranges at a single spot.

The position in which a binding substance is immobilized is not limited to the boundary between two areas having different groove pitches, but also can be the boundary between more than two areas as long as the areas having different groove pitches. FIG. 28(c) shows the case where a diffraction grating is formed on a sensor chip in such a manner that four areas 251-254 with different groove pitches define a cross-shaped boundary. In this case, by immobilizing each spot of the binding substances 206, 207 so as to enclose the center of the boundary's cross shape, it is possible to use each of the overlapping areas between the individual spot of the binding substances 206, 207 and each of the areas 251-254 as a detection area 293, namely, it is possible to make four detection areas 293 at a single spot. Consequently, it is possible to carry out measurement with four different measurement ranges at a single spot.

### (R) Eighteenth Embodiment

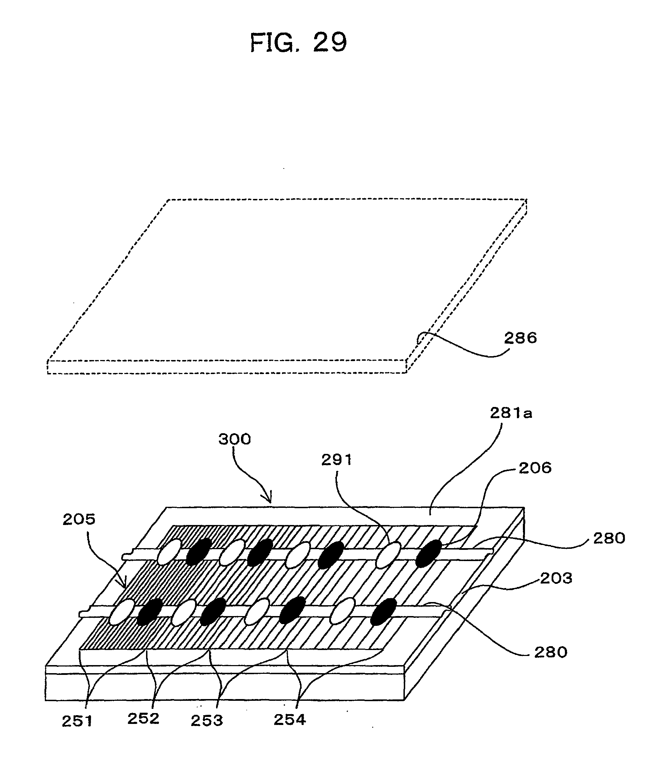

Next, the eighteenth embodiment of the present invention is described with reference to FIGs. 25, 29. In these figures, substantially identical components with the eleventh through seventeenth embodiment are indicated by the same reference numerals.

The basic constitution of the present embodiment is identical with that of the eleventh embodiment. Namely, the analysis apparatus is constituted in such a manner that the light emitted from the light source 212 is reflected by the sensor chip 300 and detected by the light detecting unit 213. Also, like the eleventh embodiment, the sensor chip 300 according to the present embodiment is identical with that of the conventional sensor chip in its basic constitution. Namely, its surface (sensor surface) 281a is covered with a metal layer 203, and a diffraction grating 205 is formed over the metal layer 203 over plural areas 251, 252, 253, 254, which are disposed on the metal layer 203.

As shown in FIG. 29, this embodiment has plural flow channels 280, through each of which a sample flows, laid in a direction orthogonal to an uneven surface being a diffraction grating 205. The flow channels 280 are disposed between a cover 286 covering the surface of the sensor chip 300 and the sensor chip 300, and are formed in such a manner that they pass together on each of the areas 251-254 on the sensor chip. Interstices between these two adjacent flow channels 280 are filled with seals such that the samples do not become mixed.

In each of the areas 251-254 on the flow channels 280, a binding substance 206 and a non-binding substance 291 are imobilized. The non-binding substance 291 is a substance that does not have the properties of binding specifically to the target species to be detected, and the appropriate non-binding substance 291 is selected in accordance with the target species (chemical species, biochemical species, biological species, etc.) to be detected. When the sample contains plural target species, plural binding substances 206 and plural non-binding substances 291 are selected according to the plural target species, respectively, and immobilized on different areas 251-254. Consequently, the area on which the binding substance 206 is immobilized functions as a reaction area, while the area on which the non-binding substance 291 is immobilized and the area on which either the binding substance 206 or the non-binding substance 291 is not immobilized each function as a non-reaction area. If the metal layer 203 is composed of a metal that does not bind specifically to the target species, it is also preferable that any non-binding substance 2091 is not immobilized, and the area on which either the binding substance 206 or the non-binding substance 291 is not immobilized and in which the metal layer 203 is laid bare is used as a non-reaction area.

Moreover, as shown in FIG. 25, the present embodiment also has a sample introducing apparatus 287, disposed upstream of the flow channels 280 of the analysis apparatus 210, for assigning different sample fluids to the flow channels 280, respectively, and for introducing each of the assined sample fluids to the respective flow channel.

The remaining constitution is identical with that of the eleventh embodiment.

With this structure, the reflection light from the individual area 251-254 includes the light that has been reflected by the reaction area and the light that has been reflected by the non-reaction area. The reflection light reflected by the reaction area changes according to quantitative and/or qualitative factors in connection with the sample, while the reflection light reflected by the non-reaction area is not affected by the sample and its intensity is determined only by the structure of the diffraction grating surface.

Because of these characteristics, when carrying out sample analysis method using the sensor chip 300 of the present embodiment, in addition the same steps as in the eleventh embodiment, the method further has the step of assigning plural different samples to the plural flow channels, respectively, and irradiating the sensor surface with light while making each of the assigned samples flow through the respective flow channel, the step of identifying a groove pitch with which a surface plasmon resonance occurs for each of the flow channels and for each of the reaction area and the non-reaction area, and the step of analyzing based on the groove pitch of the reaction area and the non-reaction area for each of the flow channels.

On this account, since the reflection light from a reaction area where the binding substance binds to the target species can be analyzed using the reflection light from the non-reaction area adjacent to the reaction area as a reference, in addition to the same advantages as are obtained by the eleventh embodiment, it is possible to analyze reliably the change caused by the specific binding of the binding substance to the target species, as in the thirteenth embodiment. Besides, as in the sixteenth embodiment, since plural samples can be analyzed at a time, it is possible to carry out analysis work with efficiency. Also, since the plural sample can be alanyzed under the same conditions, it is possible to analyze differences between the samples clearly.

### (S) Nineteenth Embodiment

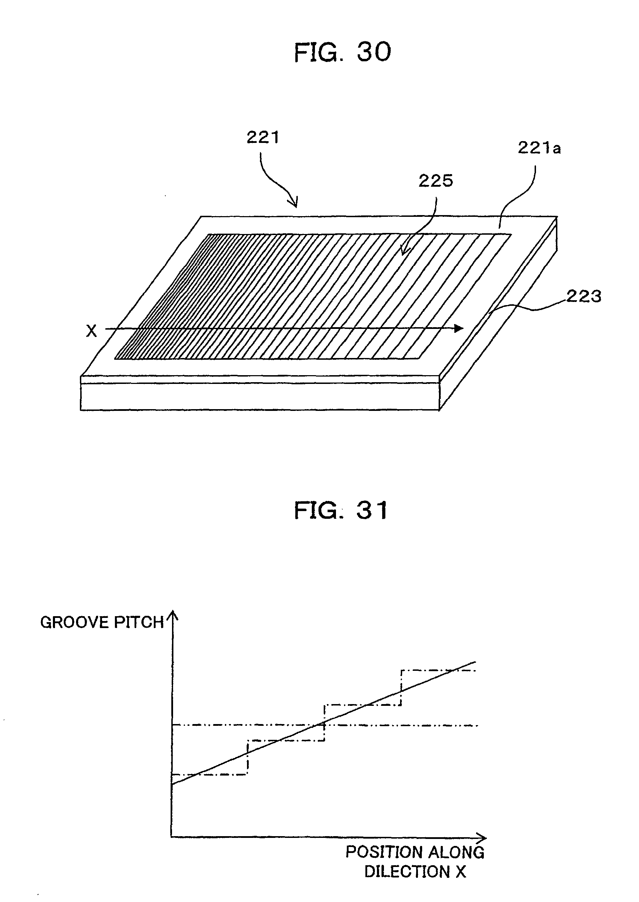

Next, the constitution of a sensor chip (surface plasmon resonance sensor chip) 221 according to the nineteenth embodiment of the present invention is described with reference to FIG. 30.

As is the eleventh embodiment, the sensor chip 221 according to the present embodiment is identical with the conventional sensor chip in its basic constitution. Namely, its surface (sensor surface) 221a is covered with a metal layer 223, and a diffraction grating 225 is formed on the metal layer 223. In the present embodiment, the diffraction grating 225 is formed in such a manner that its groove pitches have a continuous distribution. Specifically, FIG. 31 shows groove pitches viewed in a direction of the arrow X in FIG. 30. As indicated by the solid line in FIG. 31, a diffraction grating 225 is formed in such a manner that the groove pitches vary smoothly between two each adjacent grooves. Incidentally, in FIG. 31, the single-dashed line indicates the variation of groove pitches in the sensor chip of the eleventh embodiment, while the double-dashed line indicates the variation of groove pitches in the conventional sensor chip.

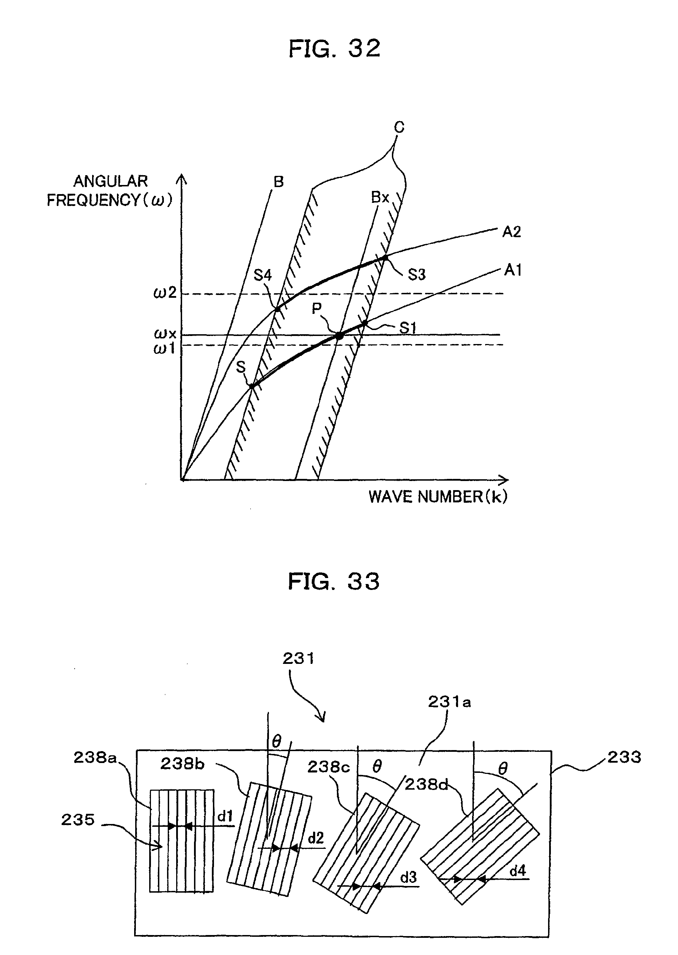

The wave number of the evanescent wave occurs along the diffraction grating 225 upon light irradiation depends on, as indicated by the formula 2, the grating constant of the diffraction grating 225, which grating constant depends on the groove pitches of the diffraction grating 225. Consequently, with the above structure, by using irradiation light with a constant wave number, it is possible to obtain various evanescent waves whose wave numbers vary in a continuous distribution. FIG. 32 is a dispersion relationship diagram in this case, showing the relation between the angular frequency ω and the wave number k for each of the surface plasmon wave and the evanescent wave.

In FIG. 32, the band indicated by the reference code C shows the relation between the angular frequencies ω and the wave numbers k of evanescent waves that occur along all of the diffraction grating 225 as a whole. The band is an aggregation of straight lines parallel to the straight line B0, which indicates the relation between the angular frequency ω and the wave number k of the incident light. In the figure, the ranges within which the curved lines A1, A2 overlap with the band C are indicated by the line segments S1-S2, S3-S4, which also indicate severally the ranges within which a surface plasmon resonance occurs.

Since the ranges within which a surface plasmon resonance spread seamlessly as described above, even when irradiating with light of a single wavelength at a predetermined incident angle, a resonance phenomenon occurs at least in any positions on the diffraction grating 225. In FIG. 32, for example, when irradiating with the light whose angular frequency is ωx, the point Px of the angular frequency ωx on the curved line A1 is a resonance point at which a resonance phenomenon occurs. An evanescent wave (indicated by the straight line Bx) that passes through the resonance point Px is the evanescent wave that resonates with the surface plasmon wave indicated by the curved line A1. On the diffraction grating 225, a position that has the groove pitch corresponding to the straight line Bx is assumed as the position in which a resonance phenomenon actually occurs.

With the sensor chip 221 according to the present embodiment, since a resonance phenomenon occurs at least in any position on the diffraction grating 225, in order to identify the groove pitch with which a resonance phenomenon occurs, it is unnecessary to carry out calculation such as approximation or interpolation, as is needed in the eleventh embodiment. Consequently, when using the analysis apparatus of FIG. 20, sample analysis can be carried out simply by detecting a position in which a resonance phenomenon occurs from the intensity of the reflection light, and by comparing the groove pitch corresponding to the position (in addition to the resonance wavelength determinatied from the reflection-light intensity, in the case of a wavelength-change type, or the resonance angle determined from the reflection-light intensity, in the case of an angle-change type) with a working curve. It becomes therefore possible to analyze the concentration of target species in the sample more easily and more precisely.

### (T) Twentieth Embodiment

Next, the constitution of a sensor chip (surface plasmon resonance sensor chip) 231 according to the twentieth embodiment of the present invention is described with reference to FIG. 33.

Like the conventional sensor chip, the sensor chip 231 according to the present embodiment is constituted in such a manner that its surface (sensor surface) 231a is covered with a metal layer 233, and that a diffraction grating 235 is formed on the metal layer 233. Besides, in the present embodiment, plural determination areas 238a-238d are disposed discretely on the metal layer 233, and a diffraction grating 235 is formed in each of the determination areas 238a-238d.

Among the diffraction gratings 235 formed in the determination areas 238a-238d, respectively, their groove pitches are identical with each other while their groove orientations are different from each other. Specifically, when the groove orientation of the diffraction grating 235 in the determination area 238a is used as a reference, the groove orientation in the determination area 238b is inclined θ2, the groove orientation in the determination area 238c is inclined θ3, and the groove orientation in the determination area 238d is inclined θ4 toward the reference. As a result, when viewed from a direction perpendicular to the groove orientation in the determination area 238a, a substantial groove pitch in the determination area 238a is still d1, while a substantial groove pitch d2 in the determination area 238b is d1/cosθ2, a substantial groove pitch d3 in the determination area 238c is dl/cosθ3, and a substantial groove pitch d4 in the determination area 238d is d1/cosθ4. When the relation between the inclination angles is assumed as θ2 < θ3 < θ4, the relation between the substantial groove pitches is defined as d1 < d2 < d3 < d4. The substantial groove pitches therefore differ among the determination areas 238a-238d.

Consequently, when the sensor chip 231 according to the present embodiment is irradiated with light in a specific direction, each of the determination areas 238a-238d produces an evanescent wave whose wave number in accordance with a substantial groove pitch when respect to the irradiation direction. Accordingly, resonance points at each of which a surface plasmon wave resonates with an evanescent wave also have a certain distribution. Consequently, as in the eleventh embodiment, it is possible to analyze a sample having a wide refractive index distribution even if the measurement range is limited.

### (U) Others

Up to this point, several embodiments of the present invention have been explained, although the present invention is not limited by the above embodiments but also can be carried out with various modifications as long as it departs from the gist of the present invention.

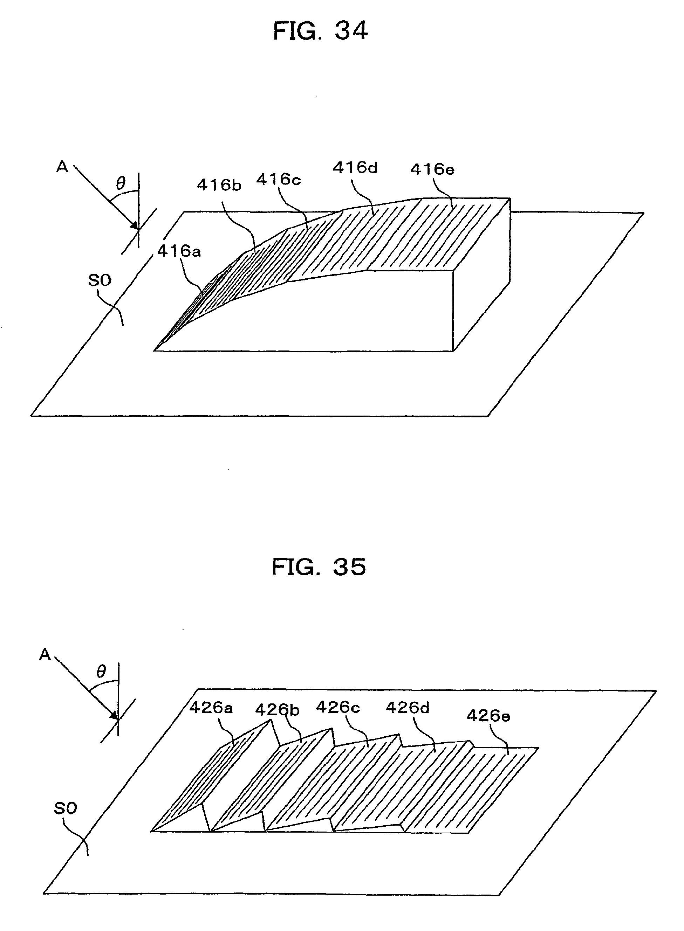

While in the first embodiment, for Example, the center diffraction grating surface 5e is disposed parallel to the reference plane S0, it is also possible to adopt an arrangement as shown in FIG. 34. In the figure, diffraction grating surfaces 416a-416e are arranged in such a manner that a diffraction grating surface 416e at one end is disposed parallel to the reference plane S0, while the inclination angles of the remaining diffraction grating surfaces 416a-416d with respect to a light irradiation diretion gradually increase in turn. However, when disposing a definite number of diffraction grating surfaces, it is preferable to adopt an arrangement as in the first embodiment, namely, the inclination angles gradually increase from the center diffraction grating surface 5e toward either side. With this arrangement, it is possible to make prominence of the center relatively low so as not to prevent the flow of a sample fluid.

Further, it is not necessarily required to arrange the diffraction grating surfaces continuously. It is also possible to dispose the individual diffraction grating surface 426a-426e as shown in FIG. 35 in such a manner that one end is disposed in the same level as the reference plane S0 while the other end is raised so that it forms a certain inclination angle with respect to the reference plane S0.

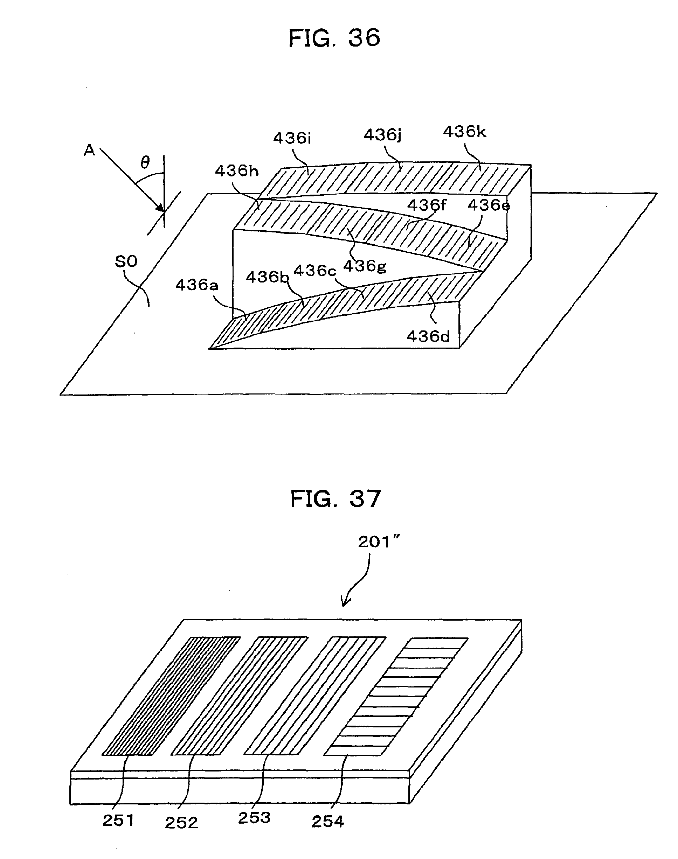

In order to dispose a larger number of diffraction grating surfaces in a single measurement spot, it is also possible to arrange the diffraction grating surfaces 436a-436k in plural lines as shown in FIG. 36. With this arrangement, it becomes possible to dispose a number of diffraction grating surfaces 436a-436k in a compact size.

Among the above embodiments, some embodiments dispose planate diffraction grating surfaces 5a-5i in such a manner that when viewed from a diretion parallel to the specific plane S1, the inclination angles with respect to the reference plane S0, while other embodiments use a diffraction grating surface 25 having a curved surface whose light-irradiation side bulges out. These arrangements and shapes are intended for preventing the rays of light reflected by the diffraction grating surfaces 5a-5i or the rays of light reflected by various positions on the diffraction grating surface 25 from being mixed with each other. However, the present invention is not limited to these arrangements or shapes as long as it is possible to identify the reflection light from the individual diffraction grating surface 5a-5i or from the individual position on the diffraction grating surface 25.

Further, in the above embodiments, the sensor chip of the present invention is constituted as a sensor chip for multipoint simultaneous measurement purpose (or multi-item measurement purpose), in which plural measurement spots are disposed on the sensor surface. However, it is also possible to apply the present invention to a sensor chip whose sensor surface serves as a single measurement spot as a whole.

While the above embodiments refer to the case where the present invention is applied to a conventional diffraction-grating type sensor chip having a general structure, in which the diffraction grating is formed on the surface of the metal layer, the present invention is also applicable to various diffraction-grating type sensor chips having other structures. Specifically, it is possible to apply the present invention to any sensor chip as long as it has a diffraction grating surface on which a diffraction grating is formed, which diffraction grating generates an evanescent wave upon light irradiation, and a metal layer that is disposed along the diffraction grating surface and along which surface a surface plasmon wave can be induced upon light irradiation.

It is also possible to carry out two or more of the above embodiments in combination. Specifically, it is preferable to carry out, for example, the third embodiment and the sixth embodiment in combination, as well as the fifth embodiment and the seventh embodiment in combination.

It is especially preferable to combine the third embodiment and/or the eighth embodiment with the fourth embodiment and/or the ninth embodiment to carry out both the correction using a non-diffraction surface and the correction using a non-reaction area, because it enables to carry out analysis reliably with high precision. Specifically, the light reflected from a reaction area is corrected based on a non-diffraction surface to thereby calculate a resonance angle while the light reflected from a non-reaction area is corrected based on a non-diffraction surface to thereby calculate another resonance angle. Based on both of the resonance angles, it is possible to calculate the shift amount of resonance angle resulting from a real specific reaction to thereby obtain the concentration of a target species.

In the fourth embodiment and the ninth embodiment, there are two cases regarding the selection of a non-binding substance: the case where a substance not having the property of causing any specific reaction with a target species is selected in accordance with the target species; and the case where the same substance is used regardless of the target species.

In the case where an appropriate substance is selected in accordance with the target species, it is preferable to immobilize both the binding substance and the non-binding substance in the same diffraction grating surface, as in the fourth embodiment. Considering labor savings in production of the sensor chip, on the contrary, it is more advantageous to immobilize a non-binding substance on a measurement spot adjacent to a measurement spot on which the binding substance is immobilized so as to use the adjacent measurement spot as a non-reaction area, as in the ninth embodiment.

On the other hand, in the case where the same substance is used as a non-reaction substance for all of the target species, it is possible to use BSA (bovine serum albumin), which is used as a blocking agent, or gelatin. In this case, it is advantageous in view of manufacturability to immobilize a non-reaction substance on all of the diffraction grating surfaces in one or more of the measurement spots on the sensor chip and to use these one or more measurement spots as non-reaction areas, as in the ninth embodiment.

Meanwhile, in the modification of the eleventh embodiment (refer to FIG. 19), the areas 251-254 are disposed discretely in such a manner that those groove orientations are uniform. On the contrary, it is also preferable to dispose the areas 251-53 as the sensor chip 1" shown in FIG. 37, namely, in such a manner that the groove orientation of one or more of the areas 254 is different from those of the remaining areas 251-53, or in such a manner that the groove orientations of all of the areas 251-254 are different with each other. In this case, by light irradiating while varying a light irradiation diretion in accordance with the areas 251-254 such that the light enters perpendicular to the groove orientation of each area, it is possible to achieve the same operations and advantages as are achieved in the eleventh embodiment.

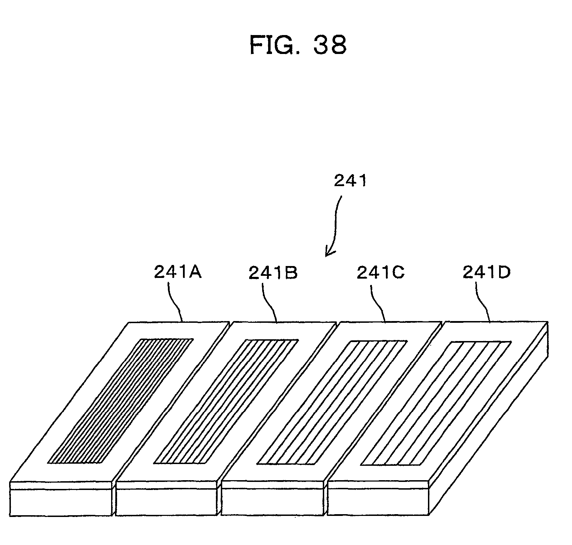

Besides, as shown in FIG. 38, by preparing plural sensor chips 241A-241D with different groove pitches to use the aggregate of these sensor chips as a single sensor chip 241, it is possible to achieve the same operations and advantages as are achieved in the eleventh embodiment.

While the above embodiments refer to the case of using a conventional diffraction-grating type sensor chip having a general structure, the present invention can be also carried out using various diffraction-grating type sensor chip having other structures. Specifically, it is possible to apply the present invention to any sensor chip as long as it has a sensor surface in contact with the sample, a metal layer that is disposed in the vicinity of the sesor surface and on which a surface plasmon wave can be induced and a diffraction grating that is disposed in the vicinity of the sensor surface and generates an evanescent wave upon light irradiation.

The above embodiments does not necessarily require to be carried out one severally, but also can be carried out two or more in combination.

Besides, the kind of binding substance to be immobilized on each of the areas with different groove pitches can be determined arbitrarily according to need.

It is also possible to carry out two or more of the above embodiments in combination. Specifically, it is preferable to carry out, for example, the twelfth embodiment and the fourteenth embodiment in combination.

It is especially preferable to combine the twelfth embodiment with the thirteenth embodiment to carry out both the correction using a non-diffraction surface and the correction using a non-reaction area, because it enables to carry out analysis reliably with high precision. Specifically, the light reflected from a reaction area is corrected based on a non-diffraction surface to thereby calculate a resonance angle while the light reflected from a non-reaction area is corrected based on a non-diffraction surface to thereby calculate another resonance angle. Based on both of the resonance angles, it is possible to calculate the shift amount of resonance angle resulting from a real specific reaction to thereby obtain the concentration of a target species.

In the thirteenth embodiment, there are two cases regarding the selection of a non-binding substance: the case where a substance not having the property of causing any specific reaction with a target species is selected in accordance with the target species; and the case where the same substance is used regardless of the target species.

In the case where the same substance is used as a non-reaction substance for all of the target species, it is possible to use BSA (bovine serum albumin), which is used as a blocking agent, or gelatin.

As in the examples given above, the present invention can be carried out with various modifications as long as it departs from the gist of the present invention.

Description will be made hereinbelow of working examples. It is to be noted that the present invention should by no means be limited to the following examples, and various changes or modifications may be suggested without departing from the gist of the invention.

### [Example 1]

On the surface of a flat-shaped substrate of polycarbonate, there were provided uneven forms having projections and depressions with a groove pitch of approximately 870 nm and a groove depth of approximately 40 nm as diffraction gratings. A depth of approximately 80 nm of gold was then evaporated onto the surface of the substrate, thus producing a sensor chip.

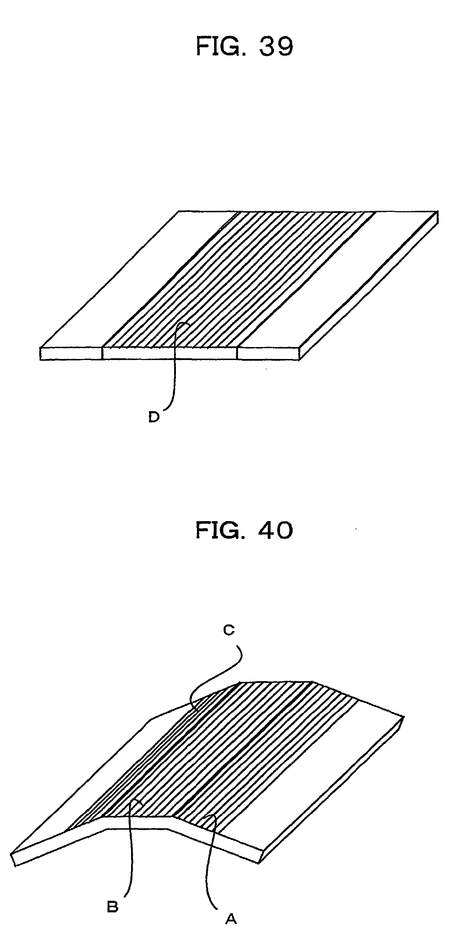

After that, this sensor chip was formed into a rectangular shape with side-lengths of 15 mm and 25 mm such that the diffraction gratings were arranged thereon in parallel to the 25-mm sides. FIG. 39 shows an example of the thus produced sensor chip.

Subsequently, this sensor chip was folded approximately 0.8° on two fold lines each of which was parallel to a 25-mm side of the sensor chip and which included points locating on a 15-mm side, approximately 5.5 mm, 4mm, and 5.5 mm, respectively, from one of its edges. More precisely, as shown in FIG. 40, a 5.5 mm × 25 mm rectangular area (hereinafter called area A) and a 4 mm × 25 mm rectangular area (hereinafter called area B) were adjacent to each other, in contact with each other on one of their 25-mm sides. On the other side of the area B, opposing to the area A with respect to the area B, there was another 5.5 mm × 25 mm rectangular area (hereinafter called area C) that was in contact with the area B on one of their 25-mm sides. The chip was folded in such a way that the area B formed an angle of 0° with the reference plane; that the area C formed an angle of approximately 0.8° with the area B; and that the area A formed an angle of approximately -0.8° with the area B. Accordingly, the area A formed an angle of approximately 1.6° with the area C. Further, the diffraction grating was placed on the convex side of the folded sensor chip, so that a sample could be assessed on the convex side of the sensor chip.

A central 10 mm × 10 mm area of the thus produced sensor chip served as a measurement spot, and angle scanning was performed using a resonance angle detecting type SPR assessment device, FLEX CHIPS™ Kinetic Analysis System (*HTS Biosystems Inc*.), to measure the intensity of reflected light. With use of light of a wavelength of approximately 870 nm as incident light, and purified water, as a sample, measurement was performed at arbitrary three points in each of the above-mentioned areas.

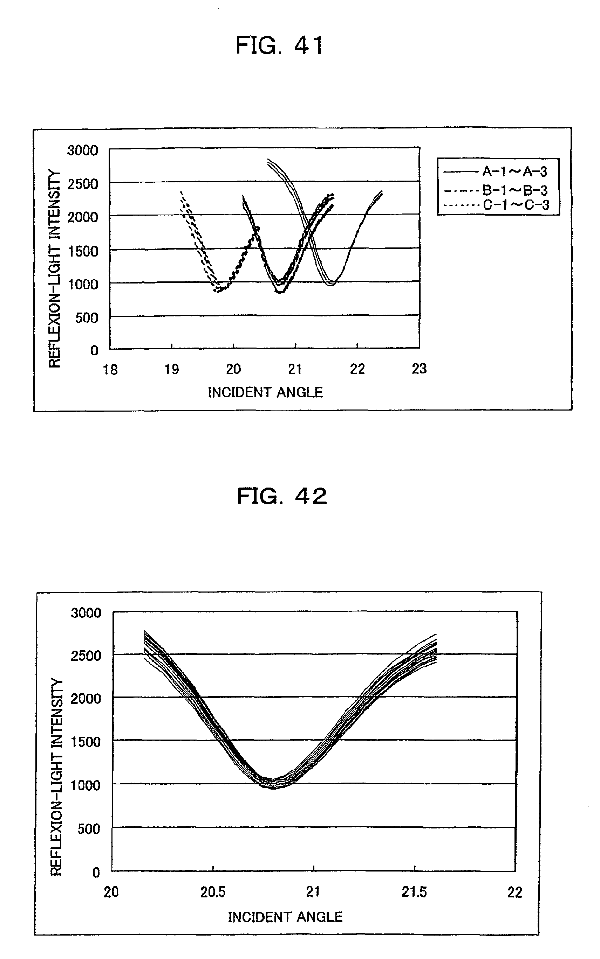

FIG. 41 is a plot showing relations between the incident angle of incident light and the intensity of reflected light measured, in the neighborhood of the resonance angles. In each of the graphs, an angle at which the reflected light intensity takes a minimum value indicates a resonance angle. Table 1 shows measurement results in each of the areas, where SD denotes the standard variation; CV, the coefficient of variation.

**[Table 1]**

| Area | Point | Resonance angle of purified water | Average | SD | CV(%) |
|---|---|---|---|---|---|
| A | A-1 | 21.616 | | | |
| | A-2 | 21.645 | | | |
| | A-3 | 21.663 | 21.641 | 0.024 | 0.111 |
| B | B-1 | 20.802 | | | |
| | B-2 | 20.789 | | | |
| | B-3 | 20.781 | 20.791 | 0.011 | 0.051 |
| C | C-1 | 19.818 | | | |
| | C-2 | 19.870 | | | |
| | C-3 | 19.891 | 19.860 | 0.038 | 0.189 |

The three measurement points in the area A were designated as A-1, A-2, and A-3, respectively; the three measurement points in the area B were designated as B-1, B-2, and B-3, respectively; and three measurement points in the area C were designated as C-1, C-2, and C-3, respectively;

As shown in Table 1, the average resonance angles in the areas A, B, and C were 21.641°, 20.791°, and 19,860°, respectively.

Next, a flat-shaped sensor chip was separately prepared without being folded as in FIG. 39, and angle scanning was performed, as in the cases of the areas A, B, and C, using a resonance angle detecting type SPR assessment device, FLEX CHIPS™ Kinetic Analysis System, to measure the intensity of reflected light. With use of a light beam of a wavelength of approximately 870 nm as incident light, and purified water, as a sample, measurement was performed at 400 points in area D of the flat-shaped sensor chip.

FIG. 42 is a plot showing relations measured between the incident angle of the incident light and the intensity of reflected light, in the neighborhood of the resonance angle. Table 2 shows measurement results.

**[Table 2]**

| Area | The number of points | Resonance angle of purified water | Average | SD | CV(%) |
|---|---|---|---|---|---|
| D | 400 | Maximum 20.877 | 20.832 | 0.019 | 0.092 |
| | | Minimum 20.797 | | | |

As shown in FIG. 42, all the measurement points in the area D reveal one identical resonance angle, and the average resonance angle is 20.832° as shown in FIG. 2.

Partly since the diffraction gratings in the areas A, B, C, and D had the same groove pitch and the same groove depth, and partly since the same sample, purified water, was used in the measurement, the resonance angles of these areas should have taken one identical value. However, since the areas A, B, and C had an angle of -0.809°, 0.041°, and 0.972°, respectively, in comparison with the area D for which no angle was introduced, the measured resonance angles revealed apparently different values.

These results indicate that it is possible to vary the incident angle of the incident light that enters a diffraction grating surface, by inclining the diffraction grating surface to have an inclination angle.

### [Example 2]

As in the case of Example 1, on the surface of a flat-shaped substrate of polycarbonate, there were provided diffraction gratings formed of projections and depressions having a groove pitch of approximately 870 nm and a groove depth of approximately 40 nm. A depth of approximately 80 nm of gold was then evaporated onto the surface of the substrate, thus producing a sensor chip. This sensor chip was folded to have 26 surfaces in such a manner that each of the surfaces had a different inclination angle. Hereinafter, the areas of those surfaces with such different inclination angles were designated as area NO. 1, area NO. 2, and so forth, giving them natural numbers in an ascending order of the inclination angle formed by each area with a horizontal surface.

Using the thus produced sensor chip that was given 26 surfaces with different inclination angles, angle scanning was performed by an SPR assessment device, FLEX CHIPS™ Kinetic Analysis System, to measure the intensity of reflected light. The sample was purified water, and a light beam of a wavelength of approximately 870 nm was used as incident light. The resonance angle of each of the areas was identified to compare with the measurement result in the area D, which had no inclination angle, in Example 1, so as to find the inclination angles of the separate areas. The following table 3 shows the measurement results.

**[Table 3]**

| Area NO. | Resonance angle of purified water | Angle of the diffraction grating surface |
|---|---|---|
| 1 | 21.768 | -0.936 |
| 2 | 21.746 | -0.914 |
| 3 | 21.734 | -0.902 |
| 4 | 21.713 | -0.881 |
| 5 | 21.697 | -0.865 |
| 6 | 21.665 | -0.833 |
| 7 | 21.572 | -0.740 |
| 8 | 21.415 | -0.583 |
| 9 | 21.364 | -0.532 |
| 10 | 21.263 | -0.431 |
| 11 | 21.164 | -0.332 |
| 12 | 21.120 | -0.288 |
| 13 | 21.053 | -0.221 |
| 14 | 21.008 | -0.176 |
| 15 | 20.954 | -0.122 |
| 16 | 20.915 | -0.083 |
| 17 | 20.864 | -0.032 |
| 18 | 20.802 | 0.030 |
| 19 | 20.703 | 0.129 |
| 20 | 20.522 | 0.310 |
| 21 | 20.284 | 0.548 |
| 22 | 20.095 | 0.737 |
| 23 | 20.028 | 0.804 |
| 24 | 19.971 | 0.861 |
| 25 | 19.907 | 0.925 |
| 26 | 19.854 | 0.978 |

As a result, it was found that the areas had separate angles ranging from -0.936° to 0.978°.

After that, using this sensor chip in an SPR assessment device, FLEX CHIPS™ Kinetic Analysis System, the intensity of reflected light was measured. A light beam of a wavelength of approximately 870 nm was used as incident light, and ethanol aqueous solution concentrations of 2.5, 5, 10, 20, 30, 40, and 50 per cent were used as samples.

The following table 4 shows the concentration of ethanol in each area and the amount (hereinafter called a "shift amount") of change in the resonance angle caused by increasing the ethanol concentration.

**[Table 4]**

| Area No. | The shift amount of the resonance angle (in degrees) | | | | | | | |
|---|---|---|---|---|---|---|---|---|
| | EtOH 0% | 2.50% | 5% | 10% | 20% | 30% | 40% | 50% |
| 1 | 0.0000 | 0.0714 | 0.1367 | 0.2763 | 0.5883 | 0.9407 | Exceeding | Exceeding |
| | | | | | | | the range | the range |
| 2 | 0.0000 | 0.0698 | 0.1359 | 0.2783 | 0.5934 | 0.9519 | Exceeding | Exceeding |
| | | | | | | | the range | the range |
| 3 | 0.0000 | 0.0726 | 0.1412 | 0.2907 | 0.6005 | 0.9487 | Exceeding | Exceeding |
| | | | | | | | the range | the range |
| 4 | 0.0000 | 0.0714 | 0.1373 | 0.2802 | 0.5898 | 0.9455 | 1.1919 | Exceeding |
| | | | | | | | | the range |
| 5 | 0.0000 | 0.0740 | 0.1418 | 0.2850 | 0.5988 | 0.9487 | 1.1865 | Exceeding |
| | | | | | | | | the range |
| 6 | 0.0000 | 0.0696 | 0.1366 | 0.2798 | 0.5911 | 0.9326 | 1.1738 | Exceeding |
| | | | | | | | | the range |
| 7 | 0.0000 | 0.0723 | 0.1409 | 0.2887 | 0.5956 | 0.9498 | 1.1771 | Exceeding |
| | | | | | | | | the range |
| 8 | 0.0000 | 0.0735 | 0.1441 | 0.2878 | 0.5963 | 0.9511 | 1.1844 | 1.4028 |
| 9 | 0.0000 | 0.0822 | 0.1679 | 0.3460 | 0.6277 | 0.9709 | 1.2037 | 1.4343 |
| 10 | 0.0000 | 0.0731 | 0.1420 | 0.2817 | 0.5960 | 0.9570 | 1.1932 | 1.4352 |
| 11 | 0.0000 | 0.0690 | 0.1373 | 0.2816 | 0.6012 | 0.9669 | 1.2186 | 1.4489 |
| 12 | 0.0000 | 0.0727 | 0.1381 | 0.2756 | 0.5912 | 0.9207 | 1.1873 | 1.4777 |
| 13 | 0.0000 | 0.0730 | 0.1406 | 0.2899 | 0.6178 | 0.9692 | 1.2071 | 1.4075 |
| 14 | 0.0000 | 0.0774 | 0.1546 | 0.3095 | 0.6228 | 0.9874 | 1.2217 | 1.4492 |
| 15 | 0.0000 | 0.0744 | 0.1459 | 0.2880 | 0.6114 | 0.9601 | 1.1994 | 1.4247 |
| 16 | 0.0000 | 0.0727 | 0.1401 | 0.2842 | 0.6216 | 0.9583 | 1.1994 | 1.4241 |
| 17 | 0.0000 | 0.0755 | 0.1454 | 0.2950 | 0.6290 | 0.9650 | 1.2042 | 1.4334 |
| 18 | 0.0000 | 0.0726 | 0.1484 | 0.3111 | 0.6276 | 0.9698 | 1.2120 | 1.4377 |
| 19 | 0.0000 | 0.0741 | 0.1520 | 0.3161 | 0.6290 | 0.9731 | 1.2131 | 1.4418 |
| 20 | 0.0000 | 0.0803 | 0.1639 | 0.3240 | 0.6252 | 0.9799 | 1.2157 | 1.4526 |
| 21 | 0.0000 | 0.0715 | 0.1488 | 0.3185 | 0.6316 | 0.9759 | 1.2106 | 1.4484 |
| 22 | 0.0000 | 0.0771 | 0.1585 | 0.3337 | 0.6417 | 0.9763 | 1.2204 | 1.4552 |
| 23 | 0.0000 | 0.0862 | 0.1639 | 0.3051 | 0.6255 | 0.9574 | 1.1977 | 1.4272 |
| 24 | 0.0000 | 0.0720 | 0.1434 | 0.2930 | 0.6112 | 0.9464 | 1.1845 | 1.4189 |
| 25 | 0.0000 | 0.0723 | 0.1439 | 0.2980 | 0.6232 | 0.9536 | 1.1885 | 1.4311 |
| 26 | 0.0000 | 0.0764 | 0.1529 | 0.3034 | 0.6236 | 0.9573 | 1.1970 | 1.4381 |
| Average | | 0.0741 | 0.1462 | 0.2970 | 0.6120 | 0.9582 | 1.1995 | 1.4362 |
| SD | | 0.0039 | 0.0092 | 0.0187 | 0.0163 | 0.0152 | 0.0139 | 0.0175 |
| CV(%) | | 5.30 | 6.27 | 6.28 | 2.67 | 1.58 | 1.16 | 1.22 |

In all the areas, the coefficient of variation (CV) at each the ethanol concentration takes favorable values ranging from 1.2 to 6.3 per cent. In addition, the shift amount of the resonance angle in each area reveals the same value.

In consequence, it is apparent that the measurement accuracy is not affected even if a diffraction grating surface is inclined.

### [Example 3]

Of the measurement data obtained in the above Example 2, measurement data obtained when the incident angle of incident light was 21.5° was selected, and calculation was performed within this selected data to obtain the angle of the area that reveals a minimal intensity of reflected light when ethanol aqueous solution concentrations of 0, 2.5, 5, 10, 20, 30, 40, and 50 per cent, respectively, were used as samples. More precisely, the angle of each area (Table 3) and the intensity of reflected light in the area were used in regression calculation of an angle at which the intensity of reflected light takes a minimal value.

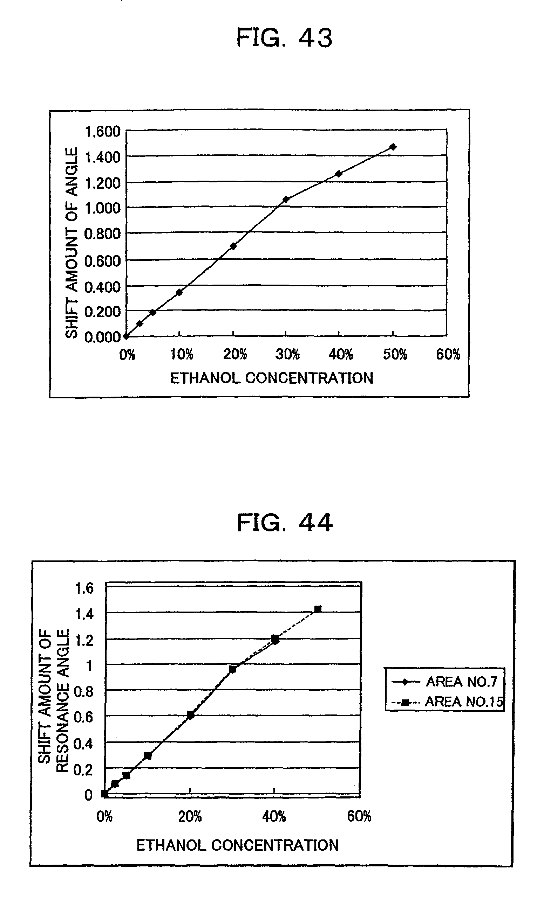

FIG. 43 shows relations between the concentration of ethanol aqueous solution and the shift amount of the angle (or the resonance angle) of the area that reveals a minimal intensity of reflected light.

On the basis of the resonance angle obtained with a generally practiced technique, or angle scanning, relationship between the concentration of ethanol aqueous solution and the shift amount of the resonance angle of the diffraction grating surfaces on areas NO. 7 and NO. 15, was examined. FIG. 44 shows such examination results.

The following table 5 shows the comparison result between FIG. 43 and FIG. 44.

**[Table 5]**

| Ethanol concentration | Diffraction grating surface with a minimal intensity of reflected light | | Area NO. 7 | | Area NO. 15 | |
|---|---|---|---|---|---|---|
| | Angle | Shift amount | Resonance angle | Shift amount | Resonance angle | Shift amount |
| 0% | -0.723 | 0.000 | 21.572 | 0.000 | 20.954 | 0.000 |
| 2.50% | -0.622 | 0.101 | 21.644 | 0.072 | 21.029 | 0.075 |
| 5% | -0.539 | 0.184 | 21.712 | 0.140 | 21.100 | 0.146 |
| 10% | -0.382 | 0.341 | 21.860 | 0.288 | 21.242 | 0.288 |
| 20% | -0.032 | 0.690 | 22.167 | 0.595 | 21.565 | 0.611 |
| 30% | 0.331 | 1.053 | 22.521 | 0.949 | 21.914 | 0.960 |
| 40% | 0.533 | 1.256 | 22.749 | 1.177 | 22.153 | 1.199 |
| 50% | 0.742 | 1.465 | | | 22.379 | 1.425 |

As a comparison result, it was found that FIG. 43 and FIG. 44 show similar shift amounts for each concentration of ethanol. Therefore, utilizing a sensor chip provided with diffraction grating surfaces according to the present invention, it is possible to obtain the shift amount of the resonance angle, which has been found as a result of a generally performed technique (FIG. 44), in the form of a variation in the resonance angle revealed by the diffraction grating surface that reveals the minimal reflection intensity, by using a measurement method in which the incident angle of incident light is not changed.

### [Example 4]

Of the measurement data obtained in Example 2, data analysis was performed on the data that was obtained when the incident angle of incident light was 21.5° or 21.0°.

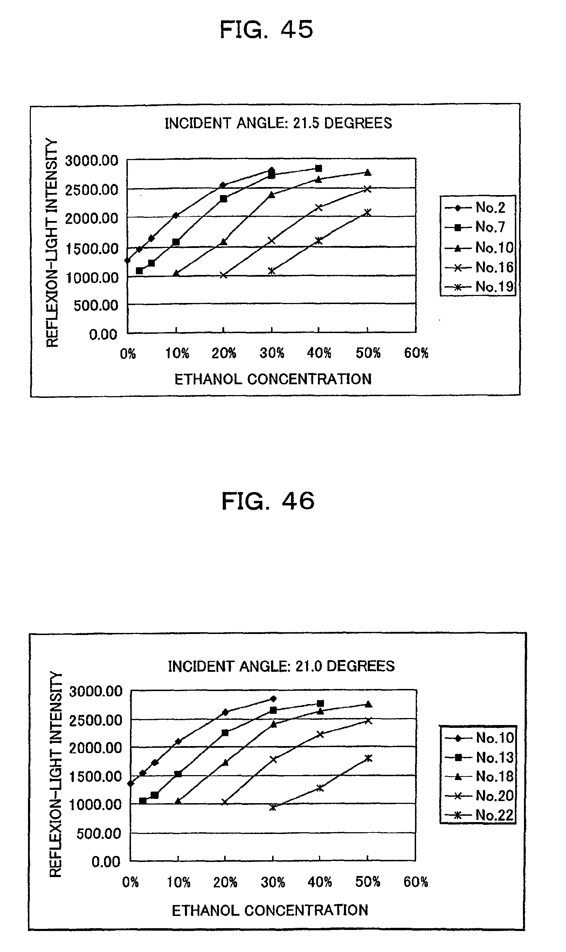

In a case where the incident angle of incident light was 21.5°, relation between the intensity of reflected light and ethanol concentrations was analyzed in areas NO. 2, NO. 7, NO. 10, NO. 16, and NO. 19. FIG. 45 and table 6 show the analysis result. In a case where the incident angle of incident light was 21.0°, relation between the intensity of reflected light and ethanol concentration was analyzed in areas NO. 10, NO. 13, NO. 18, NO. 20, and NO. 22. FIG. 46 and table 7 show the analysis result.

**[Table 6]**

| An incident angle of 21.5° | | | | | |
|---|---|---|---|---|---|
| Ethanol concentration | Diffraction grating surface area | | | | |
| | No.2 | No.7 | No.10 | No.16 | No.19 |
| 0% | 1278.07 | | | | |
| 2.50% | 1461.97 | 1101.32 | | | |
| 5% | 1648.93 | 1223.44 | | | |
| 10% | 2026.36 | 1590.83 | 1039.49 | | |
| 20% | 2541.48 | 2314.61 | 1580.55 | 1015.67 | |
| 30% | 2789.89 | 2707.64 | 2369.13 | 1593.10 | 1078.98 |
| 40% | | 2825.09 | 2644.40 | 2158.68 | 1592.99 |
| 50% | | | 2767.90 | 2484.18 | 2068.05 |

**[Table 7]**

| An incident angle of 21.0° | | | | | |
|---|---|---|---|---|---|
| Ethanol concentration | Diffraction grating surface area | | | | |
| | No.10 | No.13 | No.18 | No.20 | No.22 |
| 0% | 1353.38 | | | | |
| 2.50% | 1543.41 | 1049.68 | | | |
| 5% | 1736.37 | 1157.24 | | | |
| 10% | 2106.79 | 1517.15 | 1048.67 | | |
| 20% | 2607.09 | 2254.11 | 1735.63 | 1038.87 | |
| 30% | 2839.95 | 2649.93 | 2403.10 | 1782.15 | 940.39 |
| 40% | | 2763.74 | 2624.11 | 2213.10 | 1279.24 |
| 50% | | | 2738.40 | 2456.48 | 1790.14 |

As shown in FIG. 45, if the incident angle of incident light was 21.5°, the intensity of reflected light in area NO. 2 was used for an ethanol concentration range of 0 to 10 per cent; the intensity of reflected light in area NO. 10 was used for an ethanol concentration range of 10 to 30 per cent; and the intensity of reflected light in area NO. 19 was used for an ethanol concentration range of 30 to 50 per cent. In this manner, it was confirmed that assessment could be performed on a wide range of ethanol concentrations, even if the incident angle of incident light is fixed.

Likewise, as shown in FIG. 46, if the incident angle of incident light was 21.0°, the intensity of reflected light in area NO. 10 was used for an ethanol concentration range of 0 to 10 per cent; the intensity of reflected light in area NO. 18 was used for an ethanol concentration range of 10 to 30 per cent; and the intensity of reflected light in area NO. 22 was used for an ethanol concentration range of 30 to 50 per cent. In this manner, it was confirmed that assessment could be performed on a wide range of ethanol concentrations, even if the incident angle of incident light is fixed.

Accordingly, even thought this invention uses an easier measurement technique, where the incident angle of incident light is fixed and where angle scanning is not performed, in comparison with a conventional technique, where angle scanning is performed to measure the intensity of reflected light, it is still possible to perform a wide range of measurement.

### [Example 5]

On the surface of a flat-shaped substrate of polycarbonate, there were provided diffraction gratings formed of projections and depressions having a groove pitch of approximately 870 nm and a groove depth of approximately 40 nm.

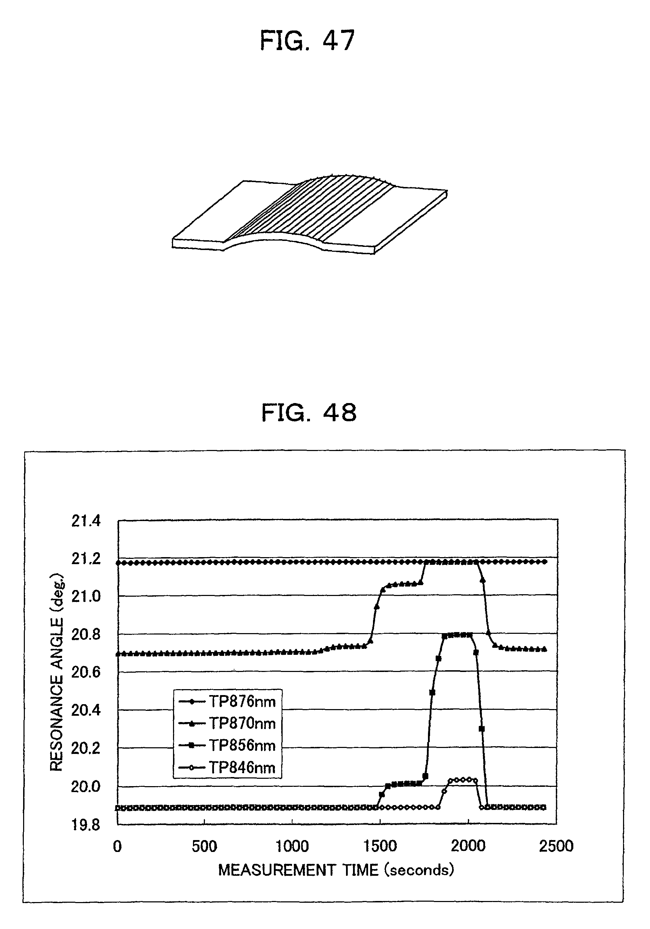

As shown in FIG. 47, the substrate was then made into a shape such that a cross section of the substrate taken along the direction perpendicular to the diffraction grating made a curved surface having a radius of curvature of 1150 mm and such that the diffraction grating was placed on the convex side of the substrate. After that, a depth of approximately 80 nm of gold was evaporated onto the surface of the substrate, thus producing a sensor chip.

Using the thus produced sensor chip, angle scanning was performed with a resonance angle detecting type SPR assessment device, FLEX CHIPS™ Kinetic Analysis System (*HTS Biosystems Inc*.), to measure the intensity of reflected light. In the measurement, a light beam of a wavelength of approximately 870 nm was used as incident light, and purified water served as a sample.

Table 8 shows detection results of the resonance angle of reflected light detected at every 0.33 mm-distance point along the direction perpendicular to the diffraction grating on the surface of the sensor chip.

**[Table 8]**

| | Curved surface A | | Curved surface B | |
|---|---|---|---|---|
| | Resonance angle | Difference | Resonance angle | Difference |
| | 20.6269 | | 20.6369 | |
| | 20.6302 | 0.0033 | 20.6400 | 0.0032 |
| | 20.6376 | 0.0074 | 20.6481 | 0.0080 |
| | 20.6467 | 0.0091 | 20.6514 | 0.0033 |
| | 20.6520 | 0.0053 | 20.6659 | 0.0145 |
| | 20.6585 | 0.0065 | 20.6695 | 0.0037 |
| | 20.6852 | 0.0267 | 20.6892 | 0.0197 |
| | 20.6887 | 0.0035 | 20.6966 | 0.0074 |
| | 20.6998 | 0.0111 | 20.7020 | 0.0054 |
| | 20.7082 | 0.0085 | 20.7074 | 0.0054 |
| | 20.7204 | 0.0122 | 20.7158 | 0.0084 |
| | 20.7255 | 0.0051 | 20.7262 | 0.0103 |
| | 20.7334 | 0.0078 | 20.7348 | 0.0086 |
| | 20.7562 | 0.0229 | 20.7408 | 0.0060 |
| | 20.7600 | 0.0038 | 20.7626 | 0.0218 |
| | 20.7736 | 0.0135 | 20.7720 | 0.0095 |
| | 20.7878 | 0.0143 | 20.7823 | 0.0103 |
| | 20.8013 | 0.0135 | 20.8006 | 0.0183 |
| Average | | 0.0103 | | 0.0096 |

The sum of the difference of angles among planes tangent to those points was 0.17°. As this value was smaller than the angle that should have been formed by the tangent planes locating at each of the ends of the diffraction grating area, it is assumed that the example chip was produced to have a radius of curvature bigger than that which was originally designed.

In this example, however, the mean of the angles formed between adjacent areas, each of which includes one of the above-mentioned 0.33 mm-spaced points, is controlled to take an extremely small value of 0.010°. It was confirmed that a diffraction grating surface can be formed on the surface of a sensor chip even if the grating has a curved surface.

### [Example 9]

On the surface of a flat-shaped substrate of polycarbonate, there were provided diffraction gratings formed of projections and depressions. A depth of approximately 80 nm of gold was then evaporated onto the surface of the substrate, thus producing a sensor chip.

On this sensor chip, there are provided 2.5 mm-wide areas where diffraction gratings with separate groove pitches (TP) of, 846 nm, 856 nm, 870 nm, and 876 nm, respectively, are formed. Using this sensor chip, the intensity of reflected light was measured with an SPR assessment device, FLEX CHIPS™ Kinetic Analysis System (*HTS Biosystems Inc*.), while varying the angle of incident light in a range of 19.89° to 21.18°. Purified water, 1% ethanol aqueous solution, 10% ethanol aqueous solution, and 30% ethanol aqueous solution served as samples, which were introduced in order onto the surface of the sensor chip. In this instance, the temperature of the solutions was 30°C, and the wavelength of the incident light was 870 nm.

FIG. 48 is a plot of the measurement result obtained in each of the areas with groove pitches (TP) of 846 nm, 856 nm, 870 nm, and 876 nm, respectively. The horizontal axis of the graph represents the time duration elapsed after the measurement was started, and the vertical axis of the graph represents the resonance angle.

The part of the graph from 0 through 1200 seconds represents data obtained for purified water as a sample; that from 1200 through 1400 seconds, 1% ethanol aqueous solution; that from 1400 through 1720 seconds, 10% ethanol aqueous solution; that from 1720 through 2140 seconds, 30% ethanol aqueous solution; and that at 2140 seconds and afterward, purified water again.

From the graph of a groove pitch of 870 nm, it is possible to examine the amount of variation between the resonance angles for 1% ethanol aqueous solution and 10 % ethanol aqueous solution and the resonance angle for purified water. However, since the graph for 30% ethanol aqueous solution extends to the outside of the measurement range, the amount of difference cannot be measured for 30% ethanol aqueous solution from the graph of a groove pitch of 870 nm.

As for the graph of a groove pitch of 856 nm, however, it shows data obtained from 10% ethanol aqueous solution and 30% ethanol aqueous solution. The amount of variation between the intensity of reflected light for 30% ethanol aqueous solution and that for 10% ethanol aqueous solution, obtained from the 856 nm groove pitch graph, is thus used for data correction, thereby obtaining the amount of variation between the intensity of reflected light for 30% ethanol aqueous solution and that for purified water. That is, the amount of variation between the intensity of reflected light for 30% ethanol aqueous solution and that for 10% ethanol aqueous solution is added to the amount of variation between the intensity of reflected light for 10% ethanol aqueous solution and that for purified water, thereby obtaining the amount of variation between the intensity of reflected light for 30% ethanol aqueous solution and that for purified water.

Table 9 shows the thus-obtained amount of variation between the intensity of reflected light for ethanol aqueous solutions of such three types of concentrations and that for purified water.

**[Table 9]**

| Ethanol concentration | The amount of variation in the resonance angle in comparison with purified water |
|---|---|
| 1% | 33 mdeg |
| 10% | 362 mdeg |
| 30% | 1143 mdeg |
| | [The amount of variation between the |
| | resonance angle for 10% ethanol aqueous |
| | solution and that for purified water (362 |
| | mdeg) + the amount of variation between the |
| | resonance angle for 30% ethanol aqueous |
| | solution and that 10% EtOH (781 mdeg)] |

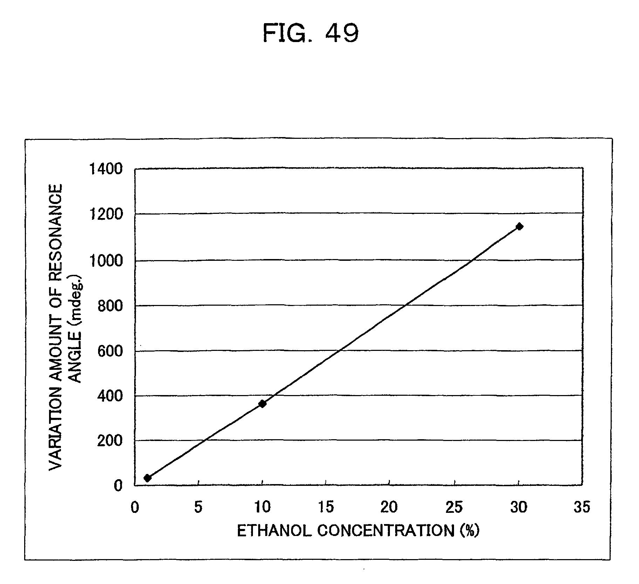

FIG. 49 plots the data of table 9. FIG. 49 indicates linearity between the ethanol concentration and the amount of variation between the intensity of reflected light of the sample and that of purified water.

In this manner, it was confirmed that, by using a sensor chip on which areas where diffraction gratings with separate groove pitches are formed, it is possible to measure a wider range of intensities of reflected light with no necessity of greatly varying the incident angle of incident light, thus realizing assessment with excellent time resolution.

### [Example 10]

As in the case of Example 1, using a sensor chip on which provided were 2.5-mm-wide areas where diffraction gratings with separate groove pitches (TP) of, 846 nm, 856 nm, 870 nm, and 876 nm, respectively, are formed, the intensity of reflected light was measured while irradiating a sample with light at a fixed incident angle. The measurement was performed with an SPR assessment device, FLEX CHIPS™ Kinetic Analysis System, and purified water and 10% ethanol aqueous solution were used as samples. The temperature of the samples was 30°C at the measurement; the wavelength of the incident light was 875 nm; and the incident angle of the incident light was 20.8502°.

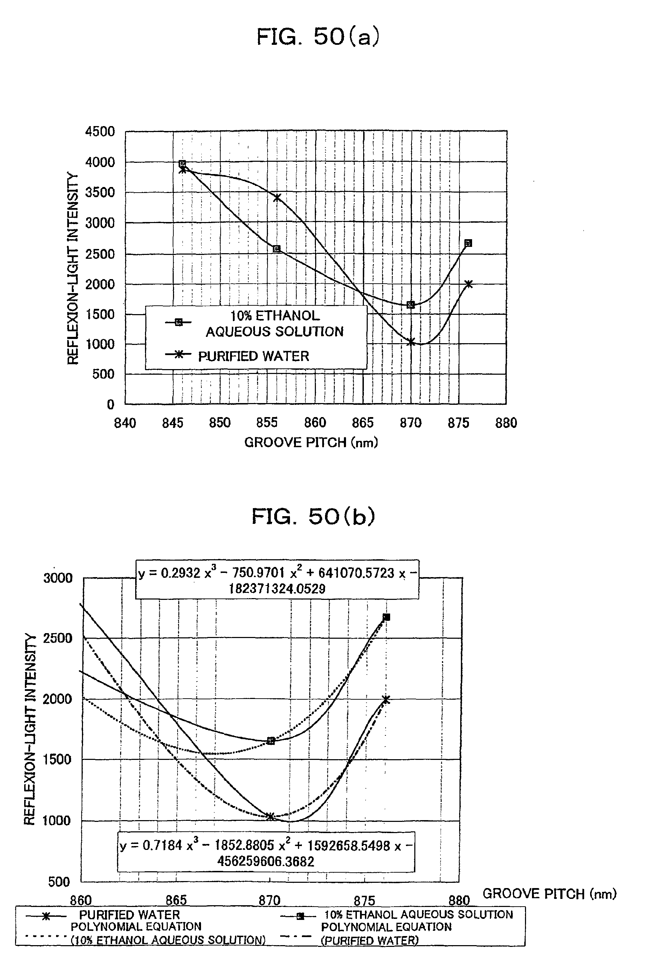

FIG. 50(a) plots the result of the measurement.

From this measurement result, groove pitches at which resonance was caused in purified water and 10% ethanol aqueous solution were obtained by using a 6th-degree polynomial equation. FIG. 50(b) shows an approximate method in which a polynomial equation is used, and Table 10 shows its result.

**[Table 10]**

| Ethanol concentration | Groove pitch | The amount of variation in the groove pitch in comparison with purified water |
|---|---|---|
| 0% (purified water) | 871.72 nm | 0 nm |
| 10% | 863.30 nm | 8.42 nm |

Table 10 indicates that the graph of purified water and the graph of 10% ethanol aqueous solution showed the minimal intensity of reflected light for different groove pitches. Difference between these groove pitches, or the amount of variation in the groove pitch, can be used for analyzing samples.

From the above, it was confirmed that with use of a sensor chip of the present invention, assessment can be performed with an SPR sensor chip even when the incident angle of incident light is fixed.

Although only four types of groove pitch areas were used in this example, a larger number of types of groove pitches would make more precise assessment possible.

### Industrial Applicability

As described above, surface plasmon resonance sensor chips according to the present invention are suitable for use in downsized clinical equipment or HPLC (high performance liquid chromatography) detectors. POC (Point of Care) technology has become increasingly valued particularly in clinical examination fields because of its compactness and easy operation so that examinations can be performed in parallel with medical treatment. The surface plasmon resonance sensor chips of the present invention are also considered applicable to immunologic tests. Since the surface plasmon resonance sensor chips of the present invention provide downsized, cost-reduced analysis equipment, they are applicable to not only POC but also other fields such as housing examination. Moreover, since the surface plasmon resonance sensor chips of the present invention are also suitable for use in HPLC, they have wide applicability in the analysis of a variety of items such as blood or urine, food nutrition, and chemicals contained in wastewater.

## Claims

1. A surface plasmon resonance sensor chip comprising:
a metal layer (3) along whose surface a surface plasmon wave can be induced by light irradiation; and
a plurality of diffraction grating surfaces (5a-5i, 251-254) that are disposed in the vicinity of said metal layer (3) and on each of which a diffraction grating with a uniform groove orientation and a uniform groove pitch is formed so as to generate an evanescent wave upon light irradiation;
wherein the groove pitch (d1-d4) and the groove orientation of each said diffraction grating surface (5a-5i, 251-254), in addition to the angle (αa-αi) that each said diffraction grating surface (5a-5i, 251-254) forms with a predetermined reference plane (S0), are adjusted in such a manner that when said diffraction grating surfaces (5a-5i, 251-254) are projected onto a predetermined projection plane, the groove orientations in the projection plane are identical while the groove pitches in the projection plane are different among said diffraction grating surfaces (5a-5i, 251-254).

2. A surface plasmon resonance sensor chip as defined in claim 1, wherein
each said diffraction grating surface (5a-5i) is disposed so as to be perpendicular to a specific plane (S1), which is perpendicular to the predetermined reference plane (S0), and as to form a predetermined inclination angle (αa-αi) with the reference plane (S0), and
on each said diffraction grating surface (5a-5i), the diffraction grating is formed in such a manner that the groove orientation is perpendicular to the specific plane (S1).

3. A surface plasmon resonance sensor chip as defined in claim 2, wherein said plural diffraction grating surfaces (5a-5i) are disposed along a line parallel to the specific plane (S1) in such a manner that when viewed from a direction parallel to the specific plane (S1), said plural diffraction grating surfaces (5a-5i) are positioned in decreasing order of the inclination angle (αa-αi) that each said diffraction grating surface (5a-5i) forms with the reference plane (S0).

4. A surface plasmon resonance sensor chip as defined in claim 2 or 3, wherein said diffraction grating surfaces (5a-5i) are disposed continuously so as to form a convex shape whose light-irradiated side bulges out.

5. A surface plasmon resonance sensor chip as defined in claim 4, wherein each said diffraction grating surface (25) has a minimum width with one groove alone, and the aggregate of said diffraction grating surfaces (25) forms a curved surface in an arc shape whose light-irradiated side bulges out.

6. A surface plasmon resonance sensor chip as defined in one of claims 2-5, wherein
each said diffraction grating surface (5a-5i) is formed along a sensor surface (1a), which comes in contact with a sample, and
on the sensor surface (1a), a binding substance (7) that binds specifically to a target species in the sample is immobilized for each said diffraction grating surface (5a-5i).

7. A surface plasmon resonance sensor chip as defined in claim 6, wherein two or more kinds of binding substances (7) are immobilized for each said diffraction grating surface (5a-5i).

8. A surface plasmon resonance sensor chip as defined in one of claims 2-7, further comprising a plurality of diffraction areas (6), within each of which said diffraction grating surfaces (5a-5i) are concentratedly disposed, wherein said plural diffraction grating surfaces (5a-5i) in each of said diffraction areas (6) have different inclination angles.

9. A surface plasmon resonance sensor chip as defined in claim 8, wherein
each said diffraction grating surface (5a-5i) is disposed along a sensor surface (1a), which comes in contact with a sample, and
on the sensor surface (1a), two or more binding substances (7) which each bind specifically to target species in the sample are immobilized so as to be associated with said diffraction areas (6).

10. A surface plasmon resonance sensor chip as defined in one of claims 6-9, further comprising a plurality of non-diffraction surfaces (37a-37i), which do not have any diffraction grating,
wherein each of said non-diffraction surfaces (37a-37i) is disposed along the sensor surface in the same plane with the respective one of said diffraction grating surfaces (35a-35i).

11. A surface plasmon resonance sensor chip as defined in one of claims 6-9, wherein each said diffraction grating surface has a reaction area, within which the binding substance (47) is immobilized, and a non-reaction area, within which a substance (48) that does not bind specifically to any target species in the sample is immobilized or, alternatively, any substance is not immobilized.

12. A surface plasmon resonance sensor chip as defined in one of claims 6-9, wherein
said diffraction grating surfaces are arranged in a direction perpendicular to the groove orientation, and
said sensor chip further comprises
a cover (72) for covering the sensor surface (1a), and
a plurality of flow channels (70) formed side by side between the sensor surface (1a) and said cover (72) so as to pass along the direction in which said diffraction grating surfaces are arranged.

13. A surface plasmon resonance sensor chip as defined in claim 8 or 9, further comprising a plurality of non-diffraction areas (88) associated one with each said diffraction area (87), each of said non-diffraction areas (88) having a plurality of non-diffraction surfaces concentratedly disposed therein, each of which non-diffraction surfaces does not have any diffraction grating,
wherein the inclination angles that said non-diffraction surfaces included in the non-diffraction area (88) form with the reference plane have the same distribution as the distribution of the inclination angles that said diffraction grating surfaces included in the associated diffraction area (87) form with the reference plane.

14. A surface plasmon resonance sensor chip as defined in claim 8 or 9, wherein
each of one or more diffraction areas among said diffraction areas (96) has a reaction area, in which a binding substance (97) that binds specifically to a target species in the sample is immobilized, and
each of the remaining diffraction areas among said diffraction areas (96) has a non-reaction area, in which a substance (98) that does not bind specifically to any target species in the sample is immobilized or, alternatively, any substance is not immobilized.

15. A surface plasmon resonance sensor chip as defined in claim 8 or 9, further comprising
a cover (102) for covering the sensor surface (1a), and
a plurality of flow channels (100) disposed side by side between the sensor surface (1a) and said cover (102),
wherein said diffraction areas (6) are disposed for each of said flow channels (100).

16. A method of quantitatively and/or qualitatively analyzing a sample using a surface plasmon resonance sensor chip as defined in one of claims 6-9, comprising the steps of:
making the sample in contact with the sensor surface (1a) while irradiating the sensor surface (1a) with light in parallel to the specific plane (S1) at a predetermined incident angle;
receiving the light reflected from the sensor surface (1a) and measuring the intensity of the light reflected by each said diffraction grating surface (5a-5i);
calculating a resonance angle at which a resonance phenomenon of the evanescent wave and the surface plasmon wave occurs, based on both the measured intensity of the reflected light due to each said diffraction grating surface (5a-5i) and the inclination angle that each said diffraction grating surface (5a-5i) forms with the reference plane (S0); and
quantitatively and/or qualitatively analyzing the sample based on the calculated resonance angle.

17. A method of quantitatively and/or qualitatively analyzing a sample using a surface plasmon resonance sensor chip as defined in claim 10 or 13, comprising the steps of:
making the sample in contact with the sensor surface while irradiating the sensor surface with light in parallel to the specific plane at a predetermined incident angle;
receiving the light reflected from the sensor surface and measuring the intensity of the light reflected by each said diffraction grating surface (35a-35i);
correcting the measured intensity of the reflected light due to each said diffraction grating surface (35a-35i) with consideration given to the intensity of the light reflected by each said non-diffraction surface (37a-37i);
calculating a resonance angle at which a resonance phenomenon of the evanescent wave and the surface plasmon wave occurs, based on both the corrected intensity of reflected light due to each said diffraction grating surface (35a-35i) and the inclination angle that each said diffraction grating surface (35a-35i) forms with the reference plane; and
quantitatively and/or qualitatively analyzing the sample based on the calculated resonance angle.

18. A method of quantitatively and/or qualitatively analyzing a sample using a surface plasmon resonance sensor chip as defined in claim 11 or 14, comprising the steps of:
making the sample in contact with the sensor surface while irradiating the sensor surface with light in parallel to the specific plane at a predetermined incident angle;
receiving the light reflected from the sensor surface and measuring the intensity of the light reflected by each said diffraction grating surface;
calculating, for each of the reaction area and the non-reaction area, a resonance angle at which a resonance phenomenon of the evanescent wave and the surface plasmon wave occurs, based on both the measured intensity of the reflected light due to each said diffraction grating surface and the inclination angle that each said diffraction grating surface forms with the reference plane; and
after correcting the resonance angle of the reaction area with consideration given to the resonance angle of the non-reaction area, quantitatively and/or qualitatively analyzing the sample based on the corrected resonance angle of the reaction area.

19. A method of quantitatively and/or qualitatively analyzing a sample using a surface plasmon resonance sensor chip as defined in claim 12 or 15, comprising the steps of:
assigning a plurality of different samples to said plural flow channels (70), respectively, and letting each of the samples flow through the respective flow channel (70) while irradiating the sensor surface with light in parallel to the specific plane at a predetermined incident angle;
receiving the light reflected from the sensor surface and measuring the intensity of the light reflected by each said diffraction grating surface;
calculating, for each sample flowing through the respective flow channel (70), a resonance angle at which a resonance phenomenon of the evanescent wave and the surface plasmon wave occurs, based on both the measured intensity of the reflected light due to each said diffraction grating surface and the inclination angle that each said diffraction grating surface forms with the reference plane; and
quantitatively and/or qualitatively analyzing each sample flowing through the respective flow channel (70), based on the calculated resonance angle for each said flow channel (70).

20. A method of quantitatively and/or qualitatively analyzing a sample using a surface plasmon resonance sensor chip as defined in one of claim 6-9, comprising the steps of:
making the sample in contact with the sensor surface (1a) while irradiating the sensor surface (1a) with light in parallel to the specific plane (S1) at a predetermined incident angle;
receiving the light reflected from the sensor surface (1a) and measuring the intensity of the light reflected by each said diffraction grating surface (5a-5i);
determining the variation between the measured intensity of the reflected light due to each said diffraction grating surface (5a-5i) and the intensity of the light reflected when any sample is not in contact with the sensor surface (S1); and
selecting a diffraction grating surface (5a-5i) whose determined variation of the reflected-light intensity is within a predetermined allowable range for determination, and quantitatively and/or qualitatively analyzing the sample based on the variation of the reflected-light intensity of the selected diffraction grating surface (5a-5i).

21. A method of quantitatively and/or qualitatively analyzing a sample using a surface plasmon resonance sensor chip as defined in claim 10 or 13, comprising the steps of:
making the sample in contact with the sensor surface while irradiating the sensor surface with light in parallel to the specific plane at a predetermined incident angle;
receiving the light reflected from the sensor surface and measuring the intensity of the light reflected by each said diffraction grating surface (35a-35i);
correcting the intensity of the reflected light due to each said diffraction grating surface (35a-35i) with consideration given to the intensity of the reflected light due to each said non-diffraction surface (37a-37i);
determining the variation between the corrected intensity of the reflected light due to each said diffraction grating surface (35a-35i) and the intensity of the light reflected when any sample is not in contact with the sensor surface; and
selecting a diffraction grating surface (35a-35i) whose determined variation of the reflected-light intensity is within a predetermined allowable range for determination, and quantitatively and/or qualitatively analyzing the sample based on the variation of the reflected-light'intensity of the selected diffraction grating surface (35a-35i).

22. A method of quantitatively and/or qualitatively analyzing a sample using a surface plasmon resonance sensor chip as defined in claim 11 or 14, comprising the steps of:
making the sample in contact with the sensor surface while irradiating the sensor surface with light in parallel to the specific plane at a predetermined incident angle;
receiving the light reflected from the sensor surface and measuring the intensity of the light reflected by each said diffraction grating surface;
determining, for each of the reaction area and the non-reaction area, the variation between the measured intensity of the reflected light due to each said diffraction grating surface and the intensity of the light reflected when any sample is not in contact with the sensor surface; and
selecting, for each of the reaction area and the non-reaction area, a diffraction grating surface whose determined variation of the reflected-light intensity is within a predetermined allowable range for determination, and quantitatively and/or qualitatively analyzing the sample based on both the selected variation of the reflected-light intensity of the reaction area and the selected variation of the reflected-light intensity of the non-reaction area.

23. A method of quantitatively and/or qualitatively analyzing a sample using a surface plasmon resonance sensor chip as defined in claim 12 or 15, comprising the steps of:
assigning a plurality of different samples to said plural flow channels (70), respectively, and letting each of the samples flow through the respective flow channel (70) while irradiating the sensor surface with light in parallel to the specific plane at a predetermined incident angle;
receiving the light reflected from the sensor surface and measuring the intensity of the light reflected by each said diffraction grating surface;
determining the variation between the measured intensity of the reflected light due to each said diffraction grating surface and the intensity of the light reflected when any sample does not flow through each said flow channel (70); and
selecting, for each said flow channel (70), a diffraction grating surface whose determined variation of the reflected-light intensity is within a predetermined allowable range for determination, and quantitatively and/or qualitatively analyzing each sample flowing through the respective flow channel (70), based on the variation of the reflected-light intensity of the diffraction grating surface selected for each said flow channel (70).

24. A method as defined in one of claims 16-23, further comprising the step of separating the sample by physical and/or chemical action prior to introducing the sample to the surface plasmon resonance sensor chip.

25. A method as defined in claim 24, wherein in said step of separating, the sample is separated by a separation technique using at least one of liquid chromatography, HPLC (high performance liquid chromatography), capillary electrophoresis, microchip electrophoresis, flow injection, and microchannel.

26. A method as defined in one of claim 16-25, wherein
the target species is a light-emitting substance,
said method further comprises the step of detecting the light emitted from the light-emitting substance that is bound to the binding substance prior to light-irradiating the sensor surface or, alternatively, after light-irradiating the sensor surface and receiving the reflected light, and
in said step of quantitatively and/or qualitatively analyzing, the sample is analyzed with consideration given to the detection result of the emitted light.

27. An apparatus for quantitatively and/or qualitatively analyzing a sample using a surface plasmon resonance sensor chip as defined in one of claims 6-9, comprising:
holding means (11) for holding the surface plasmon resonance sensor chip with the sensor surface being in contact with the sample;
light irradiating means (12) for irradiating the sensor surface (1a) with light in parallel to the specific plane (S1) at a predetermined incident angle in a state where the surface plasmon resonance sensor chip is held by said holding means (11);
light receiving means (13) for receiving the light reflected from the sensor surface (1a);
measuring means (13) for measuring the intensity of the light reflected by each said diffraction grating surface (1a) and received by said light receiving means (13);
calculating means (14) for calculating a resonance angle at which a resonance phenomenon of the evanescent wave and the surface plasmon wave occurs, based on both the intensity, measured by said measuring means (13), of the reflected light due to each said diffraction grating surface (1a) and the inclination angle that each said diffraction grating surface (1a) forms with the reference plane (S0); and
analyzing means for quantitatively and/or qualitatively analyzing the sample based on the resonance angle calculated by said calculating means (14).

28. An apparatus for quantitatively and/or qualitatively analyzing a sample using a surface plasmon resonance sensor chip as defined in claim 10 or 13, comprising:
holding means (11) for holding the surface plasmon resonance sensor chip with the sensor surface being in contact with the sample;
light irradiating means (12) for irradiating the sensor surface with light in parallel to the specific plane at a predetermined incident angle in a state where the surface plasmon resonance sensor chip is held by said holding means (11);
light receiving means (13) for receiving the light reflected from the sensor surface;
measuring means (13) for measuring the intensity of the light reflected by each said diffraction grating surface and received by said light receiving means (13);
correcting means (14) for correcting the intensity of reflected light due to each said diffraction grating surface (35a-35i) with consideration given to the intensity of the reflected light due to the non-diffraction surface (37a-37i);
calculating means (14) for calculating a resonance angle at which a resonance phenomenon of the evanescent wave and the surface plasmon wave occurs, based on both the intensity, corrected by said correcting means (14), of the reflected light due to each said diffraction grating surface (35a-35i) and the inclination angle that each said diffraction grating surface (35a-35i) forms with the reference plane; and
analyzing means for quantitatively and/or qualitatively analyzing the sample based on the resonance angle calculated by said calculating means (14).

29. An apparatus for quantitatively and/or qualitatively analyzing a sample using a surface plasmon resonance sensor chip as defined in claim 11 or 14, comprising:
holding means (11) for holding the surface plasmon resonance sensor chip with the sensor surface being in contact with the sample;
light irradiating means (12) for irradiating the sensor surface with light in parallel to the specific plane at a predetermined incident angle in a state where the surface plasmon resonance sensor chip is held by said holding means (11);
light receiving means (13) for receiving the light reflected from the sensor surface;
measuring means (13) for measuring the intensity of the light reflected by each said diffraction grating surface and received by said light receiving means (13);
calculating means (14) for calculating, for each of the reaction area and the non-reaction area, a resonance angle at which a resonance phenomenon of the evanescent wave and the surface plasmon wave occurs, based on the intensity, measured by said measuring means (13), of the reflected light due to each said diffraction grating surface and the inclination angle that each said diffraction grating surface forms with the reference plane; and
analyzing means (14) for correcting the resonance angle, calculated by said calculating means (14), of the reaction area with consideration given to the resonance angle of the non-reaction area and for quantitatively and/or qualitatively analyzing the sample based on the corrected resonance angle of the reaction area,.

30. An apparatus for quantitatively and/or qualitatively analyzing a sample using a surface plasmon resonance sensor chip as defined in claim 12 or 15, comprising:
holding means (11) for holding the surface plasmon resonance sensor chip;
sample introducing means (79) for assigning a plurality of different samples to said plural flow channels (70), respectively, and for introducing each of the samples into the respective flow channel (70) in a state where the surface plasmon resonance sensor chip is held by said holding means (11);
light irradiating means (12) for irradiating the sensor surface with light in parallel to the specific plane at a predetermined incident angle in a state where each sample is introduced into the respective flow channel (70) by said sample introducing means (79);
light receiving means (13) for receiving the light reflected from the sensor surface;
measuring means (13) for measuring the intensity of the light reflected by each said diffraction grating surface and received by said light receiving means (13);
calculating means (14) for calculating a resonance angle at which a resonance phenomenon of the evanescent wave and the surface plasmon wave occurs for each said flow channel (70), based on the intensity, measured by said measuring means (13), of the reflected light due to each said diffraction grating surface and the inclination angle that each said diffraction grating surface forms with the reference plane; and
analyzing means (14) for quantitatively and/or qualitatively analyzing each sample flowing through the respective flow channel (70), based on the resonance angle calculated by said calculating means (14).

31. An apparatus for quantitatively and/or qualitatively analyzing a sample using a surface plasmon resonance sensor chip as defined in one of claims 6-9, comprising:
holding means (11) for holding the surface plasmon resonance sensor chip with the sensor surface being in contact with the sample;
light irradiating means (12) for irradiating the sensor surface with light in parallel to the specific plane at a predetermined incident angle in a state where the surface plasmon resonance sensor chip is held by said holding means (11);
light receiving means (13) for receiving the light reflected from the sensor surface;
measuring means (13) for measuring the intensity of the light reflected by each said diffraction grating surface (5a-5i) and received by said light receiving means (13);
determining means (14) for determining the variation between the intensity, measured by said measuring means (13), of the reflected light due to each said diffraction grating surface (5a-5i) and the intensity of the light reflected when any sample is not in contact with the sensor surface (1a);
analyzing means for selecting a diffraction grating surface (5a-5i) whose variation, determined by said determining means (14), of the reflected-light intensity is within a predetermined allowable range for determination, and for quantitatively and/or qualitatively analyzing the sample based on the variation of the reflected-light intensity of the selected diffraction grating surface (5a-5i).

32. An apparatus for quantitatively and/or qualitatively analyzing a sample using a surface plasmon resonance sensor chip as defined in claim 10 or 13, comprising:
holding means (11) for holding the surface plasmon resonance sensor chip with the sensor surface being in contact with the sample;
light irradiating means (12) for irradiating the sensor surface with light in parallel to the specific plane at a predetermined incident angle in a state where the surface plasmon resonance sensor chip is held by said holding means (11);
light receiving means (13) for receiving the light reflected from the sensor surface;
measuring means (13) for measuring the intensity of the light reflected by each said diffraction grating surface and received by said light receiving means (13);
correcting means (14) for correcting the intensity of reflected light due to each said diffraction grating surface (35a-35i) with consideration given to the intensity of the reflected light due to the non-diffraction surface (37a-37i);
determining means (14) for determining the variation between the intensity, corrected by said correcting means (14), of the reflected light due to each said diffraction grating surface (35a-35i) and the intensity of the light reflected when any sample is not in contact with the sensor surface; and
analyzing means (14) for selecting a diffraction grating surface (35a-35i) whose variation, determined by said determining means (14), of the reflected-light intensity is within a predetermined allowable range for determination, and for quantitatively and/or qualitatively analyzing the sample based on the variation of the reflected-light intensity of the selected diffraction grating surface (35a-35i).

33. An apparatus for quantitatively and/or qualitatively analyzing a sample using a surface plasmon resonance sensor chip as defined in claim 11 or 14, comprising:
holding means (11) for holding the surface plasmon resonance sensor chip with the sensor surface being in contact with the sample;
light irradiating means (12) for irradiating the sensor surface with light in parallel to the specific plane at a predetermined incident angle in a state where the surface plasmon resonance sensor chip is held by said holding means (11);
light receiving means (13) for receiving the light reflected from the sensor surface;
measuring means (13) for measuring the intensity of the light reflected by each said diffraction grating surface and received by said light receiving means (13);
determining means (14) for determining, for each of the reaction area and the non-reaction area, the variation between the intensity, measured by said measuring means (13), of the reflected light due to each said diffraction grating surface and the intensity of the light reflected when any sample is not in contact with the sensor surface; and
analyzing means (14) for selecting a diffraction grating surface whose variation, determined by said determining means (14), of the reflected-light intensity is within a predetermined allowable range for determination, and for quantitatively and/or qualitatively analyzing the sample based on both the variation of the reflected-light intensity of the selected reaction area and the variation of the reflected-light intensity of the selected non-reaction area.

34. An apparatus for quantitatively and/or qualitatively analyzing a sample using a surface plasmon resonance sensor chip as defined in claim 12 or 15, comprising:
holding means (11) for holding the surface plasmon resonance sensor chip;
sample introducing means (79) for assigning a plurality of different samples to the plural flow channels (70), respectively, and for introducing each of the samples into the respective flow channel (70) in a state where the surface plasmon resonance sensor chip is held by said holding means (11);
light irradiating means (12) for irradiating the sensor surface with light in a predetermined direction in a state where each sample is introduced into the respective flow channel (70) by said sample introducing means (79);
light receiving means (13) for receiving the light reflected from the sensor surface;
determining means (14) for determining the variation between the intensity of the light reflected by each said diffraction grating surface and received by said light receiving means (13) and the intensity of the light reflected when any sample is not flowing through each said flow channel (70); and
analyzing means (14) for selecting, for each said flow channel (70), a diffraction grating surface whose variation, determined by said determining means (14), of the reflected-light intensity is within a predetermined allowable range for determination, and for quantitatively and/or qualitatively analyzing each sample flowing through the respective flow channel (70), based on the variation of the reflected-light intensity of the diffraction grating surface selected for each said flow channel (70).

35. An apparatus as defined in one of claim 27-34, further comprising sample separating means (59) for separating the sample by physical and/or chemical action prior to introducing the sample to the surface plasmon resonance sensor chip.

36. An apparatus as defined in claim 35, wherein said sample separating means (59) is operable to separate the sample by a separation technique using at least one of liquid chromatography, HPLC (high performance liquid chromatography), capillary electrophoresis, microchip electrophoresis, flow injection, and microchannel.

37. An apparatus as defined in one of claim 27-36, wherein
the target species is a light-emitting substance,
said light receiving means (13) is operable to detect the light emitted from the light-emitting substance that is bound to the binding substance, and
said analyzing means (14) is operable to quantitatively and/or qualitatively analyze the sample with consideration given to the detection result of the light emission by said light receiving means (13).

38. A surface plasmon resonance sensor chip as defined in claim 1, wherein
each said diffraction grating surface (251-254) is disposed so as to be parallel to a predetermined reference plane, and
on each said diffraction grating surface (251-254), the diffraction grating (205) is formed in such a manner that the groove orientations are identical while the groove pitches (d1-d4) are different among said diffraction grating surfaces (251-254).

39. A surface plasmon resonance sensor chip as defined in claim 38, wherein
each said diffraction grating surface (251-254) is formed along a sensor surface (201a), which comes in contact with a sample, and
on the sensor surface (201a), a binding substance (206) that binds specifically to a target species in the sample is immobilized for each said diffraction grating surface (251-254).

40. A surface plasmon resonance sensor chip as defined in claim 39, wherein two or more kinds of binding substances (206, 207) are immobilized for each said diffraction grating surface (251-254).

41. A surface plasmon resonance sensor chip as defined in claim 49 or 40, further comprising a plurality of non-diffraction surfaces (251x-254x), each of which does not have any diffraction grating,
wherein each of said non-diffraction surfaces (251x-254x) is disposed along the sensor surface (261a) in the same plane with the respective one of said diffraction grating surfaces (251-254).

42. A surface plasmon resonance sensor chip as defined in claim 39 or 40, wherein each said diffraction grating surface (251-254) has a reaction area, within which the binding substance (206) is immobilized, and a non-reaction area, within which a substance (291) that does not bind specifically to any target species in the sample is immobilized or, alternatively, any substance is not immobilized.

43. A surface plasmon resonance sensor chip as defined in claim 39 or 40, wherein
said diffraction grating surfaces (251-254) are arranged in a direction perpendicular to the groove orientation, and
said sensor chip further comprises
a cover (286) for covering the sensor surface (281a), and
a plurality of flow channels (280) formed side by side between the sensor surface (281a) and said cover (286) so as to pass along the direction in which said diffraction grating surfaces (281a) are arranged.

44. A surface plasmon resonance sensor chip as defined in claim 39 or 40, wherein:
said diffraction grating surfaces (251-254) are arranged in a direction perpendicular to the groove orientation;
said sensor chip further comprises
a cover (286) for covering the sensor surface (281a), and
a plurality of flow channels (280) formed side by side between the sensor surface (281a) and said cover (286) so as to pass along the direction in which said diffraction grating surfaces (251-254) are arranged; and
along each of said flow channels (280), each said diffraction grating surface (251-254) has a reaction area, within which the binding substance (206) is immobilized, and a non-reaction area, within which a substance (291) that does not bind specifically to any target species in the sample is immobilized or, alternatively, any substance is not immobilized.

45. A method of quantitatively and/or qualitatively analyzing a sample using a surface plasmon resonance sensor chip as defined in claim 39 or 40, comprising the steps of:
making the sample in contact with the sensor surface (201a) while irradiating the sensor surface (201a) with light at a predetermined incident angle;
receiving the light reflected from the sensor surface (201a) and measuring the intensity of the light reflected by each said diffraction grating surface;
identifying a groove pitch at which a resonance phenomenon of the evanescent wave and the surface plasmon wave occurs, based on the measured intensity of the reflected light due to each said diffraction grating surface (201a); and
quantitatively and/or qualitatively analyzing the sample based on the identified groove pitch.

46. A method of quantitatively and/or qualitatively analyzing a sample using a surface plasmon resonance sensor chip as defined in claim 41, comprising the steps of:
making the sample in contact with the sensor surface while irradiating the sensor surface with light at a predetermined incident angle;
receiving the light reflected from the sensor surface and measuring the intensity of the light reflected by each said diffraction grating surface (251-254);
correcting the intensity of the reflected light due to each said diffraction grating surface (251-254) with consideration given to the intensity of the light reflected by the respective non-diffraction surface (251x-254x);
identifying a groove pitch at which a resonance phenomenon of the evanescent wave and the surface plasmon wave occurs, based on the corrected intensity of the reflected light due to each said diffraction grating surface (251-254); and
quantitatively and/or qualitatively analyzing the sample based on the identified groove pitch.

47. A method of quantitatively and/or qualitatively analyzing a sample using a surface plasmon resonance sensor chip as defined in claim 42, comprising the steps of:
making the sample in contact with the sensor surface while irradiating the sensor surface with light at a predetermined incident angle;
receiving the light reflected from the sensor surface and measuring the intensity of the light reflected by each said diffraction grating surface (251-254);
identifying, for each of the reaction area and the non-reaction area, a groove pitch at which a resonance phenomenon of the evanescent wave and the surface plasmon wave occurs, based on the measured intensity of the reflected light due to each said diffraction grating surface (251-254); and
quantitatively and/or qualitatively analyzing the sample based on the groove pitch identified for each of the reaction area and the non-reaction area.

48. A method of quantitatively and/or qualitatively analyzing a sample using a surface plasmon resonance sensor chip as defined in claim 43, comprising the steps of:
assigning a plurality of different samples to said plural flow channels (280), respectively, and letting each of the samples flow through the respective flow channel (280) while irradiating the sensor surface with light at a predetermined incident angle;
receiving the light reflected from the sensor surface and measuring the intensity of the light reflected by each said diffraction grating surface (251-254);
identifying, for each said flow channel (280), a groove pitch at which the resonance phenomenon of the evanescent wave and the surface plasmon wave occurs, based on the measured intensity of the reflected light due to each said diffraction grating surface (251-254); and
quantitatively and/or qualitatively analyzing each sample flowing through the respective flow channel (280), based on the groove pitch identified for each said flow channel (280).

49. A method of quantitatively and/or qualitatively analyzing a sample using a surface plasmon resonance sensor chip as defined in claim 44, comprising the steps of:
assigning a plurality of different samples to said plural flow channels (280), respectively, and letting each of the samples flow through the respective flow channel (280) while irradiating the sensor surface with light at a predetermined incident angle;
receiving the light reflected from the sensor surface and measuring the intensity of the light reflected by each said diffraction grating surface (251-254);
identifying, for each said flow channel (280) and for each of the reaction area and the non-reaction area, a groove pitch at which the resonance phenomenon of the evanescent wave and the surface plasmon wave occurs, based on the measured intensity of the reflected light due to each said diffraction grating surface (251-254); and
quantitatively and/or qualitatively analyzing each sample flowing through the respective flow channel (280), based on the groove pitch identified for each said flow channel (280) and for each of the reaction area and the non-reaction area.

50. A method of quantitatively and/or qualitatively analyzing a sample using a surface plasmon resonance sensor chip as define in claim 39 or 40, comprising the steps of:
making the sample in contact with the sensor surface (201a) while irradiating the sensor surface (201a) with light at a predetermined incident angle;
receiving the light reflected from the sensor surface (201a) and measuring the intensity of the light reflected by each said diffraction grating surface (251-254);
determining the variation between the measured intensity of the reflected light due to each said diffraction grating surface (251-254) and the intensity of the light reflected when any sample is not in contact with the sensor surface (201a); and
selecting a diffraction grating surface (251-254) whose determined variation of the reflected-light intensity is within a predetermined allowable range for determination, and quantitatively and/or qualitatively analyzing the sample based on the variation of the reflected-light intensity of the selected diffraction grating surface (251-254).

51. A method of quantitatively and/or qualitatively analyzing a sample using a surface plasmon resonance sensor chip as defined in claim 41, comprising the steps of:
making the sample in contact with the sensor surface while irradiating the sensor surface with light at a predetermined incident angle;
receiving the light reflected from the sensor surface and measuring the intensity of the light reflected by each said diffraction grating surface (251-254);
correcting the intensity of the reflected light due to each said diffraction grating surface (251-254) with consideration given to the intensity of the light reflected by the respective non-diffraction surface (251x-254x);
determining the variation between the corrected intensity of the reflected light due to each said diffraction grating surface (251-254) and the intensity of the light reflected when any sample is not in contact with the sensor surface; and
selecting a diffraction grating surface (251-254) whose determined variation of the reflected-light intensity is within a predetermined allowable range for determination, and quantitatively and/or qualitatively analyzing the sample based on the variation of the reflected-light intensity of the selected diffraction grating surface.

52. A method of quantitatively and/or qualitatively analyzing a sample using a surface plasmon resonance sensor chip as defined in claim 42, comprising the steps of:
making the sample in contact with the sensor surface while irradiating the sensor surface with light at a predetermined incident angle;
receiving the light reflected from the sensor surface and measuring the intensity of the light reflected by each said diffraction grating surface (251-254);
determining, for each of the reaction area and the non-reaction area, the variation between the measured intensity of the reflected light due to each said diffraction grating surface (251-254) and the intensity of the light reflected when any sample is not in contact with the sensor surface;
selecting, for each of the reaction area and the non-reaction area, a diffraction grating surface (251-254) whose determined variation of the reflected-light intensity is within a predetermined allowable range for determination, and quantitatively and/or qualitatively analyzing the sample based on the variation of the reflected-light intensity of the selected reaction area and the variation of the reflected-light intensity of the selected non-reaction area.

53. A method of quantitatively and/or qualitatively analyzing a sample using a surface plasmon resonance sensor chip as defined in claim 43, comprising the steps of:
assigning a plurality of different samples to said plural flow channels (280), respectively, and letting each of the samples flow through the respective flow channel (280) while irradiating the sensor surface with light at a predetermined incident angle;
receiving the light reflected from the sensor surface and measuring the intensity of the light reflected by each said diffraction grating surface (251-254);
determining the variation between the measured intensity of the reflected light due to each said diffraction grating surface (251-254) and the intensity of the light reflected when any sample does not flow through each said flow channel (280);
selecting, for each said flow channels (280), a diffraction grating surface (251-254) whose determined variation of the reflected-light intensity is within a predetermined allowable range for determination, and quantitatively and/or qualitatively analyzing each sample flowing through the respective flow channel (280), based on the variation of the reflected-light intensity of the selected diffraction grating surface (251-254) for each said flow channels (280).

54. A method of quantitatively and/or qualitatively analyzing a sample using a surface plasmon resonance sensor chip as defined in claim 44, comprising the steps of:
assigning a plurality of different samples to said plural flow channels (280), respectively, and letting each of the samples flow through the respective flow channel (280) while irradiating the sensor surface with light at a predetermined incident angle;
receiving the light reflected from the sensor surface and measuring the intensity of the light reflected by each said diffraction grating surface (251-254);
determining, for each of the reaction area and the non-reaction area, the variation between the measured intensity of the reflected light due to each said diffraction grating surface (251-254) and the intensity of the light reflected when any sample does not flow through each said flow channel (280);
selecting, for each of the flow channels (280) and for each of the reaction area and the non-reaction area, a diffraction grating surface (251-254) whose determined variation of the reflected-light intensity is within a predetermined allowable range for determination, and quantitatively and/or qualitatively analyzing each sample flowing through the respective flow channel (280), based on the variation of the reflected-light intensity of the selected reaction area and the variation of the reflected-light intensity of the selected non-reaction area.

55. A method as defined in one of claims 45-54, wherein it further comprises the step of separating the sample by physical and/or chemical action prior to introducing the sample to the surface plasmon resonance sensor chip.

56. A method as defined in claim 55, wherein in said step of separating, the sample is separated by a separation technique using at least one of liquid chromatography, HPLC (high performance liquid chromatography), capillary electrophoresis, microchip electrophoresis, flow injection, and microchannel.

57. A method as defined in one of claims 45-56, wherein
the target species is a light-emitting substance,
said method further comprises the step of detecting the light emitted from the light-emitting substance that is bound to the binding substance prior to light-irradiating the sensor surface or, alternatively, after light-irradiating the sensor surface and receiving the reflected light, and
in said step of quantitatively and/or qualitatively analyzing, the sample is analyzed with consideration given to the detection result of the light emission.

58. An apparatus for quantitatively and/or qualitatively analyzing a sample using a surface plasmon resonance sensor chip as defined in claim 39 or 40, comprising:
holding means (211) for holding the surface plasmon resonance sensor chip with the sensor surface (201a) being in contact with the sample;
light irradiating means (212) for irradiating the sensor surface (201a) with light from a predetermined direction in a state where the surface plasmon resonance sensor chip is held by said holding means (211);
light receiving means (213) for receiving the light reflected from the sensor surface;
measuring means (213) for measuring the intensity of the light reflected by each said diffraction grating surface (251-254) and received by said light receiving means (213); and
analyzing means (214) for identifying a groove pitch at which a resonance phenomenon of the evanescent wave and the surface plasmon wave occurs, based on the intensity, measured by said measuring means (213), of the reflected light due to each said diffraction grating surface (251-254), and for quantitatively and/or qualitatively analyzing the sample based on the identified groove pitch.

59. An apparatus for quantitatively and/or qualitatively analyzing a sample using a surface plasmon resonance sensor chip as define in claim 41, comprising:
holding means (211) for holding the surface plasmon resonance sensor chip with the sensor surface being in contact with the sample;
light irradiating means (212) for irradiating the sensor surface with light from a predetermined direction in a state where the surface plasmon resonance sensor chip is held by said holding means (211);
light receiving means (213) for receiving the light reflected from the sensor surface;
measuring means (213) for measuring the intensity of the light reflected by each said diffraction grating surface (251-254) and received by said light receiving means (213); and
correcting means (214) for correcting the intensity of the reflected light due to each said diffraction grating surface (251-254) with consideration given to the intensity of the reflected light due to the respective non-diffraction surface (251x-254x); and
analyzing means (214) for identifying a groove pitch at which a resonance phenomenon of the evanescent wave and the surface plasmon wave occurs, based on the intensity, corrected by said correcting means (214), of the reflected light due to each said diffraction grating surface (251-254), and for quantitatively and/or qualitatively analyzing the sample based on the identified groove pitch.

60. An apparatus for quantitatively and/or qualitatively analyzing a sample using a surface plasmon resonance sensor chip as defined in claim 42, comprising:
holding means (211) for holding the surface plasmon resonance sensor chip with the sensor surface being in contact with the sample;
light irradiating means (212) for irradiating the sensor surface with light from a predetermined direction in a state where the surface plasmon resonance sensor chip is held by said holding means (211);
light receiving means (213) for receiving the light reflected from the sensor surface;
measuring means (213) for measuring the intensity of the light reflected by each said diffraction grating surface (251-254) and received by said light receiving means (213); and
analyzing means (214) for identifying, for each of the reaction area and the non-reaction area, a groove pitch at which a resonance phenomenon of the evanescent wave and the surface plasmon wave occurs, based on the intensity, measured by said measuring means (213), of the reflected light due to each said diffraction grating surface (251-254), and for quantitatively and/or qualitatively analyzing the sample based on the groove pitch identified for each of the reaction area and the non-reaction area.

61. An apparatus for quantitatively and/or qualitatively analyzing a sample using a surface plasmon resonance sensor chip as defined in claim 43, comprising:
holding means (211) for holding the surface plasmon resonance sensor chip;
sample introducing means (282) for assigning a plurality of different samples to said plural flow channels (280), respectively, and for introducing each of the plural samples into the respective flow channel (280) in a state where the surface plasmon resonance sensor chip is held by said holding means (211);
light irradiating means (212) for irradiating the sensor surface with light from a predetermined direction in a state where each sample is introduced into the respective flow channel (282) by said sample introducing means (282);
light receiving means (213) for receiving the light reflected from the sensor surface;
measuring means (213) for measuring the intensity of the light reflected by each said diffraction grating surface (251-254) and received by said light receiving means (213);
analyzing means for identifying, for each said flow channel (280), a groove pitch at which a resonance phenomenon of the evanescent wave and the surface plasmon wave occurs, based on the intensity, measured by said measuring means (213), of the reflected light due to each said diffraction grating surface (251-254), and for quantitatively and/or qualitatively analyzing each sample flowing through the respective flow channel (280), based on the groove pitch identified for each said flow channel (280).

62. An apparatus for quantitatively and/or qualitatively analyzing a sample using a surface plasmon resonance sensor chip as defined in claim 44, comprising:
holding means (211) for holding the surface plasmon resonance sensor chip;
sample introducing means (282) for assigning a plurality of different samples to said plural flow channels (280), respectively, and for introducing each sample into the respective flow channel (280) in a state where the surface plasmon resonance sensor chip is held by said holding means (211);
light irradiating means (212) for irradiating the sensor surface with light from a predetermined direction in a state where each sample is introduced into the respective flow channel (280) by said sample introducing means (282);
light receiving means (213) for receiving the light reflected from the sensor surface;
measuring means (213) for measuring the intensity of the light reflected by each said diffraction grating surface (251-254) and received by said light receiving means (213);
analyzing means for identifying, for each said flow channel (280) and for each of the reaction area and the non-reaction area, a groove pitch at which a resonance phenomenon of the evanescent wave and the surface plasmon wave occurs, based on the intensity, measured by said measuring means (213), of the reflected light due to each said diffraction grating surface (251-254), and for quantitatively and/or qualitatively analyzing each sample flowing through the respective flow channel (280), based on the groove pitches of the reaction area and the non-reaction area identified for each said flow channel (280).

63. An apparatus for quantitatively and/or qualitatively analyzing a sample using a surface plasmon resonance sensor chip as defined in claim 39 or 40, comprising:
holding means (211) for holding the surface plasmon resonance sensor chip with the sensor surface (201a) being in contact with the sample;
light irradiating means (212) for irradiating the sensor surface with light from a predetermined direction in a state where the surface plasmon resonance sensor chip is held by said holding means (211) ;
light receiving means (213) for receiving the light reflected from the sensor surface;
measuring means (213) for measuring the intensity of the light reflected by each said diffraction grating surface (251-254) and received by said light receiving means (213);
determining means (214) for determining the variation between the intensity, measured by said measuring means (213), of the reflected light due to each said diffraction grating surface (251-254) and the intensity of the light reflected when any sample is not in contact with the sensor surface (201a); and
analyzing means (214) for selecting a diffraction grating surface (251-254) whose variation, determined by said determining means (214), of the reflected-light intensity is within a predetermined allowable range for determination, and for quantitatively and/or qualitatively analyzing the sample based on the variation of the reflected-light intensity of the selected diffraction grating surface (251-254).

64. An apparatus for quantitatively and/or qualitatively analyzing a sample using a surface plasmon resonance sensor chip as defined in claim 41, comprising:
holding means (211) for holding the surface plasmon resonance sensor chip with the sensor surface being in contact with the sample;
light irradiating means (212) for irradiating the sensor surface with light from a predetermined direction in a state where the surface plasmon resonance sensor chip is held by said holding means (211);
light receiving means (213) for receiving the light reflected from the sensor surface;
measuring means (213) for measuring the intensity of the light reflected by each said diffraction grating surface (251-254) and received by said light receiving means (213);
correcting means (214) for correcting the intensity of the reflected light due to each said diffraction grating surface (251-254) with consideration given to the intensity of the reflected light due to the respective non-diffraction surface (251x-254x);
determining means (214) for determining the variation between the intensity, corrected by said correcting means (214), of the reflected light due to each said diffraction grating surface (251-254) and the intensity of the light reflected when any sample is not in contact with the sensor surface;
analyzing means (214) for selecting a diffraction grating surface (251-254) whose variation, determined by said determining means (214), of the reflected-light intensity is within a predetermined allowable range for determination, and for quantitatively and/or qualitatively analyzing the sample based on the variation of the reflected-light intensity of the selected diffraction grating surface (251-254).

65. An apparatus for quantitatively and/or qualitatively analyzing a sample using a surface plasmon resonance sensor chip as defined in claim 42, comprising:
holding means (211) for holding the surface plasmon resonance sensor chip with the sensor surface being in contact with the sample;
light irradiating means (212) for irradiating the sensor surface with light from a predetermined direction in a state where the surface plasmon resonance sensor chip is held by said holding means (211);
light receiving means (213) for receiving the light reflected from the sensor surface;
measuring means (213) for measuring the intensity of the light reflected by each said diffraction grating surface (251-254) and received by said light receiving means (213);
determining means (214) for determining, for each of the reaction area and the non-reaction area, the variation between the intensity, measured by said measuring means (213), of the reflected light due to each said diffraction grating surface (251-254) and the intensity of the light reflected when any sample is not in contact with the sensor surface; and
analyzing means (214) for selecting, for each of the reaction area and the non-reaction area, a diffraction grating surface (251-254) whose determined variation of the reflected-light intensity is within a predetermined allowable range for determination, and for quantitatively and/or qualitatively analyzing the sample based on the variation of the reflected-light intensity of the selected reaction area and the variation of the reflected-light intensity of the selected non-reaction area.

66. An apparatus for quantitatively and/or qualitatively analyzing a sample using a surface plasmon resonance sensor chip as defined in claim 43, comprising:
holding means (211) for holding the surface plasmon resonance sensor chip;
sample introducing means (282) for assigning a plurality of different samples to said plural flow channels (280), respectively, and for introducing each of the plural samples into the respective flow channel (280) in a state where the surface plasmon resonance sensor chip is held by said holding means (211);
light irradiating means (212) for irradiating the sensor surface with light from a predetermined direction in a state where each sample is introduced into the respective flow channel (280) by said sample introducing means (282);
light receiving means (213) for receiving the light reflected from the sensor surface;
measuring means (213) for measuring the intensity of the light reflected by each said diffraction grating surface (251-254) and received by said light receiving means (213);
determining means (214) for determining the variation between the intensity, measured by said measuring means (213), of the reflected light due to each said diffraction grating surface (251-254) and the intensity of the light reflected when any sample does not flow through each said flow channel (280); and
analyzing means for selecting, for each said flow channel (280), a diffraction grating surface (251-254) whose variation, determined by said determining means (214), of the reflected-light intensity is within a predetermined allowable range for determination, and for quantitatively and/or qualitatively analyzing each sample flowing through the respective flow channel (280) based on the variation of the reflected-light intensity of the diffraction grating surface (251-254) selected for each said flow channel (280).

67. An apparatus for quantitatively and/or qualitatively analyzing a sample using a surface plasmon resonance sensor chip as defined in claim 44, comprising:
holding means (211) for holding the surface plasmon resonance sensor chip;
sample introducing means (282) for assigning a plurality of different samples to said plural flow channels (280), respectively, and for introducing each of the plural samples into the respective flow channel (280) in a state where the surface plasmon resonance sensor chip is held by said holding means (211);
light irradiating means (212) for irradiating the sensor surface with light from a predetermined direction in a state where each sample is introduced into the respective flow channel (280) by said sample introducing means (282);
light receiving means (213) for receiving the light reflected from the sensor surface;
measuring means (213) for measuring the intensity of the light reflected by each said diffraction grating surface (251-254) and received by said light receiving means (213);
determining means (214) for determining, for each of the reaction area and the non-reaction area, the variation between the intensity, measured by said measuring means (213), of the reflected light due to each said diffraction grating surface (251-254) and the intensity of the light reflected when any sample does not flow through each said flow channel (213); and
analyzing means (214) for selecting, for each said flow channel (280) and for each of the reaction area and the non-reaction area, a diffraction grating surface (251-254) whose variation, determined by said determining means (214), of the reflected-light intensity is within a predetermined allowable range for determination, and for quantitatively and/or qualitatively analyzing each sample flowing through the respective flow channel (280), based on the variation of the reflected-light intensity of the selected reaction area and the variation of the reflected-light intensity of the selected non-reaction area for each said flow channel (280).

68. An apparatus as defined in one of claims 58-67, wherein it further comprises sample separating means (292) for separating the sample by physical and/or chemical action prior to introducing the sample to the surface plasmon resonance sensor chip.

69. An apparatus as defined in claim 68, wherein said sample separating means (292) is operable to separate the sample by a separation technique using at least one of liquid chromatography, HPLC (high performance liquid chromatography), capillary electrophoresis, microchip electrophoresis, flow injection, and microchannel.

70. An apparatus as defined in one of claims 58-69, wherein
the target species is a light-emitting substance,
said light receiving means (213) is operable to detect the light emitted from the light-emitting substance that is bound to the binding substance, and
said analyzing means (214) is operable to quantitatively and/or qualitatively analyze the sample with consideration given to the detection result of the light emission by said light receiving means (213).

71. A surface plasmon resonance sensor chip comprising:
a metal layer (23) along whose surface a surface plasmon wave can be induced by light irradiation; and
a diffraction grating curved surface (25) disposed in the vicinity of said metal layer (23), said diffraction grating curved surface (25) having a diffraction grating with a uniform groove orientation and a uniform groove pitch so as to generate an evanescent wave upon light irradiation;
wherein said diffraction grating curved surface (25) has a curved surface form in a convex shape whose light-irradiated side bulges out, and is disposed so as to be perpendicular to a specific plane (S1), which is perpendicular to a predetermined reference plane (S0), and the diffraction grating is formed in such a manner that the groove orientation is perpendicular to the specific plane (S1).

72. A surface plasmon resonance sensor chip comprising:
a metal layer (233) and a diffraction grating (235) formed in the vicinity of a sensor surface, which comes in contact with a sample; and
a resonance area (238a-238d), formed on the sensor surface (231a), for causing a resonance phenomenon of a surface plasmon wave, which is induced along the surface of said metal layer (233), and an evanescent wave, which is generated by the action of the diffraction grating, upon light irradiation;
wherein said resonance area (238a-238d) has a plurality of continuous areas (238a-238d) discretely formed on the sensor surface (231a), and at least one continuous area (238a-238d) among the plural continuous areas (238a-238d) has a diffraction grating whose at least one of the groove pitch and the groove orientation is different from those of the remaining continuous areas (238a-238d).

73. A surface plasmon resonance sensor chip comprising:
a metal layer (233) and a diffraction grating (235) formed in the vicinity of a sensor surface, which comes in contact with a sample; and
a resonance area , formed on the sensor surface, for causing a resonance phenomenon of a surface plasmon wave, which is induced along the surface of said metal layer (233), and an evanescent wave, which is generated by the action of the diffraction grating, upon light irradiation;
wherein said resonance area is formed continuously on the sensor surface, and the groove orientations of the diffraction grating (225) are uniform while the groove pitches of the diffraction grating (225) have a continuous or discontinuous distribution.
